(19) Europäisches Patentamt
European Patent Office
Office européen des brevets

(11) **EP 2 426 223 B1**

(12) **EUROPEAN PATENT SPECIFICATION**

(45) Date of publication and mention
of the grant of the patent:
**23.11.2016 Bulletin 2016/47**

(51) Int Cl.:
*C21B 5/06* (2006.01)     *C21B 5/00* (2006.01)
*F23C 3/00* (2006.01)

(21) Application number: **10769861.5**

(22) Date of filing: **30.04.2010**

(86) International application number:
**PCT/JP2010/057984**

(87) International publication number:
**WO 2010/126171 (04.11.2010 Gazette 2010/44)**

(54) **BLAST FURNACE OPERATION METHOD AND BLAST FURNACE EQUIPMENT**

BETRIEBSVERFAHREN FÜR EINEN VERBRENNUNGSOFEN UND AUSRÜSTUNG FÜR EINEN VERBRENNUNGSOFEN

PROCÉDÉ D'UTILISATION D'UN HAUT-FOURNEAU ET ÉQUIPEMENT DE HAUT-FOURNEAU

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: 30.04.2009  JP 2009110433
22.10.2009  JP 2009243132
22.10.2009  JP 2009243150
29.12.2009  JP 2009299103
29.12.2009  JP 2009299098
29.12.2009  JP 2009299101
27.04.2010  JP 2010102720

(43) Date of publication of application:
**07.03.2012 Bulletin 2012/10**

(73) Proprietor: **JFE Steel Corporation
Tokyo 100-0011 (JP)**

(72) Inventors:
• **ASANUMA, Minoru**
**Tokyo 100-0011 (JP)**
• **NOUCHI, Taihei**
**Tokyo 100-0011 (JP)**
• **FUJIBAYASHI, Akio**
**Tokyo 100-0011 (JP)**
• **MURAO, Akinori**
**Tokyo 100-0011 (JP)**

(74) Representative: **Hoffmann Eitle
Patent- und Rechtsanwälte PartmbB
Arabellastraße 30
81925 München (DE)**

(56) References cited:
GB-A- 1 216 779      JP-A- 60 033 305
JP-A- 62 120 413     JP-A- 2004 076 639
JP-A- 2007 078 239   JP-A- 2007 271 188
JP-A- 2008 214 735   US-A- 3 764 299
US-A- 5 234 490

**Description**

**Field of the invention**

The present invention relates to a blast furnace operating method and a blast furnace plant to perform a stable low-reducing agent ratio operation and a low-calorific value gas combustion method.

**Description of the Related Arts**

In recent years, global warming due to an increase in carbon dioxide output has become a problem. In the steel industry, suppression of carbon dioxide emissions is an important issue. Under these circumstances, regarding a recent blast furnace operation, a low-reducing agent ratio (low RAR) operation has been promoted intensely. The RAR (Reducing agent ratio) refers to a total amount of injection of fuel and coke charged from a furnace top per ton of pig iron.

However, if the RAR is reduced, the amount of blowing is reduced in theory. As a result, in the upper portion of the shaft, the temperature increase of a charged material is delayed, and reduction is not achieved favorably. In addition, adhesion of a zinc compound and the like to a wall is facilitated so as to cause bad furnace conditions, e.g., fluctuations in wind pressure and irregular burden descent. Furthermore, in the case where the top gas temperature is decreased to lower than 100°C, a problem occurs in that moisture in an exhaust gas is condensed in a pipe.

In a normal blast furnace operation, in order to prevent the above-described various bad furnace conditions, in particular, a poor increase in temperature of charged material in the upper portion of the furnace, the following measures are taken usually.

(a) The oxygen enrichment is reduced and the amount of gas is increased (the heat flow ratio is reduced and the gas temperature is raised).
(b) The amount of injection of fuel, e.g., pulverized coal, is increased (the heat flow ratio is reduced and the gas temperature is raised).
(c) The reduction efficiency (shaft efficiency) is reduced and the reducing agent ratio is increased.

However, the measure of the above-described item (a) is not desirable because of leading to a reduction in the amount of production. The above-described item (b) depends on the allowance of the injection capacity. However, regarding an ironworks which is operated in the vicinity of the limit of the capacity, an increment thereof is restricted. Furthermore, in the case where the amount of injection of fuel is increased, the amount of Bosh gas is increased, so as to reduce the amount of production. Therefore, it is necessary that oxygen enrichment is performed at the same time. However, the amount of available oxygen is limited by the supply capacity. The above-described item (c) is directed to an operation in which the efficiency is reduced intentionally and, therefore, retrogresses against the essential purpose of reduction in carbon dioxide.

As described above, in the case where a low RAR operation is performed in a normal blast furnace, it is difficult to avoid various bad furnace conditions, in particular, a poor increase in temperature in the upper portion of the furnace, by changing the operation condition within a common operation range.

Meanwhile, in the blast furnace operation, a reducing gas, e.g., CO, generated through combustion of coke at a blast furnace tuyere portion is used for reduction of iron ores and an increase in efficiency of utilization thereof leads to a reduction of RAR.

Essentially, the blast furnace gas is a low-calorific value gas. If the RAR is reduced as described above, the calorific value of the generated blast furnace gas is further reduced. Moreover, in an iron and steel production process, as part of exhaust heat recovery, sensible heat of red hot coke discharged from a coke battery is recovered with a coke dry quencher (CDQ). The CDQ cools coke with an inert gas, and a gas generated from the coke during recovery is mixed, so that a gas having a low-calorific value of about 300 kcal/Nm$^3$ is recovered.

Gas burners industrially used are roughly divided into diffusion combustion system (external mixing) burners and premix combustion system (internal mixing) burners on the basis of the mixing system of a fuel gas and a combustion-supporting gas (oxygen-containing gas). However, every burner has a structure in which flame is formed forward of a burner end. The diffusion combustion system (external mixing) burners have been used widely, wherein combustion is performed by mixing the fuel gas and the combustion-supporting gas at the burner end and a high-temperature flame can be obtained. Meanwhile, the premix combustion system burners have advantages that, for example, a relatively short flame can be formed. However, regarding these burners in the related art, it is necessary to ensure wide space for combustion forward of the burner because a flame is formed forward of the burner end and, therefore, there is a problem in that a combustion plant becomes large inevitably.

Examples of fuel gases used for burners in the related art include a coke battery gas, a blast furnace gas, and an MIX gas prepared by mixing a blast furnace gas and a converter gas, which are by-products of the iron and steel production process, besides LNG and a propane gas. In the case where the low-calorific value gas, e.g., the blast furnace gas, among them is used alone, a flame may go out because the stability of flame is not sufficient due to changes in air ratio and fluctuation in gas calorific value. Consequently, for the purpose of maintaining a flame and maintaining combustion, pilot burners are disposed separately, or a method in which the fuel gas and the combustion-supporting gas are preheated in advance is adopted. Furthermore, use of the low-calorific value gas causes problems easily in that, for example, the amount of generation of toxic substances, e.g., $NO_x$, increases, unburned hydrocarbons and the like are discharged, and smoke is generated depending on the combustion condition and, therefore, may become one of environmental pollution sources.

Regarding PATENT DOCUMENT 1, in the case where a low-reducing agent ratio operation is performed with respect to a normal blast furnace in which a tuyere hot blast having an oxygen enrichment of 10 percent by volume or less is injected, the temperature raising of a charged material is delayed in the upper portion of the shaft. In order to solve this issue, a gas in an amount 10 percent by mass or less of the amount of furnace top gas is injected as a shaft gas from an upper portion of the shaft into the furnace when the top gas temperature becomes 110°C or lower. Moreover, PATENT DOCUMENT 1 discloses that a part of a blast furnace gas, which has been discharged from the furnace top portion and, thereafter, which has passed through a gas cleaning apparatus, is taken out and is heated in a combustion furnace, so as to be used as the above-described shaft gas.

PATENT DOCUMENT 3 describes a method in which for the purpose of combustion of a low-calorific value gas, a tubular flame burner is used and combustion is performed by introducing a fuel gas and an oxygen-containing gas (combustion-supporting gas) swirlingly. This method according to PATENT DOCUMENT 3 is executed by using an oxygen-containing gas having an oxygen concentration of 60 percent by volume or more as a combustion-supporting gas while the ratio of the amount of supply oxygen to the theoretical amount of oxygen is specified to be within the range of 1.0 to 1.4.

[Prior Art Documents]

[Patent Document]

[PATENT DOCUMENT 1] Japanese Unexamined Patent Application Publication No. 2008-214735
[PATENT DOCUMENT 2] Japanese Unexamined Patent Application Publication No. 62-27509
[PATENT DOCUMENT 3] Japanese Unexamined Patent Application Publication No. 2007-271188

US 3 764 299 discloses a method of operating a blast-furnace containing a plurality of peripherally spaced blast tuyeres, and a plurality of peripherally spaced auxiliary tuyeres positioned at a level above the blast tuyeres and substantially above the zone in which the burden melts down.

US 5234 490 discloses a method of operating a blast furnace, in which an oxygen-enriched hydrogenaceous fuel is introduced into the furnace bosh and the heated dried top gas is introduced into the lower half of the furnace stack above the furnace bosh at a point above which the coke in the furnace is not reactive.

JP 2008-214735 discloses a method for operating a blast furnace by performing operation having low reducing material ratio from tuyeres.

GB 1 216 779 discloses a method for the production of iron from iron ore which method comprises introducing iron ore, catbonaceous fuel and a flux into a furnace and heating under a certain pressure, introducing into the furnace a blast of stream and oxygen, collecting the effluent gases consisting substantially of hydrogen, carbon monoxide and carbon dioxide, removing the carbon dioxide in a scrubber and reintroducing the carbon monoxide and hydrogen under pressure into the furnace.

JP 62 120 413 Discloses A blast furnace according to the preamble of claim 25.

[Non Patent Document]

[Non Patent Document 1] Ohno et al. "Tetsu-to-Hagane", The Iron and Steel Institute of Japan, 75 (1989), p. 1278

[Summary of Invention]

[Technical Problem]

In the method according to PATENT DOCUMENT 1, the blast furnace gas is injected into a furnace after being heated (preheated) in the combustion furnace. It is necessary that the injection gas is preheated sufficiently and has a pressure higher than the pressure in the furnace at the position of injection.

However, in contrast to a so-called oxygen blast furnace process in which pure oxygen is blown (refer to PATENT DOCUMENT 2 and Non Patent Document 1, for example), a blast furnace gas generated in the normal blast furnace process has a low calorific value. Therefore, it may be difficult to raise the temperature to a desired temperature in the combustion furnace. For example, a measure, e.g., use of a high-calorific value auxiliary fuel, may become necessary. Furthermore, the blast furnace gas has a low calorific value, variations in combustion temperature occur easily in a common combustion furnace and, thereby, there is a problem in that oxygen remains in the combustion gas, so as to reoxidize iron oxides ($Fe_3O_4$, FeO) undergoing reduction when the combustion gas is injected into the furnace. Moreover, it is also difficult to inject the preheating gas stably into the blast furnace having a predetermined pressure in the furnace.

The above-described method according to PATENT DOCUMENT 3 has the following problems.

(1) An oxygen-containing gas having an oxygen concentration of 60 percent by volume or more is required as the combustion-supporting gas. However, an oxygen separation process, e.g., low-temperature separation or membrane separation, is necessary separately to obtain such high-concentration oxygen.
(2) In the case where combustion of the low-calorific value gas is performed with high-concentration oxygen, the temperature is raised locally, and thermal $NO_x$, which causes an environmental problem, may be generated. Meanwhile, in the case where S is contained in the fuel gas, generation of $SO_x$ is facilitated.
(3) In the case where high-concentration oxygen is introduced by a pipe or the like, it is necessary to perform a debinding treatment or the like and construct pipes and valves with stainless steel pipes and the like. Consequently, expensive materials are required and an equipment cost increases.

A first object of the present invention is to provide a blast furnace operating method and a blast furnace plant, wherein bad furnace conditions, in particular, a poor increase in temperature of a charged material in the upper portion of the furnace can be prevented during a low RAR operation and, in addition, even in the case where a low-calorific value gas, e.g., a blast furnace gas, is used as an injection gas, this can be converted to a preheating gas through stable combustion and the preheating gas can be injected stably into a blast furnace having a predetermined pressure in the furnace.

A second object of the present invention is to provide a combustion method which solves problems in the technology of the related art in the case where combustion of a low-calorific value gas is performed with a combustion burner and in which stable combustion of the low-calorific value gas can be performed with a combustion burner without using a combustion-supporting gas having a high oxygen concentration.

## Solution to Problem

In order to solve the above-described issues in the related art, the present inventors performed studies with a particular emphasis on generation and injection devices of a preheating gas. As a result, it was found that even in the case where a low-calorific value gas, e.g., a blast furnace gas, was used, this was able to be converted to a preheating gas through stable combustion and the preheating gas was able to be injected stably into a blast furnace having a predetermined pressure in the furnace by disposing a gas combustion and injection device taking advantage of a tubular flame burner system, which had been used for furnaces and combustion apparatuses previously, in a shaft portion and injecting a combustion gas of the gas combustion and injection device as a preheating gas into the furnace.

The present invention has been made on the basis of the above-described findings and describes :

a blast furnace operating method according to claim 1 and
a blast furnace plant according to claim 25.

Further developments of the invention can be taken from the dependent claims.

## Advantageous Effects of Invention

According to the present invention, regarding the operation of a normal blast furnace, a poor increase in temperature of a charged material in the upper portion of the furnace can be prevented during a low RAR operation and, in addition, the low RAR operation can be performed stably because condensation of water, adhesion of zinc compounds to a wall, and the like due to a decrease in top gas temperature can be suppressed effectively. Furthermore, a gas injection portion is formed from a tubular flame burner type gas combustion and injection device and, thereby, even in the case where a low-calorific value gas, e.g., a blast furnace gas, is used as an injection gas, this can be converted to a preheating gas through stable combustion and the preheating gas can be injected stably into a blast furnace having a predetermined pressure in the furnace.

Moreover, combustion of low-calorific value gases, e.g., a blast furnace gas and a gas recovered from CDQ, can be performed stably on the basis of the low-calorific value gas combustion method by using a combustion burner, according to the present invention. Consequently, the low-calorific value gas can be used as a fuel usefully.

**Brief Description of Drawings**

Fig. 1 is an explanatory diagram schematically showing an embodiment according to the present invention.
Fig. 2 is a partial cutaway plan view showing an embodiment of a gas combustion and injection device a constituting a gas injection portion A in the embodiment shown in Fig. 1.
Fig. 3 is a sectional view of the section taken along a line III-III shown in Fig. 2.
Fig. 4 is a partial cutaway plan view showing another embodiment of the gas combustion and injection device a constituting the gas injection portion A in the embodiment shown in Fig. 1.
Fig. 5 is a bottom view partly showing the gas combustion and injection device a shown in Fig. 4.
Fig. 6 is a sectional view of the section taken along a line VI-VI shown in Fig. 4.
Fig. 7 is a sectional view of the section taken along a line VII-VII shown in Fig. 4.
Fig. 8 is an explanatory diagram showing a test apparatus used in a combustion test in an example.
Fig. 9 is a graph showing the relationship between the pressure in a combustion chamber and the effective heat utilization factor in a combustion test performed in an example.
Fig. 10 is an explanatory diagram schematically showing a section in a diameter direction of the inside of a combustion chamber in a gas combustion and injection device a used in the present invention.
Fig. 11 is an explanatory diagram schematically showing a section in a diameter direction of the inside of a combustion chamber in a gas combustion and injection device a used in the present invention.

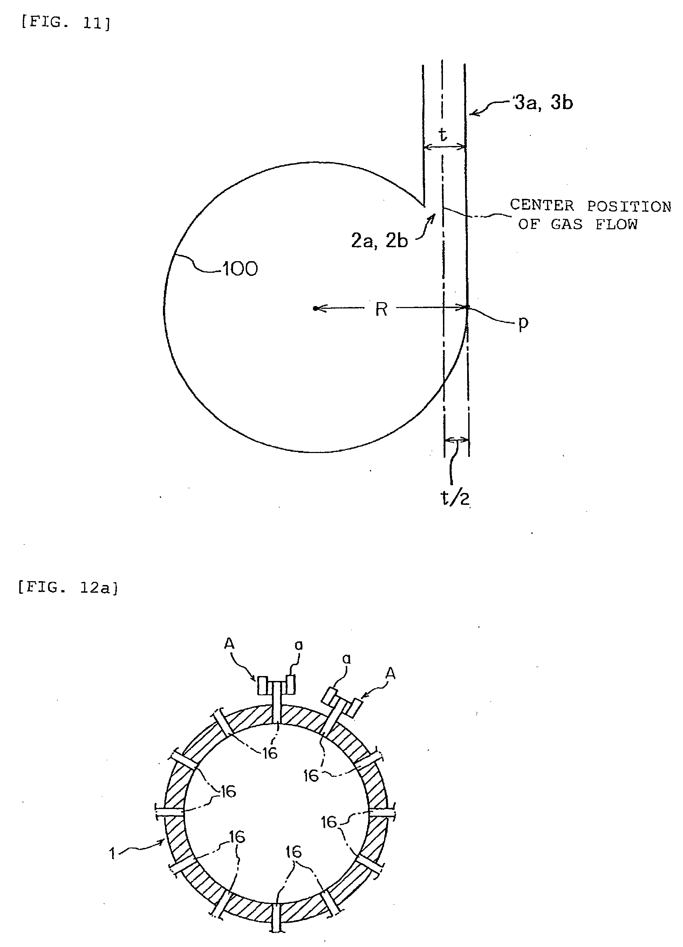

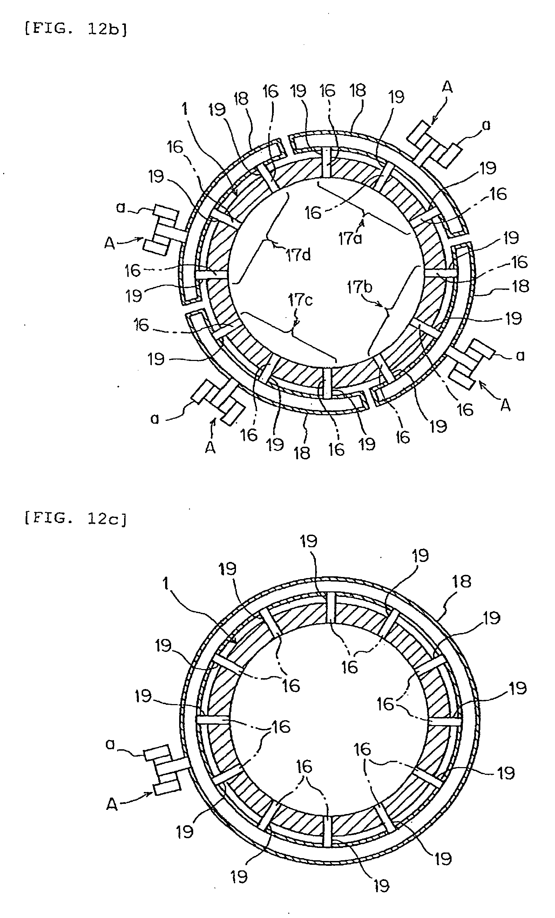

Fig. 12a is an explanatory diagram schematically showing an example of installation form of a gas injection portion A according to the present invention, where the furnace body is in the state of being cut horizontally. Fig. 12b is an explanatory diagram schematically showing another example of installation form of the gas injection portion A according to the present invention, where the furnace body is in the state of being cut horizontally. Fig. 12c is an explanatory diagram schematically showing another example of installation form of the gas injection portion A according to the present invention, where the furnace body is in the state of being cut horizontally.
Fig. 13 is a partial cutaway plan view showing an embodiment of a combustion burner used in the present invention.
Fig. 14 is a sectional view of the section taken along a line II-II shown in Fig. 13.
Fig. 15 is a diagram showing another embodiment of the combustion burner used in the present invention and is a sectional view of the section taken along the same line as that for Fig. 13.
Fig. 16 is a partial cutaway plan view showing another embodiment of the combustion burner used in the present invention.
Fig. 17 is a bottom view partly showing the combustion burner shown in Fig. 16.
Fig. 18 is a sectional view of the section taken along a line VI-VI shown in Fig. 16.
Fig. 19 is a sectional view of the section taken along a line VII-VII shown in Fig. 16.
Fig. 20 is an explanatory diagram schematically showing an embodiment of a blast furnace operating method according to the present invention.
Fig. 21 is an explanatory diagram schematically showing a section in a diameter direction of the inside of a combustion chamber in a combustion burner used in the present invention.
Fig. 22 is an explanatory diagram schematically showing a section in a diameter direction of the inside of a combustion chamber in a combustion burner used in the present invention.
Fig. 23 is a partial cutaway plan view showing an embodiment of a combustion burner used in the present invention.
Fig. 24 is a sectional view of the section taken along a line II-II shown in Fig. 23.
Fig. 25 is a diagram showing another embodiment of the combustion burner used in the present invention and is a sectional view of the section taken along the same line as that for Fig. 24.
Fig. 26 is a partial cutaway plan view showing another embodiment of the combustion burner used in the present invention.
Fig. 27 is a bottom view partly showing the combustion burner shown in Fig. 26.
Fig. 28 is a sectional view of the section taken along a line VI-VI shown in Fig. 26.
Fig. 29 is a sectional view of the section taken along a line VII-VII shown in Fig. 26.
Fig. 30 is an explanatory diagram schematically showing an embodiment of a blast furnace operating method according to the present invention.
Fig. 31 is an explanatory diagram schematically showing a section in a diameter direction of the inside of a combustion chamber in a combustion burner used in the present invention.

Fig. 32 is an explanatory diagram schematically showing a section in a diameter direction of the inside of a combustion chamber in a combustion burner used in the present invention.

First embodiment of the invention

The present invention relates to a blast furnace operation in which air or oxygen-enriched air is blown from a tuyere, that is, a normal blast furnace operation. In the case where an oxygen-enriched air is blown from a tuyere, an operation is performed usually at an oxygen enrichment of 20 percent by volume or less, and preferably 10 percent by volume or less. In this regard, as the oxygen enrichment increases, the amount of gas passing through the furnace decreases and the amount of injection gas required for raising the temperature of the upper portion of the shaft increases significantly. From this point of view as well, it is preferable that the operation is performed at the above-described oxygen enrichment.

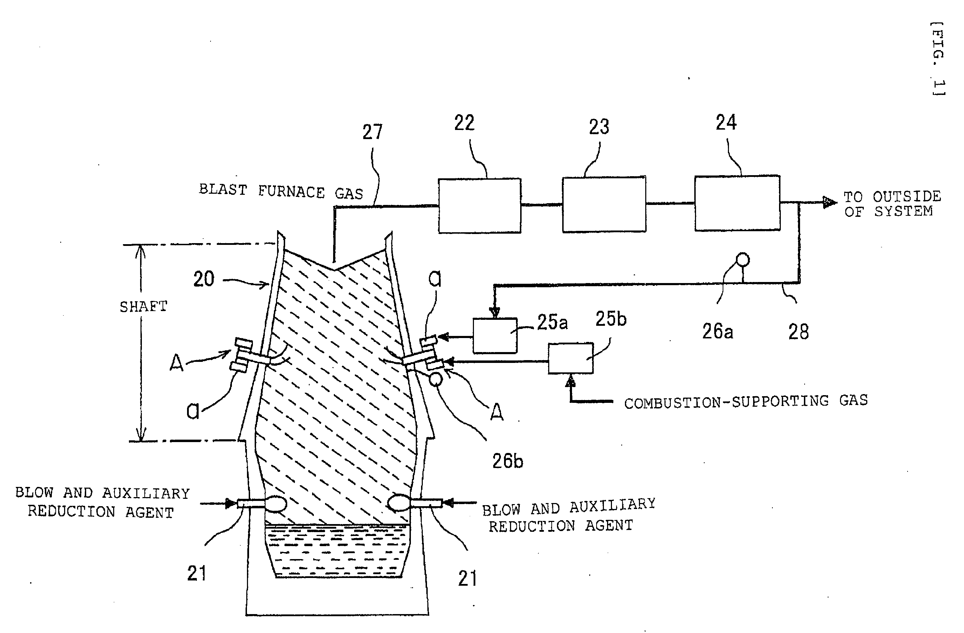

Fig. 1 is an explanatory diagram schematically showing an embodiment according to the present invention. In the drawing, reference numeral 20 denotes a blast furnace, and reference numeral 21 denotes a tuyere thereof. A hot gas and an auxiliary reduction agent (for example, pulverized coal or LNG) are injected into the furnace from this tuyere 21.

A blast furnace gas discharged from the furnace top portion of the blast furnace 20 (furnace top gas) is led to a furnace top gas power generation apparatus 24 after dust is removed with a dust catcher 22 serving as a gas cleaning apparatus and moisture is removed with a mist separator 23 serving as the gas cleaning apparatus. The pressure of the furnace top gas is recovered as electricity and, subsequently, the furnace top gas is led to the outside of the system.

In the present invention, a gas is injected into the blast furnace from a gas injection portion A disposed in a shaft portion (preferably, a shaft middle portion to upper portion). The main purpose of injection of the gas into the furnace in such a manner is to supplement a reduction in the amount of blowing due to a low RAR operation and, thereby, ensure the flow rate in the furnace upper portion. However, injection of a gas at a temperature which unnecessarily decreases the furnace top gas temperature goes against the aims of the invention. Therefore, a preheating gas is used as the injection gas.

In injection of the preheating gas from the gas injection portion A into the blast furnace as described above, according to the present invention, the gas injection portion A is formed from a gas combustion and injection device a, in which an opening to inject each of a fuel gas and a combustion-supporting gas or to inject a premixed gas of the fuel gas and the combustion-supporting gas in such a way that a swirling gas flow occurs in the combustion chamber is formed in an inside wall surface of a tubular combustion chamber having an open end and an end of the above-described combustion chamber is communicated with the inside of the blast furnace, and a combustion gas of the gas combustion and injection device a is injected as the preheating gas into the blast furnace.

The basic structure of such a gas combustion and injection device a has been known as a tubular flame burner, as described in, for example, Japanese Unexamined Patent Application Publication No. 11-281015. However, this tubular flame burner has been developed and used for furnaces and combustion apparatuses and, therefore, an application to an gas injection device of the blast furnace has not been studied at all. Furthermore, in recent years, the blast furnace operation has been performed under a highpressure condition and, therefore, it is necessary that the preheating gas is injected after the pressure is raised to a pressure higher than the pressure in the furnace at the position of the injection. However, the tubular flame burner is predicated on use in the state of normal pressure, and the use under the above-described pressure condition has not been studied at all. On the other hand, according to the present invention, it was found that a tubular flame burner type gas combustion and injection device a had a very excellent function as a device for preheating a low-calorific value gas, e.g., a blast furnace gas, through combustion and injecting this from a shaft portion of a blast furnace into the furnace.

Regarding the embodiment shown in Fig. 1, a part of a blast furnace gas, which is discharged from the furnace top portion and, thereafter, which is passed through the gas cleaning apparatus (the dust catcher 22 and the mist separator 23) and the furnace top gas power generation apparatus 24, is taken and introduced as a fuel gas into the gas combustion and injection device a constituting the gas injection portion A after being pressurized with a booster 25a. Regarding a flow path 27 of the blast furnace gas discharged from the furnace top portion of the blast furnace 20, a flow path 28 to supply a part of the blast furnace gas to the gas combustion and injection device a is branched from a flow path portion on the downstream side of the furnace top gas power generation apparatus 24.

Meanwhile, a combustion-supporting gas, which is oxygen or an oxygen-containing gas (air, oxygen-enriched air, or the like), is supplied to the gas combustion and injection device a. This combustion-supporting gas is also pressurized with a booster 25b and, thereafter, is introduced into the gas combustion and injection device a: In this regard, in the case where a premixed gas of a fuel gas and a combustion-supporting gas is used in the gas combustion and injection device a, the fuel gas and the combustion-supporting gas may be pressurized in advance with the boosters 25a and 25b separately, or the premixed gas may be pressurized with a single booster 25.

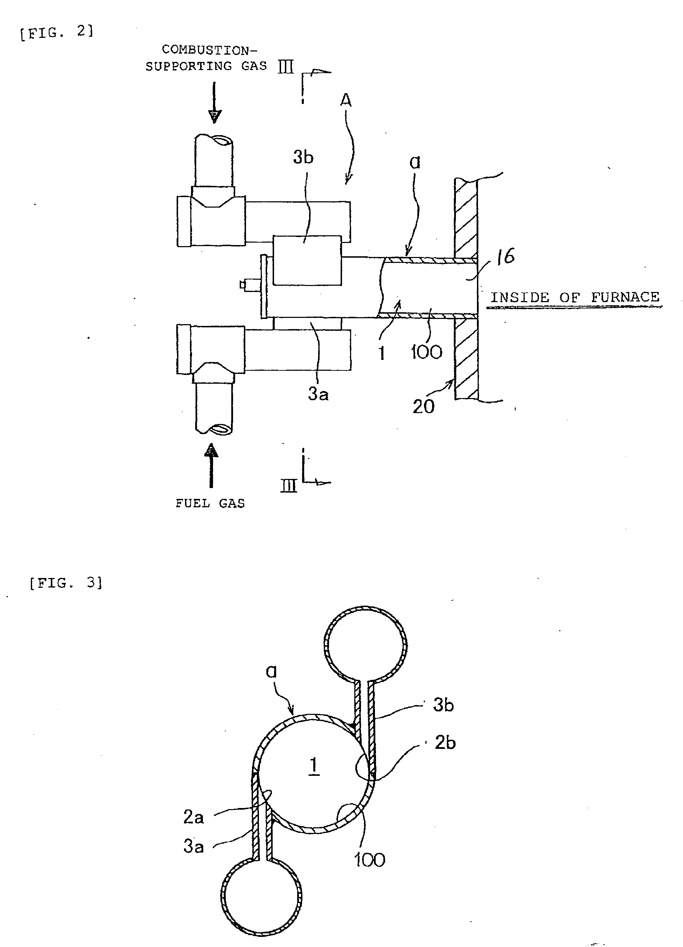

Fig. 2 and Fig. 3 show an embodiment of the gas combustion and injection device a constituting the gas injection portion A. Fig. 2 is a partial cutaway plan view and Fig. 3 is a sectional view of the section taken along a line III-III shown in Fig. 2.

In the drawings, reference numeral 1 denotes a tubular (cylindrical) combustion chamber having an open end, reference numeral 3a denotes a gas nozzle for the fuel gas, and reference numeral 3b denotes a gas nozzle for the combustion-supporting gas.

The above-described combustion chamber 1 is communicated with the inside of the blast furnace because the end thereof is connected to a gas injection port 16 disposed in the furnace body. Openings 2a and 2b (nozzle ports) to inject the fuel gas and the combustion-supporting gas, respectively, are disposed in an inside wall surface 100 in the inner part (rear end side) of this combustion chamber 1 in such a way that a swirling gas flow (swirling gas flow along the circumferential direction of the inside wall surface 100) occurs in the combustion chamber. The above-described gas nozzles 3a and 3b are connected to these openings 2a and 2b, respectively. The above-described openings 2a and 2b (nozzle ports) are disposed in such a way that gases are injected in directions diverted from the axis center of the combustion chamber 1 (eccentric direction) and that the gases injected into the combustion chamber 1 form thereby a swirling flow. The openings 2a and 2b according to the present embodiment are disposed in such a way as to inject the fuel gas and the combustion-supporting gas, respectively, nearly in the tangential directions of the inside wall surface 100.

The above-described openings 2a and 2b are formed having the shape of a slit along the pipe axis direction and are disposed at 180° opposite positions in the inside wall surface 100 (inside circumference surface). A plurality of openings 2a and a plurality of openings 2b may be disposed. In that case, the individual openings 2a and 2b are connected to their respective gas nozzles 3a and 3b.

In this regard, in the present embodiment, the end of the combustion chamber 1 is directly connected to the gas injection port 16 so as to be communicated with the inside of the blast furnace. However, the end of the combustion chamber 10 may be communicated with the inside of the blast furnace through an appropriate gas conduit (for example, a header pipe shown in Fig. 12b and Fig. 12c). In this case, the combustion gas discharged from the end of the combustion chamber 1 is injected into the blast furnace through the gas conduit.

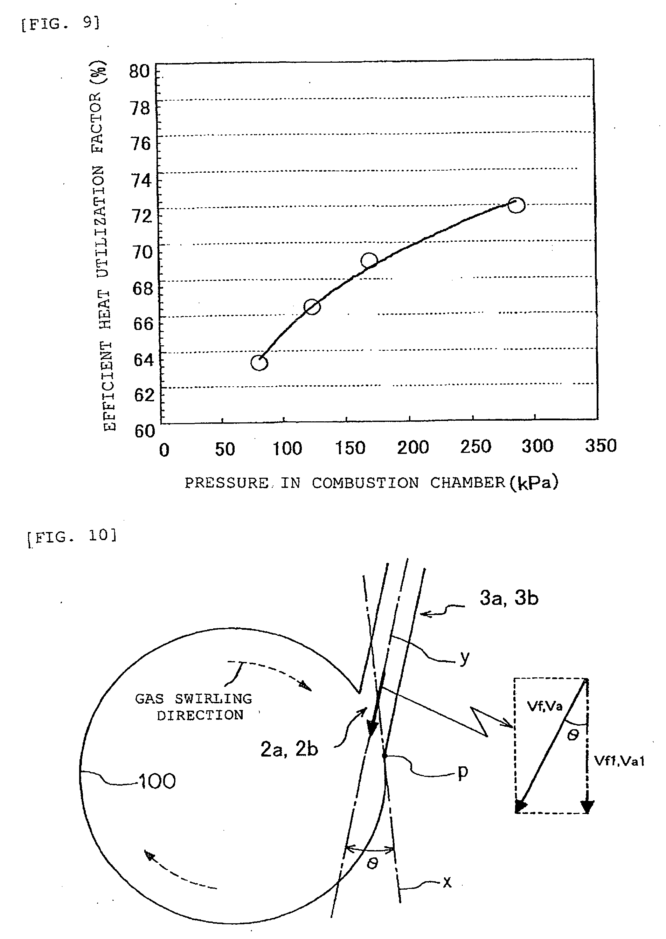

Here, the fuel gas and the combustion-supporting gas may be injected from the openings 2a and 2b (nozzle ports), respectively, in such a way that a swirling gas flow (swirling gas flow along the circumferential direction of the inside wall surface 100) occurs in the combustion chamber 1. In particular, preferably, the directions of the gas injection from the openings 2a and 2b are set in such a way that the swirl number Sw (a dimensionless number representing the intensity of swirling with respect to a flow of a fluid associated with swirling) of the swirling gas flow becomes within a preferable range described later. Fig. 10 schematically shows a section in a diameter direction of the inside of the combustion chamber at a position at which the opening 2a, 2b is disposed. Regarding such a section in a diameter direction of the combustion chamber 1, it is preferable that a gas injection angle $\theta$ is set in such a way that the swirl number Sw becomes within the preferable range (Sw: 3 to 10), where among end portions of the opening 2a, 2b in the circumferential direction of the inside wall surface 100, the end portion on the end side in the swirling (rotation) direction of the gas flow, which is discharged from the opening 2a, 2b so as to swirl, is specified to be point p, a tangential line of the inside wall surface 100 at this point p is specified to be x, the center line of the gas flow discharged from the opening 2a, 2b (= axis center of the gas nozzle 3a, 3b) is specified to be y, and the angle between the tangential line x and the gas flow center line y is specified to be the gas injection angle $\theta$. That is, the fuel gas velocity component Vf1 and the combustion-supporting gas velocity component Va1 in the tangential line x direction satisfy the following, where the fuel gas velocity at the opening 2a, calculated from the inside diameter of the gas nozzle 3a, is specified to be Vf and the combustion-supporting gas velocity at the opening 2b, calculated from the inside diameter of the gas nozzle 3b, is specified to be Va.

$$Vf1 = Vf \times \cos\theta$$

$$Va1 = Va \times \cos\theta$$

Then, preferably, the gas injection angle $\theta$ is determined in such a way that the swirl number Sw calculated on the basis of the Vf1 and Va1, which are assumed to be the gas velocities at the openings 2a and 2b, becomes within the predetermined preferable range. The method for determining the swirl number Sw is as described later.

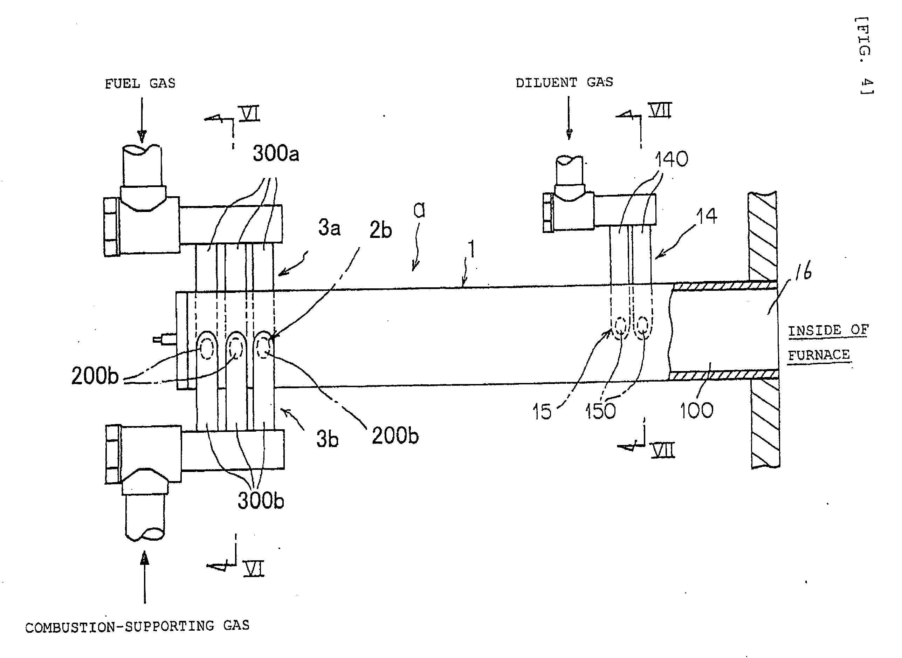

Meanwhile, from the viewpoint of the structure of the gas combustion and injection device a, it is preferable that the gas combustion and injection device a has a structure in which the openings 2a and 2b to inject the fuel gas and the combustion-supporting gas, respectively, nearly in the tangential direction of the inside wall surface 100 are disposed in the inside wall surface of the combustion chamber 1. This is because such a structure can realize the preferable swirl number Sw regardless of modifications and changes of the amount of gas and the gas velocity. Specifically, it is desirable that the gas injection angle θ shown in Fig. 10 is specified to be 30° or less, and more preferably 10° or less. If this gas injection angle θ increases, there is a possibility that an appropriate swirling gas flow along the inside wall surface 100 is not formed depending on the amount of the gas and the gas velocity. Regarding each of the present embodiment and the embodiment shown in Fig. 4 to Fig. 7 described later, the gas injection angle θ is about 0° to 5°.

In the above-described gas combustion and injection device a, the blast furnace gas serving as a combustion gas is supplied to the gas nozzle 3a, and the combustion-supporting gas is supplied to the gas nozzle 3b. These fuel gas and the combustion-supporting gas are injected from the openings 2a and 2b (nozzle ports) into the combustion chamber 1. Combustion of the fuel gas and the combustion-supporting gas was performed while a swirling flow is formed along the inside wall surface 100 of the combustion chamber 1, and a flame is formed.

Alternatively, a premixed gas of the fuel gas and the combustion-supporting gas may be used for the gas combustion and injection device a. In this case, at least one opening 2 (nozzle port) to inject the premixed gas of the fuel gas and the combustion-supporting gas in such a way that a swirling gas flow (swirling gas flow along the circumferential direction of the inside wall surface 100) occurs in the combustion chamber 1 is disposed in the inside wall surface 100 of the combustion chamber 1, and a gas nozzle 3 to supply the premixed gas is connected to this opening 2. In the same manner as the openings 2a and 2b shown in Fig. 2 and Fig. 3, the above-described opening 2 is disposed in such a way that the gas is injected in a direction diverted from the axis center of the combustion chamber 1 (eccentric direction) and that the gas injected into the combustion chamber 1 forms thereby a swirling flow. In particular, it is preferable that the opening 2 is disposed in such a way as to inject the gas (premixed gas) nearly in the tangential direction of the inside wall surface 100. In this regard, the gas is injected from this opening 2 in such a way that a swirling gas flow (swirling gas flow along the circumferential direction of the inside wall surface 100) occurs in the combustion chamber 1. The preferable method for setting the gas injection direction and the preferable gas injection angle θ from the viewpoint of the burner structure are the same as that described above with respect to the opening 2a, 2b on the basis of Fig. 10.

As for the combustion-supporting gas, oxygen-containing gases, e.g., air, and an oxygen gas can be used. The present invention is particularly useful in the case where the air is used as the combustion-supporting gas. The amount of supply of the combustion-supporting gas is the amount required for maintaining a stable combustion state. In the case where the air is used as the combustion-supporting gas, usually, the air is supplied in such a way that the air ratio becomes 1 or more. The air ratio refers to a ratio of the amount of actually supplied air to the amount of air theoretically required for combustion of the fuel (actual amount of air/theoretical amount of air). Complete combustion of the fuel gas occurs at the air ratio of 1, and $CO_2$ and $H_2O$ are generated. Incomplete combustion occurs under the condition of the air ratio of less than 1, and stable combustion cannot continue. Furthermore, in the case where the air ratio is excessive, lean burn occurs and in this case as well, a stable combustion state cannot be maintained. Therefore, usually, it is preferable that the combustion-supporting gas is supplied at the air ratio within the range of 1.0 to 1.5.

The ejection velocities of the fuel gas and the combustion-supporting gas from nozzles (openings) are not specifically limited, although it is preferable that the two are the same level of velocities.

In the above-described gas combustion and injection device a, the fuel gas and the combustion-supporting gas (or the premixed gas of the two), which are injected into the combustion chamber 1 from the gas nozzles 3a and 3b and the openings 2a and 2b and which form a swirling flow, are stratified on the basis of the difference in density of the gas, and gas layers having different densities are generated in both sides of a flame. That is, a high-temperature combustion exhaust gas is present in the axis center side where the swirling velocity is small and an unburned gas is present in the inside wall surface 100 side where the swirling velocity is large. Furthermore, in the vicinity of the inside wall surface 100, a flame cannot remain in the vicinity of the inside wall surface because the swirling velocity is larger than the flame propagation velocity. Consequently, a tubular flame is formed in the combustion chamber 1 stably. Moreover, an unburned gas is present in the vicinity of the inside wall surface of the combustion chamber 1, so that the inside wall surface of the combustion chamber 1 is not heated to a high temperature due to direct heat transfer. Then, gases in the combustion chamber 1 flow toward the end side while swirling. In the meantime, gases in the inside wall surface 100 side are burned sequentially and are moved to the axis center side. The combustion gas is discharged from the open end and is injected into the blast furnace through the gas injection port 16.

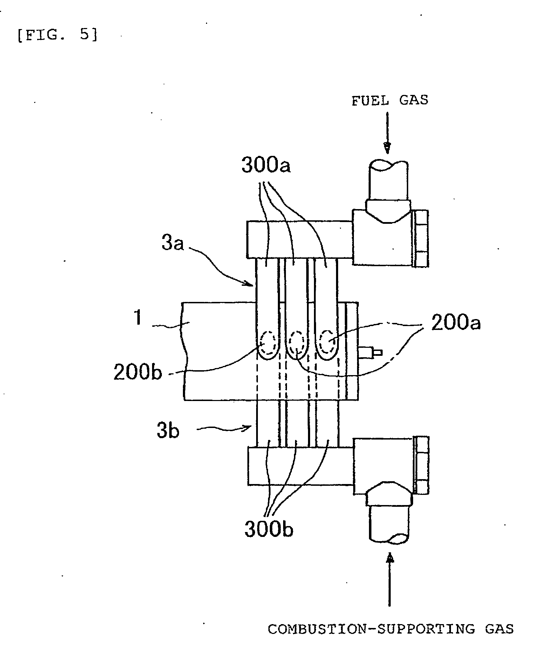

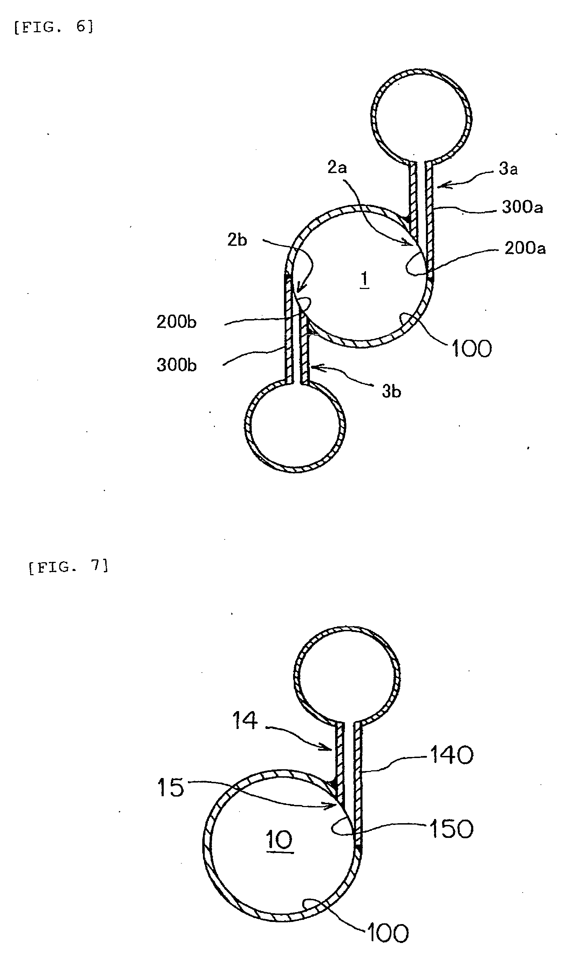

Fig. 4 to Fig. 7 show another embodiment of the gas combustion and injection device a used in the present invention. Fig. 4 is a partial cutaway plan view of the gas combustion and injection device a. Fig. 5 is a bottom view partly showing the gas combustion and injection device a. Fig. 6 is a sectional view of the section taken along a line VI-VI shown in Fig. 4. Fig. 7 is a sectional view of the section taken along a line VII-VII shown in Fig. 4.

In the embodiment shown in Fig. 4 to Fig. 7, a gas nozzle 3a for the fuel gas and a gas nozzle 3b for the combustion-supporting gas are formed from a plurality of nozzle pipes 300a and 300b, respectively, arranged in parallel in the burner axis direction. The gas nozzles 3a and 3b are formed from a plurality of nozzle pipes 300a and 300b, as described above, in order that an appropriate swirling flow is formed in the combustion chamber 1 by the gas nozzles 3a and 3b while the swirl number Sw is specified to be within a predetermined preferable range, as described later.

As in the embodiment shown in Fig. 2 and Fig. 3, Openings 2a and 2b (nozzle ports) to inject the fuel gas and the combustion-supporting gas, respectively, in such a way that a swirling gas flow (swirling gas flow along the circumferential direction of the inside wall surface 100) occurs in the combustion chamber 1 are disposed in the inside wall surface 100 in the inner part (rear end side) of the above-described combustion chamber 1. The opening 2a and the opening 2b are formed from a plurality of openings 200a and a plurality of openings 200b, respectively. In this regard, the individual openings 200a are connected to their respective gas nozzles 300a described above, and the individual openings 200b are connected to their respective gas nozzles 300b described above. The above-described openings 200a and 200b are disposed in such a way that gases are injected in directions diverted from the axis center of the combustion chamber 10 (eccentric direction) and that the gases injected into the combustion chamber 1 form thereby a swirling flow. The openings 200a and 200b according to the present embodiment are disposed in such a way as to inject the fuel gas and the combustion-supporting gas, respectively, nearly in the tangential directions of the inside wall surface 100.

Furthermore, a gas nozzle 14 to supply a diluent gas, which dilutes the combustion gas and which adjusts the temperature and/or the composition thereof, into the combustion chamber 1 is disposed at the position nearer to the end of the combustion chamber than are the above-described gas nozzles 3a and 3b (openings 2a and 2b). This gas nozzle 14 is to supply the gas to dilute the combustion gas and, therefore, the position of installation (connection) in the longitudinal direction of the combustion chamber is not specifically limited insofar as the position of installation does not hinder gas combustion in the combustion chamber 1. In the present embodiment, the gas nozzle 14 is disposed at the position nearer to the end of the combustion chamber than is the center position in the longitudinal direction of the combustion chamber.

The gas nozzle 14 may be formed from a single nozzle pipe. However, in the present embodiment, the gas nozzle 14 is formed from a plurality of nozzle pipes 140 arranged in parallel in the burner axis direction. An opening 15 (nozzle port) to inject the diluent gas nearly in the tangential direction of the inside wall surface 100 in such a way that a swirling gas flow (swirling gas flow along the circumferential direction of the inside wall surface 100) occurs in the combustion chamber 1 is disposed in the inside wall surface in the combustion chamber 1 at a position where the gas nozzle 14 is disposed. The above-described gas nozzles 14 is connected to the opening 15. However, in the present embodiment, the opening 15 is formed from a plurality of openings 150, each of the openings 150 is connected to the above-described nozzle pipe 140. The opening 15 may be a single opening in the shape of a slit along the pipe axis direction and be connected to a single gas nozzle 14. In this regard, the opening 15 for the diluent gas does not necessarily have a structure to inject the gas in such a way that a swirling gas flow occurs in the combustion chamber 10.

The other structures and functions of the gas combustion and injection device a in the embodiment shown in Fig. 4 to Fig. 7 are the same as those of the gas combustion and injection device a in the embodiment shown in Fig. 2 and Fig. 3 and, therefore, detailed explanations are omitted.

By the way, the gases are injected from the above-described openings 200a and 200b in such a way that a swirling gas flow (swirling gas flow along.the circumferential direction of the inside wall surface 100) occurs in the combustion chamber 1. The preferable method for setting the gas injection direction and the preferable gas injection angle θ from the viewpoint of the burner structure are the same as that described above with respect to the opening 2a, 2b on the basis of Fig. 10.

Meanwhile, in the present embodiment as well, the end of the combustion chamber 1 is directly connected to the gas injection port 16 so as to be communicated with the inside of the blast furnace. However, the end of the combustion chamber 1 may be communicated with the inside of the blast furnace through an appropriate gas conduit (for example, the header pipe shown in Fig. 12b and Fig. 12c). In this case, the combustion gas discharged from the end of the combustion chamber 1 is injected into the blast furnace through the gas conduit.

Regarding the gas combustion and injection device a used in the present invention, a high-temperature combustion gas is generated in the combustion chamber 1. For example, the theoretical combustion temperature of the blast furnace gas is about 1,300°C at an air ratio of 1.0. In the case where such a combustion gas is injected as a preheating gas into the blast furnace, it is preferable that the combustion gas is diluted and the temperature and the composition thereof are controlled in such a way that coke in the furnace is not consumed by $CO_2$ in the injected combustion gas, nor is iron ore (magnetite), which has been reduced in the furnace, reoxidized. In the present embodiment, for such a purpose, the diluent gas to adjust the temperature and/or the composition of the combustion gas is supplied from the gas nozzle 14 into the combustion chamber 1.

The type of the diluent gas used may be selected appropriately in accordance with the purpose of addition to the combustion gas (gas temperature control and/or gas composition control). From the viewpoint of adjusting the composition of the combustion gas, those containing reducing gases, e.g., CO and $H_2$, are preferable. For example, at least one type of a blast furnace gas, a converter gas, a coke battery gas, and the like can be used. In particular, it is preferable that a part of the blast furnace gas is taken and used as the diluent gas.

Moreover, it is desirable that the temperature of the preheating gas injected into the blast furnace is 500°C or higher, preferably 800°C or higher and 1,000°C or lower. Therefore, preferably the temperature and the amount of supply of the diluent gas are selected in such a way that the above-described preheating gas temperature is obtained.

By the way, regarding the gas combustion and injection device a having the gas nozzle to inject the premixed gas of the fuel gas and the combustion-supporting gas, the gas nozzle can be formed from a plurality of nozzle pipes arranged in parallel in the burner axis direction. Furthermore, regarding this gas combustion and injection device a as well, the above-described gas nozzle 14 for a diluent gas and the opening 15 can be disposed.

In the method according to the present invention, it is preferable that the swirl number Sw of the gas flow in the combustion chamber 1 is specified to be within the range of 3 to 10. The swirl number is a dimensionless number representing the intensity of swirling with respect to a flow of a fluid associated with swirling, and as the swirl number Sw becomes large, the flow is associated with intense swirling. If the swirl number is too small, mixing of the fuel gas and the combustion-supporting gas becomes insufficient and ignition of the combustion gas becomes unstable. On the other hand, if the swirl number is too large, a combustion flame may be blown off. From the above-described point of view, the swirl number Sw is preferably within the range of 3 to 10.

The swirl number Sw can be calculated on the basis of the known basic formula to calculate the swirl number Sw and by a formula in accordance with the type and the form of use of the gas combustion and injection device a employed. For example, in the case where the gas combustion and injection device a having the opening 2a to inject the fuel gas and the opening 2b to inject the combustion-supporting gas is used, as in the embodiment shown in Fig. 2 and Fig. 3, the swirl number Sw can be determined by the following formula.

[Mathematical expression 1]

$$Sw = \frac{(\rho a \cdot Qa \cdot Va + \rho f \cdot Qf \cdot Vf) \cdot Rb}{[(\rho a \cdot Qa + \rho f \cdot Qf) \cdot (Qa + Qf) \cdot Rb] / Ab}$$

where Rb: combustion chamber radius (m)
Ab: combustion chamber cross-sectional area ($m^2$)
pa: combustion-supporting gas density ($kg/m^3$)
pf: fuel gas density ($kg/m^3$)
Va: combustion-supporting gas velocity at opening (nozzle port) (m/s)
Vf: fuel gas velocity at opening (nozzle port) (m/s)
Qa: actual flow rate of combustion-supporting gas ($m^3/s$)
Qf: actual flow rate of fuel gas ($m^3/s$)

Meanwhile, in the case where the gas combustion and injection device a having the opening to inject the premixed gas of the fuel gas and the combustion-supporting gas is used, the swirl number Sw can be determined by the following formula.

[Mathematical expression 2]

$$Sw = \frac{(\rho m \cdot Qm \cdot Vm) \cdot Rb}{[(\rho m \cdot Qm) \cdot Qm \cdot Rb] / Ab}$$

where Rb: combustion chamber radius (m)
Ab: combustion chamber cross-sectional area ($m^2$)
pm: premixed gas density ($kg/m^3$)
Vm: premixed gas velocity at opening (nozzle port) (m/s)
Qm: actual flow rate of premixed gas ($m^3/s$)

In the case where the swirl number Sw is specified to be within the above-described preferable range, it is preferable that, as in the embodiment shown in Fig. 4 to Fig. 7, the gas nozzle 3a for the fuel gas and the gas nozzle 3b for the combustion-supporting gas are formed from a plurality of nozzle pipes 300a and a plurality of nozzle pipes 300b, respectively, arranged in parallel in the burner axis direction. This is for the following reasons. For example, in the case of conditions of the combustion chamber inside diameter: 50 mm, the amount of the blast furnace gas: 30 $Nm^3/h$ (gas density: 1.34 $kg/Nm^3$), the amount of air: 21.4 $Nm^3/h$ (gas density: 1.29 $kg/Nm^3$), the air ratio: 1.1, and the pressure in the blast furnace: 245 kPa, if each of the gas nozzles 12a and 12b are assumed to be formed from a single (one) nozzle pipe, when the swirl number Sw is 3, the inside diameter of the nozzle pipe (equivalent circle inside diameter, that is, the diameter of a circle having the cross-sectional area equal to the cross-sectional area in the inside of the nozzle pipe, and hereafter a term "inside diameter of nozzle pipe" refers to the same) is 21 mm as for the gas nozzle 3a (the fuel gas velocity at the opening 11a: 7 m/s) and is 21 mm as for the gas nozzle 3b (the combustion-supporting gas velocity at the opening 2b: 5 m/s). However, in the case where each of the gas nozzles 3a and 3b is formed from a single nozzle pipe, as described above, in the sectional view of the section taken along the line II-II shown in Fig. 2, the inside diameter of the nozzle pipe becomes about four-tenths of the inside diameter of the combustion chamber, the flows toward the center (axis center) of the combustion chamber increase with respect to both the fuel gas and the combustion-supporting gas, and a good swirling flow is not formed easily. Consequently, the high-temperature combustion exhaust gas present in the axis center side may be cooled, so that the effects of the present invention may be reduced. Fig. 11 schematically shows a section in a diameter direction of the inside of the combustion chamber at the position where the opening 2a, 2b is disposed. The center position of the gas flow injected from the opening 2a, 2b (= axis center of the gas nozzle 3a, 3b) is the position at a distance of (R - t/2) from the center of the combustion chamber 1, where the radius of the combustion chamber 1 is represented by R and the inside width or the actual inside diameter of the gas nozzle 3a, 3b in the diameter direction of the combustion chamber is represented by t. Here, if t increases relative to R, a flow toward the center of the combustion chamber (axis center) increases. Consequently, a good swirling flow is not formed easily and a tubular flame is formed at a position apart from a pipe wall, so that combustion tends to become unstable. From this point of view, it is preferable that (R - t/2)/R $\geq$ 0.8 is satisfied, although the above-described example is out of this preferable condition.

On the other hand, in the case where the gas nozzle 3a, 3b is formed from a plurality of nozzle pipes 300a, 300b arranged in parallel in the burner axis direction, the inside diameter per nozzle pipe becomes small, so that the above-described problems do not occur easily, and it is possible to generate a good swirling flow while the swirl number Sw is specified to be within the preferable range. Consequently, it is preferable that the gas nozzle 3a for the fuel gas and the gas nozzle 3b for the combustion-supporting gas are formed from a plurality of nozzle pipes 300a and a plurality of nozzle pipes 300b, respectively, arranged in parallel in the burner axis direction. For the same reason, regarding the gas combustion and injection device a having the gas nozzle to inject the premixed gas of the fuel gas and the combustion-supporting gas, it is preferable that the gas nozzle is formed from a plurality of nozzle pipes arranged in parallel in the burner axis direction.

Furthermore, regarding the gas combustion and injection device a shown in Fig. 4 to Fig. 7, a diluent gas is supplied from the gas nozzle 14 into the combustion chamber 1 for the purpose of diluting the combustion gas and controlling the temperature and the composition thereof in such a way that coke is not consumed by $CO_2$ in the injected combustion gas, nor is iron ore (magnetite), which has been reduced in the furnace, reoxidized. As described above, as for the diluent gas, those containing reducing gas, e.g., CO and $H_2$, are preferable. For example, at least one type of a blast furnace gas, a converter gas, a coke battery gas, and the like can be used. Most of all, it is preferable that a part of the blast furnace gas is taken and used as the diluent gas. Moreover, as described later, it is desirable that the temperature of the preheating gas injected into the blast furnace is 500°C or higher, desirably 800°C or higher and 1,000°C or lower. Therefore, preferably the temperature and the amount of supply of the diluent gas are selected in such a way that the above-described preheating gas temperature is obtained.

The effects obtained by using the above-described tubular flame burner type gas combustion and injection device a in the present invention will be described in comparison with the case where other type gas burners in the related art are used.

Gas burners previously industrially used are roughly divided into diffusion combustion system (external mixing) burners and premix combustion system (internal mixing) burners on the basis of the mixing system of a fuel gas and a combustion-supporting gas. However, every burner has a structure in which a flame is formed forward of a burner end. Therefore, in the case where the above-described gas burner is used as the gas combustion and injection device a, charged materials (iron ore, coke) coming down from the upper portion of the blast furnace are directly exposed to a flame, a solution loss reaction of the coke is effected, and problems occur in that, for example, coke is consumed uselessly.

Meanwhile, the furnace top gas of the oxygen blast furnace process, in which pure oxygen is blown, is a gas in which a nitrogen content is small and CO is contained primarily, and the calorific value is high (for example, about 1,200 kcal/Nm$^3$). Consequently, the furnace top gas can be used as a fuel gas for the above-described common gas burner in the related art with no problem. On the other hand, regarding the blast furnace gas generated in a normal blast furnace process related to the present invention, the calorific value is low (for example, about 800 kcal/Nm$^3$), and if the blast furnace gas is applied to the above-described common gas burner in the related art, stable combustion is not performed easily. Moreover, in the case where a low RAR operation is directed, the calorific value of the blast furnace gas is further reduced. For example, according to calculation on the basis of the mass and heat balance model in the blast furnace, the calorific value of the blast furnace gas becomes (1) 889 kcal/Nm$^3$ as for an operation corresponding to RAR 494 kg/t, (2) 812 kcal/Nm$^3$ as for an operation corresponding to RAR 460 kg/t, (3) 758 kcal/Nm$^3$ as for an operation corresponding to RAR 437 kg/t, and (4) 724 kcal/Nm$^3$ as for an operation corresponding to RAR 426 kg/t. According to the above-described calculation, the temperature of the blast furnace top gas becomes 110°C or lower. Then, for example, in the case where a part of the blast furnace gas discharged from the furnace top portion is taken, a preheating gas prepared by combustion with oxygen is injected into the furnace from the shaft portion, and the blast furnace top gas temperature is kept at 110°C or higher, the blast furnace gas calorific value is further reduced. For example, in the case where 100 Nm$^3$/t of preheating gas at 800°C is injected in the operation of the above-described item (2), the blast furnace gas calorific value becomes 786 kcal/Nm$^3$, and in the case where 150 Nm$^3$/t of preheating gas at 800°C is injected in the operation of the above-described item (3), the blast furnace gas calorific value becomes 715 kcal/Nm$^3$. Such a reduction in blast furnace gas calorific value due to the low RAR operation makes stable combustion by the above-described common gas burner in the related art further difficult.

Furthermore, the common blast furnace is operated under a pressure of 4 to 5 kg/cm$^2$ and, in addition, charged materials come down from the upper portion of the blast furnace, so that the pressure fluctuates always. Moreover, blow-by resulting from adhesion of materials to the furnace wall of the blast furnace and the like occur. Regarding the above-described common gas burner in the related art, the stability of the flame is hindered because of these factors and blow-off and the like may occur.

Regarding the above-described problems with respect to the common gas burner in the related art, the effects obtained by using the tubular flame burner type gas combustion and injection device a according to the present invention are as described below.

(a) Combustion of gas is performed in the combustion chamber 1 and no flame is present outside the combustion chamber 1. Therefore, the charged materials (iron ore, coke) coming down from the upper portion of the blast furnace are not exposed to a flame directly, so that an influence exerted on the charged materials is at a small level. Furthermore, as described above, no flame is present outside the combustion chamber 1, so that a stable flame is formed without being affected by the pressure in the blast furnace and fluctuations thereof, blow-by, and the like and a combustion gas at a desired temperature can be injected into the furnace stably.

(b) It is necessary that the preheating gas injected into the furnace has a pressure higher than the pressure in the furnace at the position of the injection. Therefore, it is necessary that combustion of gas is performed actually under pressure in the combustion chamber 1 of the gas combustion and injection device a. In the case where the combustion chamber 1 comes into a pressurized state, as described above, sable combustion of even a low-calorific value gas, e.g., especially a blast furnace gas, becomes possible. Regarding the gas combustion and injection device a, a stable flame is formed in the combustion chamber 1, the mixing property of the fuel gas and the combustion-supporting gas (oxygen) is good and, therefore, efficient uniform combustion of the gas can be performed. In particular, as described above, the combustion chamber 1 comes into the pressurized state, so that the gas density increases and, thereby, an apparent calorific value increases as compared with the calorific value in the standard state. Consequently, even in the case where the fuel gas is a low-calorific value gas, e.g., a blast furnace gas, or in the case where the concentration of the fuel gas component is very small, stable combustion can be performed.

(c) The combustion chamber 1 comes into a pressurized state, as described above, so that the gas density increases and, thereby, the amount of heat held by the fuel gas can be transferred to the combustion gas efficiently. In particular, an unburned gas and the combustion-supporting gas are present in the vicinity of the inside wall surface 100 of the combustion chamber 1, so that the inside wall surface 100 of the combustion chamber 1 is not heated to a high temperature due to direct heat transfer. Consequently, a heat loss from the pipe wall is small and, thereby, the effect thereof is further enhanced.

(d) It is preferable that the preheating gas injected from the gas injection portion A does not contain oxygen (oxygen gas as $O_2$, the same holds true hereafter) or has a low oxygen concentration. This is because if the preheating gas contains oxygen, iron oxide ($Fe_3O_4$, FeO), which is reduced in the furnace, is reoxidized. In this regard, the gas combustion and injection device a exhibits a high efficiency of utilization of oxygen because a stable flame is formed in the combustion chamber 1. In particular, the combustion chamber 1 comes into a pressurized state and, thereby, the efficiency of utilization of oxygen can be further increased, so that stable combustion can be performed with an amount of oxygen smaller than the theoretical amount of oxygen. Consequently, a preheating gas containing no oxygen or having a very low oxygen concentration can be injected into the furnace.

(e) A stable flame is formed in the combustion chamber 1, so that the variations in temperature of the preheating gas (combustion gas) injected into the furnace are reduced, and temperatures of the blast furnace gas from the lower portion of the furnace and the charged materials coming down from the upper portion of the furnace can be raised without variations.

Usually, a sensor 26a to measure the composition, the temperature, the pressure, and the like of the blast furnace gas is disposed in the flow path 9 to lead the blast furnace gas to the booster 6, and a sensor 26b to measure the pressure and the temperature in the furnace is disposed in the vicinity of the gas injection portion A. On the basis of the measurement values by these sensors 26a and 26b, the gas pressure which is increased by the boosters 25a and 25b, the amount of combustion-supporting gas injected into the gas combustion and injection device a, and the like are controlled.

The injection of the preheating gas from the gas injection portion A may be performed constantly, or be performed only in the case where the furnace top gas temperature is decreased. In the latter case, for example, the furnace top gas temperature is measured with the sensor, and in the case where the furnace top gas temperature becomes lower than or equal to a predetermined temperature (for example, 110°C or lower), the preheating gas is injected from the gas injection portion A.

The temperature of the preheating gas injected from the gas injection portion A is not specifically limited. However, if the temperature of the preheating gas is lower than the temperature of the gas in the furnace at the position of injection, the inside of the furnace is, on the contrary, cooled. Therefore, it is preferable that the temperature of the preheating gas is higher than the temperature of the gas in the furnace at the position of injection, and in general, 500°C or higher, preferably 800°C or higher is desirable. Meanwhile, from the viewpoint of suppression of the solution loss reaction in the blast furnace or reduction in equipment (material) cost for enhancing the heat resistance of the apparatus, it is preferable that the temperature of the preheating gas is 1,000°C or lower. In the case where $CO_2$ and $H_2O$ are contained in the preheating gas, if the temperature of the preheating gas exceeds 1,000°C, the following reactions (solution loss reaction) between $CO_2$ or $H_2O$ and coke in the furnace occur easily, so that coke is consumed.

$$C \text{ (coke)} + CO_2 \rightarrow 2CO$$

$$C \text{ (coke)} + H_2O \rightarrow CO + H_2$$

In this regard, in the case where an oxidizing gas, e.g., $CO_2$ or $H_2O$, is not contained in the preheating gas, consumption of coke due to the above-described reactions does not occur, but it is necessary that the apparatus (constituent members) are formed from expensive heat-resistant materials and, therefore, the equipment cost increases.

As for adjustment of the temperature of the preheating gas, for example, the amount of heat of the gas may be adjusted by changing the composition of the fuel gas used, the air ratio may be adjusted within the predetermined range and, in addition, in the case where the diluent gas is added to the combustion gas, as shown in Fig. 4 to Fig. 7, the temperature and the amount of supply of the diluent gas may be adjusted.

The amount of injection of the preheating gas is not specifically limited insofar as the amount of injection of the gas can maintain the furnace top gas temperature at 100°C or higher in general. For example, as for an operation corresponding to RAR 470 kg/t, the furnace top gas temperature can be maintained at 100°C or higher by injecting 100 $Nm^3/t$ of preheating gas at 800°C.

The position of installation of the gas injection portion A in the furnace height direction (position of injection of the preheating gas) is preferably middle portion to upper portion of the shaft. In particular, when the throat radius is represented by $R_0$, the position at a depth $R_0$ from the stock line is represented by $p_1$, and the position at a height from the lower end of the shaft portion of one-third of the total height of the shaft portion is represented by $p_2$, it is preferable that the gas injection portion A is installed between the position $p_1$ and the position $p_2$ in the furnace height direction and the preheating gas is injected from this gas injection portion A. If the position of injection of the preheating gas is too shallow (the position is too high), the load of a raw material-packed bed is small, so that fluidization or agitation of the raw material occurs and the stability in coming down of the raw material may be reduced. On the other hand, if the position of injection of the preheating gas is too deep (the position is too low), a softening-melting zone in the furnace may be reached unfavorably.

The number of installation and the form of installation of the gas injection portions A in the furnace circumferential direction are not specifically limited, although installation at a plurality of places at regular intervals in the furnace circumferential direction is preferable. In particular, in the case where each gas injection portion A is formed from one gas injection port 16 and one gas combustion and injection device a connected thereto, it is preferable that at least the gas injection portions A are installed at n places (where n is an even number of 4 or more) at regular intervals in the furnace circumferential direction and among the above-described gas injection portions A at n places, the gas injection portions A used for injection of the preheating gas are selected at regular intervals in the furnace circumferential direction in accordance with the total amount of injection. In this case, the number of installation of the gas injection portions A at regular intervals is 4, 8, 16, 32, 64, and the like. In this regard, in actual equipment, it may be difficult to install the gas injection portions A at accurately regular intervals in the furnace circumferential direction because of the relationship with the furnace body cooling structure and the like and, therefore, deviation of the position of installation to some extent is acceptable.

Each gas injection portion A may be formed from one gas injection port 16 and one gas combustion and injection device a connected thereto (this corresponds to the embodiment shown in Fig. 2 to Fig. 7), as described above. However, the gas injection portion A may be formed from a plurality of gas injection ports 16 and one or at least two gas combustion and injection devicees a connected thereto through a header pipe.

Figs. 12(a) to 12(c) are schematic diagrams showing various installation forms of the gas injection portion A, where the furnace bodies are in the state of being cut horizontally. Among them, in the embodiment shown in Fig. 12(a), the gas injection portion A is formed from one gas injection port 16 and one gas combustion and injection device a connected thereto and a plurality of the gas injection portions A are installed at intervals in the furnace circumferential direction. Regarding such an embodiment, the preheating gas injection condition (the preheating gas temperature, the amount of injection, and the like) can be adjusted on a gas injection port 16 basis. By the way, in Fig. 12(a), the gas combustion and injection devicees a are shown in the drawing with respect to a part of (two) gas injection portions A.

Meanwhile, regarding the embodiments shown in Fig. 12(b) and Fig. 12(c), a gas injection portion A is formed from a plurality of gas injection ports 16 and a gas combustion and injection device a connected thereto through a header pipe. In such embodiments, the combustion gas discharged from a combustion chamber 1 of the gas combustion and injection device a is injected into the blast furnace from the plurality of gas injection ports 16 through the header pipe.

In the embodiment shown in Fig. 12(b), the plurality of gas injection ports 16 are disposed at intervals in the furnace circumferential direction and, in addition, these gas injection ports 16 are divided into a plurality of gas injection port groups 17a to 17d and the individual gas injection port groups 17a to 17d are provided with their respective header pipes 18. Then, these header pipes are connected to a plurality of gas injection ports 16 constituting the individual gas injection port groups 17a to 17d through connection pipes 19 and, in addition, are connected to the ends of the combustion chambers 1 of the gas combustion and injection devicees a. Regarding such an embodiment, the preheating gas injection condition (the preheating gas temperature, the amount of injection, and the like) can be adjusted on each of gas injection port groups 17a to 17d basis.

In this regard, in the present embodiment, one gas combustion and injection device a is connected to one header pipe 18, although at least two gas combustion and injection devicees a may be connected thereto.

Meanwhile, in the embodiment shown in Fig. 12(c), the plurality of gas injection ports 16 are disposed at intervals in the furnace circumferential direction and, in addition, an annular header pipe 18 is disposed all around the furnace. This header pipe 18 is connected to all gas injection ports 16 through connection pipes 19 and, in addition, is connected to the end of the combustion chamber 1 of the gas combustion and injection device a.

In this regard, in the present embodiment, one gas combustion and injection device a is connected to the header pipe 18, although at least two gas combustion and injection devicees a may be connected thereto.

The present invention relates to embodiments in which it is preferable that a blast furnace gas having a low calorific value and being capable of introducing from a place at close range is used as the fuel gas of the gas combustion and injection device a. Most of all, in a particularly preferable embodiment, a part of a blast furnace gas discharged from a furnace top portion is taken at an appropriate position of a flow path and is used as a fuel gas. However, as for the fuel gas, gases other than the blast furnace gas may be used, and the blast furnace gas and gases other than that (for example, coke battery-generated gas) may be used in combination. Furthermore, as for the blast furnace gas, a blast furnace gas taken from the downstream side of a gas cleaning apparatus (the dust catcher 22, the mist separator 23), a blast furnace gas taken between the furnace top portion and the gas cleaning apparatus, a blast furnace gas stored in a gas holder, and the like may be used.

## EXAMPLES

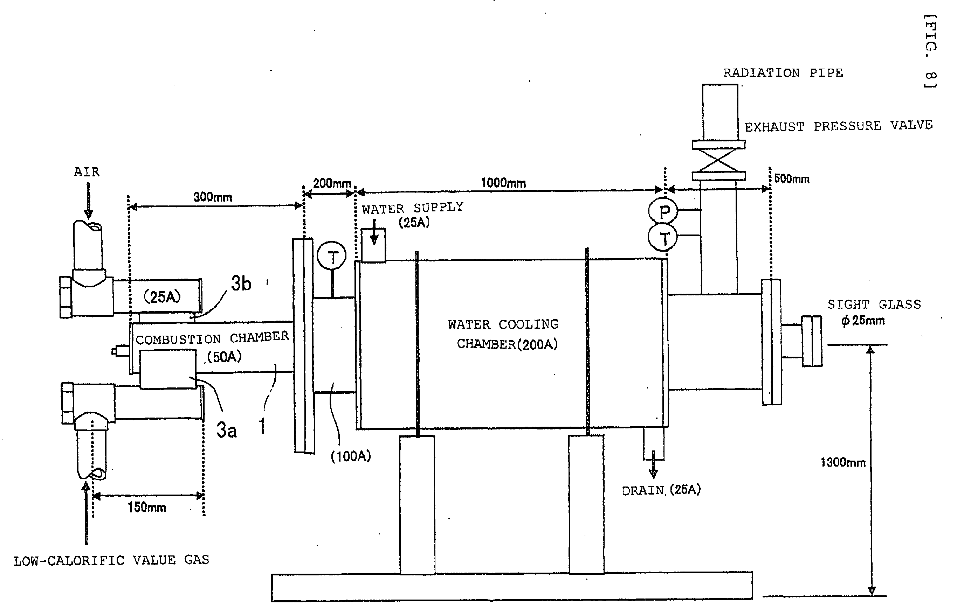

In order to verify the function of the gas combustion and injection device a used in the present invention, a test apparatus (an apparatus corresponding to the gas combustion and injection device a) having a structure shown in Fig. 8 was used and a combustion test was performed in which the supply pressures of the fuel gas (low-calorific value gas) and the combustion-supporting gas (air) were increased. Regarding the combustion chamber of this test apparatus, the inside diameter was 50 mm, the total length was 300 mm, an opening for injecting the fuel gas (nozzle slit) disposed in the inside wall surface thereof had a length of 48 mm and a width of 5 mm, and a similar opening for injecting the combustion-supporting gas (nozzle slit) had a length of 31 mm and a width of 5 mm.

The low-calorific value gas used as the fuel gas had a gas composition of CO: 22 percent by volume, $CO_2$: 21 percent by volume, $H_2$: 5 percent by volume, and $N_2$: 52 percent by volume and a calorific value of 792 kcal/Nm$^3$. Relative to 30 Nm$^3$/h of this fuel gas, 19.5 NM$^3$/h of air was supplied in such a way that the theoretical amount of oxygen became 1.

Fig. 9 is a graph showing the relationship between the pressure in the combustion chamber and the effective heat utilization factor calculated from a measurement value of the combustion gas temperature (measured with a thermocouple disposed at a position near to the end of the combustion chamber). In this regard, the effective heat utilization factor is calculated by the following formula.

$$\text{effective heat utilization factor} = \{(E \times F)/(C \times G)\} \times 100$$

E: enthalpy held by combustion gas (kcal/Nm$^3$)
F: combustion gas flow rate (Nm$^3$/h)

C: fuel gas calorific value (kcal/Nm$^3$)

G: fuel gas flow rate (Nm$^3$/h)

According to Fig. 9, as the pressure in the combustion chamber increases, the effective heat utilization factor is improved and, therefore, it is indicated that the fuel gas was converted to heat effectively.

Next, gas combustion and injection devicees a (test apparatuses) including the different number of nozzle pipes constituting the gas nozzle for the fuel gas and the combustion-supporting gas were used, and a combustion test was performed under the condition shown in Table 1 by using a fuel gas (blast furnace gas) and a combustion-supporting gas (air). Here, the gas combustion and injection device a in which each gas nozzle is formed from one (single) nozzle pipe is an apparatus (burner) including gas nozzles having a structure as in the embodiment shown in Fig. 2 and Fig. 3, and the gas combustion and injection device a in which each gas nozzle is formed from a plurality of nozzle pipes is an apparatus (burner) including gas nozzles having a structure as in the embodiment shown in Fig. 4 to Fig. 7.

Regarding the combustion chamber of each gas combustion and injection device a, the inside diameter was 50 mm, the total length was 700 mm, the number of nozzle pipes constituting each of the gas nozzle for the fuel gas and the gas nozzle for the combustion-supporting gas was 5 as for Test example 1, 4 as for Test example 2, 2 as for Test example 3, 1 as for Test example 4, 4 as for Test example 5, and 2 as for Test example 6.

Regarding the gas combustion and injection devicees a used in Test examples 1 to 4, the inside diameter of the nozzle pipe constituting the gas nozzle for injecting the fuel gas was 10 mm and the inside diameter of the nozzle pipe constituting the similar gas nozzle for injecting the combustion-supporting gas was 10 mm. Regarding the gas combustion and injection device a used in Test example 5, the inside diameter of the nozzle pipe constituting the gas nozzle for injecting the fuel gas was 6 mm and the inside diameter of the nozzle pipe constituting the similar gas nozzle for injecting the combustion-supporting gas was 6 mm. Regarding the gas combustion and injection device a used in Test example 6, the inside diameter of the nozzle pipe constituting the gas nozzle for injecting the fuel gas was 10 mm and the inside diameter of the nozzle pipe constituting the similar gas nozzle for injecting the combustion-supporting gas was 10 mm.

A blast furnace gas used as the fuel gas had a gas composition of CO: 23.5 percent by volume, $CO_2$: 23.0 percent by volume, $H_2$: 1.5 percent by volume, and $N_2$: 52 percent by volume and a calorific value of 754 kcal/Nm$^3$. Relative to 30 Nm$^3$/h of this fuel gas, 19.4 NM$^3$/h of air serving as a combustion-supporting gas was supplied in such a way that the theoretical amount of oxygen became 1. The pressure in the furnace of the applied test furnace was 245 kPa.

In Test example 6, a gas combustion and injection device a in which a gas nozzle (inside diameter 20 mm) for a diluent gas was disposed at the position 500 mm in the burner axis direction from the center of the position of injection of the fuel gas·combustion-supporting gas was used, and 24.5 Nm$^3$/h of diluent gas (blast furnace gas) was supplied in such a way that the temperature of the combustion exhaust gas discharged from the combustion chamber became 800°C. The CO (reducing gas) content in the combustion gas composition became 8.4 percent by volume by addition of the diluent gas.

In Test examples 1 to 6, observation of the inside of the combustion chamber (observation through a sight glass shown in Fig. 8) and gas composition analysis of the combustion exhaust gas were performed, and the combustion state was evaluated on the basis of the following criteria. The results thereof are shown in Table 1 together with the configuration of the gas nozzle, the gas flow rate, the swirl number Sw, the combustion gas composition (in Test example 6, the gas composition after addition of the diluent gas), and the like.

×: Pulsation was observed in the combustion state and a significant amount of unburned Co was measured.

O: Stable combustion continued and unburned CO was hardly measured (where the CO concentration in Test example 6 was due to mixing with the diluent gas)

[Table 1]

Table 1

|  |  |  | Test example 1 | Test example 2 | Test example 3 | Test example 4 | Test example 5 | Test example 6 |
|---|---|---|---|---|---|---|---|---|
| The number of nozzle pipes of gas nozzle | Fuel gas | (-) | 5 | 4 | 2 | 1 | 4 | 2 |
|  | Combustion-supporting gas | (-) | 5 | 4 | 2 | 1 | 4 | 2 |

(continued)

| | | | Test example 1 | Test example 2 | Test example 3 | Test example 4 | Test example 5 | Test example 6 |
|---|---|---|---|---|---|---|---|---|
| Gas flow rate | Fuel gas | (m/s) | 6.1 | 7.6 | 15.2 | 30.3 | 21.1 | 15.2 |
| | Combustion-supporting gas | (m/s) | 3.6 | 4.5 | 9.1 | 18.2 | 12.6 | 9.1 |
| Swirl number | | (-) | 2.7 | 3.4 | 6.7 | 13.4 | 9.3 | 6.7 |
| Combustion gas composition (on dry basis) | $N_2$ | (vol%) | 67.4 | 68.1 | 68.1 | 67.4 | 67.4 | 61.9 |
| | $CO_2$ | (vol%) | 31.5 | 31.9 | 31.9 | 32 | 32 | 28.5 |
| | CO *1 | (vol ppm) | 2100 | 0 | 0 | 3400 | 30 | 8.4 |
| | $H_2$ | (vol%) | 0.0 | 0.0 | 0.0 | 0.0 | 0.0 | 0.5 |
| | $O_2$ | (vol%) | 0.0 | 0.0 | 0.0 | 0.0 | 0.0 | 0.0 |
| Combustion exhaust gas temperature | | (°C) | 1105 | 1163 | 1163 | 1095 | 1160 | 800 |
| Evaluation of combustion state | | | × | O | ○ | × | O | ○ |
| *1 CO concentration in Test example 6 is expressed in % | | | | | | | | |

## EXAMPLE 1

Regarding a blast furnace having a volume in a furnace of 5,000 m$^3$, the present invention was executed according to the embodiment shown in Fig. 1 by using a gas combustion and injection device a as shown in Fig. 2 and Fig. 3. A blast furnace gas taken from the downstream side of the furnace top gas power generation apparatus 24 was pressurized with a booster 25a to a pressure 0.2 atm higher than the pressure in the furnace and was introduced as a fuel gas into the gas combustion and injection device a constituting a gas injection portion A. Furthermore, oxygen was pressurized with a booster 25b likewise and was introduced as a combustion-supporting gas into the gas combustion and injection device a. The amount of supply of blast furnace gas to the gas combustion and injection device a was specified to be 100 Nm$^3$/t, combustion of the blast furnace gas was performed with 5.6 Nm$^3$/t of oxygen so as to generate a combustion gas at 800°C, and the combustion gas was injected as a preheating gas into the furnace. The oxygen ratio in the gas combustion and injection device a was 0.335 (relative to the theoretical amount of oxygen). The composition of the preheating gas was CO: 17.6 percent by volume, $CO_2$: 30.3 percent by volume, $H_2$: 4.6 percent by volume, $H_2O$: 2.7 percent by volume, and $N_2$: 44.8 percent by volume. The furnace top gas temperature became 134°C by injecting the above-described preheating gas, condensation of moisture in the pipe was avoided completely in the blast furnace operation, and a stable operation was able to be performed.

## [EXAMPLE 2]

Regarding a blast furnace having a volume in a furnace of 5,000 m$^3$, the present invention was executed according to the embodiment shown in Fig. 1 by using a gas combustion and injection device a as shown in Fig. 4 to Fig. 7. A blast furnace gas taken from the downstream side of the furnace top gas power generation apparatus 5 was pressurized with a booster 25a to a pressure 0.2 atm higher than the pressure in the furnace and was introduced as a fuel gas into the gas combustion and injection device a constituting a gas injection portion A. Furthermore, oxygen was pressurized with a booster 25b likewise and was introduced as a combustion-supporting gas into the gas combustion and injection device a. In the gas combustion and injection device a, combustion of 30.3 Nm$^3$/t of blast furnace gas was performed with 5.6 Nm$^3$/t of oxygen (oxygen ratio 1.0) and, in addition, 69.7 Nm$^3$/t of diluent gas (BFG) was supplied into the combustion chamber so as to generate a combustion gas at 800°C. The combustion gas was injected as a preheating gas into the furnace. The composition of the preheating gas was the same as that in Example 1. The furnace top gas temperature became 147°C by injecting the above-described preheating gas, condensation of moisture in the pipe was avoided completely in the blast furnace operation, and a stable operation was able to be performed.

[Second unclaimed, embodiment]

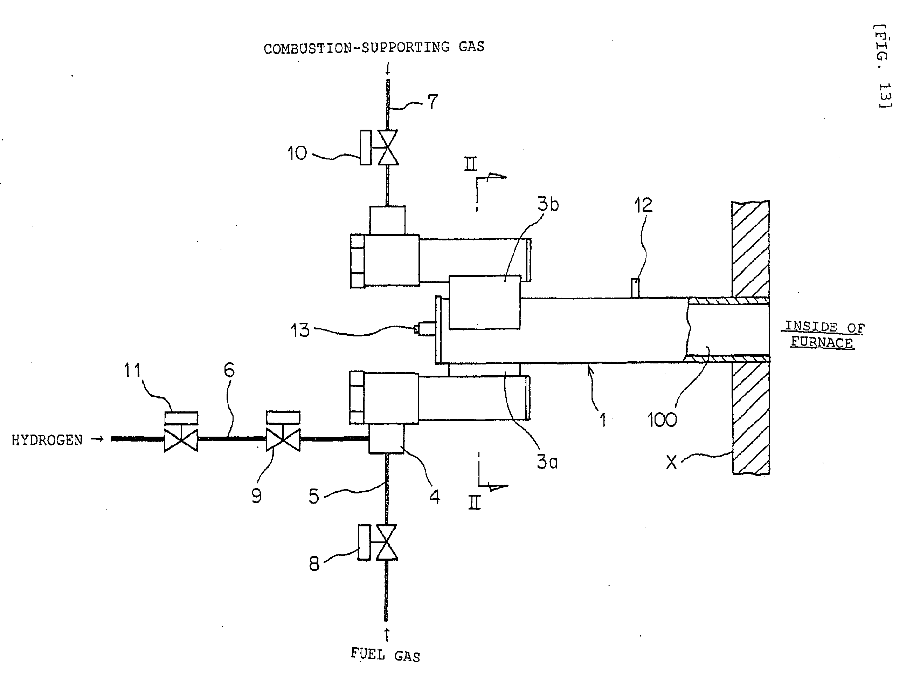

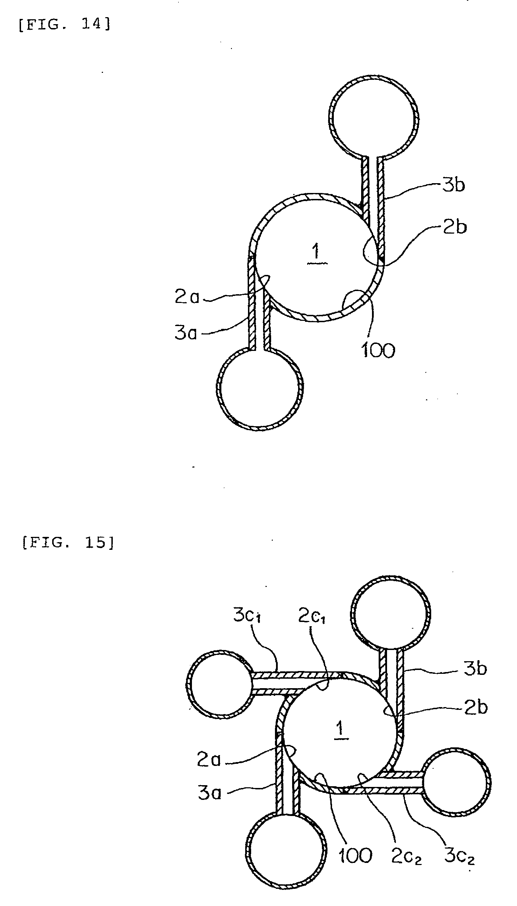

Fig. 13 and Fig. 14 show an embodiment of a combustion burner (tubular flame burner) used in the present invention. Fig. 13 is a partial cutaway plan view and Fig. 14 is a sectional view of the section taken along a line II-II shown in Fig. 13.

In the drawing, reference numeral 1 denotes a tubular (cylindrical) combustion chamber with an open end, reference numeral 3a denotes a gas nozzle for a fuel gas, and reference numeral 3b denotes a gas nozzle for a combustion-supporting gas.

Openings 2a and 2b (nozzle ports) to inject the fuel gas (and hydrogen) and the combustion-supporting gas, respectively, in such a way that a swirling gas flow (swirling gas flow along the circumferential direction of the inside wall surface 100) occurs are disposed in an inside wall surface 100 in the inner part (rear end side) of the above-described combustion chamber 1. The above-described gas nozzles 3a and 3b are connected to these openings 2a and 2b, respectively. The above-described openings 2a and 2b (nozzle ports) are disposed in such a way that gases are injected in directions diverted from the axis center of the combustion chamber 1 (eccentric direction) and that the gases injected into the combustion chamber 1 form thereby a swirling flow. The openings 2a and 2b according to the present embodiment are disposed in such a way as to inject the fuel gas and the combustion-supporting gas, respectively, nearly in the tangential directions of the inside wall surface 100.

The above-described openings 2a and 2b are formed having the shape of a slit along the pipe axis direction and are disposed at 180° opposite positions in the inside wall surface 100 (inside circumference surface). A plurality of openings 2a and a plurality of openings 2b may be disposed. In that case, the individual openings 2a and 2b are connected to their respective gas nozzles 3a and 3b.

A mixing chamber 4 to mix the fuel gas and hydrogen is disposed in a gas introduction portion of the gas nozzle 3a. A fuel gas supply pipe 5 and a hydrogen supply pipe 6 are connected to this mixing chamber 4. Meanwhile, a combustion-supporting gas supply pipe 7 is connected to a gas introduction portion of the gas nozzle 3b.

In addition, in the drawing, reference numerals 8 to 10 denote flow rate control valves disposed in the fuel gas supply pipe 5, the hydrogen supply pipe 6, and the combustion-supporting gas supply pipe 7, respectively, reference numeral 11 denotes a flow meter disposed in the hydrogen supply pipe 6, reference numeral 12 denotes a combustion state detector to detect the combustion state in the combustion chamber 1, and reference numeral 13 denotes an ignition plug. The above-described combustion state detector 12 may employ, for example, a system in which a thermocouple or the like is inserted into a flame to measure a temperature or an optical system in which ultraviolet rays in a flame is detected by using ultra vision or the like. Furthermore, reference numeral x denotes a furnace body provided with the combustion burner.

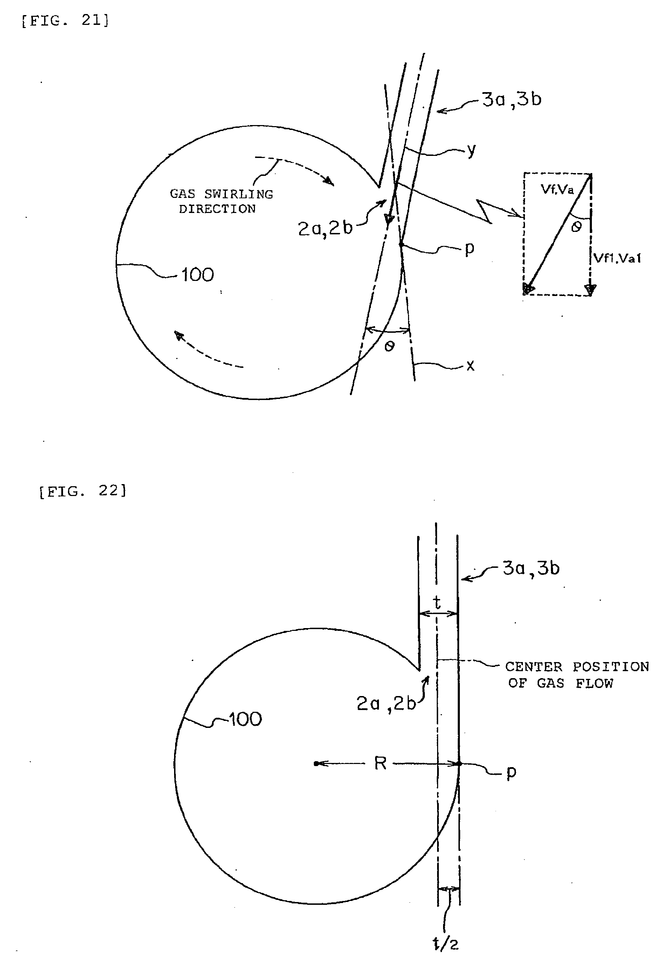

Here, the fuel gas and the combustion-supporting gas may be injected from the openings 2a and 2b (nozzle ports), respectively, in such a way that a swirling gas flow (swirling gas flow along the circumferential direction of the inside wall surface 100) occurs in the combustion chamber 1. In particular, preferably, the directions of the gas injection from the openings 2a and 2b are set in such a way that the swirl number Sw (a dimensionless number representing the intensity of swirling with respect to a flow of a fluid associated with swirling) of the swirling gas flow becomes within a preferable range described later. Fig. 21 schematically shows a section in a diameter direction of the inside of the combustion chamber at a position at which the opening 2a, 2b is disposed. Regarding such a section in a diameter direction of the combustion chamber 1, it is preferable that a gas injection angle $\theta$ is set in such a way that the swirl number Sw becomes within the preferable range (Sw: 3 to 10), where among end portions of the opening 2a, 2b in the circumferential direction of the inside wall surface 100, the end portion on the end side in the swirling (rotation) direction of the gas flow, which is discharged from the opening 2a, 2b so as to swirl, is specified to be point p, a tangential line of the inside wall surface 100 at this point p is specified to be x, the center.line of the gas flow discharged from the opening 2a, 2b (= axis center of the gas nozzle 3a, 3b) is specified to be y, and the angle between the tangential line x and the gas flow center line y is specified to be the gas injection angle $\theta$. That is, the fuel gas velocity component Vf1 and the combustion-supporting gas velocity component Va1 in the tangential line x direction satisfy the following, where the fuel gas velocity at the opening 2a calculated from the inside diameter of the gas nozzle 3a is specified to be Vf and the combustion-supporting gas velocity at the opening 2b calculated from the inside diameter of the gas nozzle 3b is specified to be Va.

$$Vf1 = Vf \times \cos\theta$$

$$Va1 = Va \times \cos\theta$$

Then, preferably, the gas injection angle θ is determined in such a way that the swirl number Sw calculated on the basis of the Vf1 and Val, which are assumed to be the gas velocities at the openings 2a and 2b, becomes within the predetermined preferable range. The method for determining the swirl number Sw is as described later.

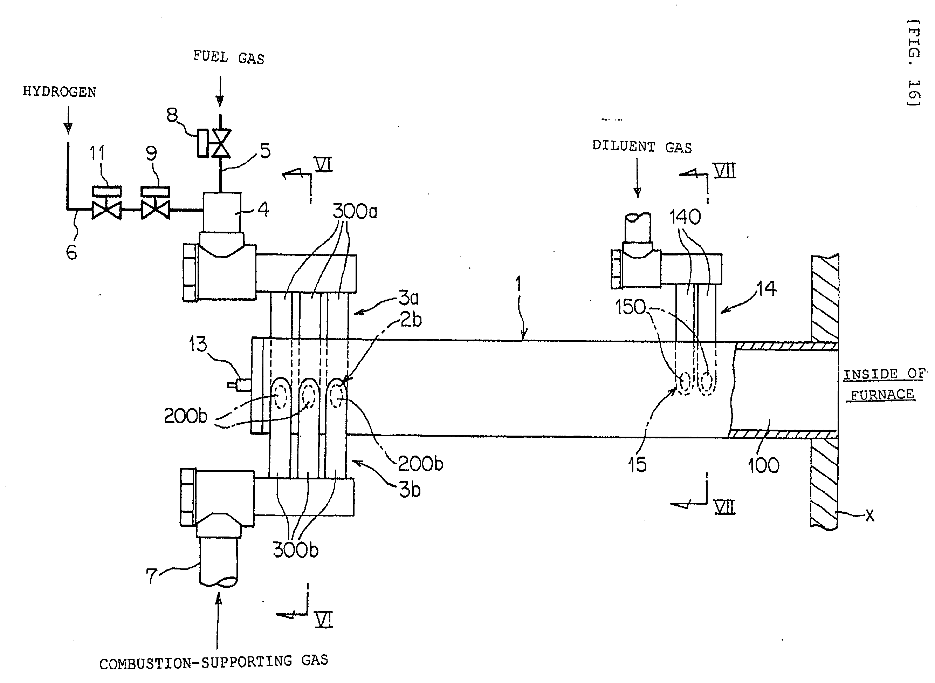

Meanwhile, from the viewpoint of the structure of the combustion burner, it is preferable that the combustion burner has a structure in which the openings 2a and 2b to inject the fuel gas and the combustion-supporting gas, respectively, nearly in the tangential direction of the inside wall surface 100 are disposed in the inside wall surface of the combustion chamber 1. This is because such a structure can realize the preferable swirl number Sw regardless of modifications and changes of the amount of gas and the gas velocity. Specifically, it is desirable that the gas injection angle θ shown in Fig. 21 is specified to be 30° or less, and more preferably 10° or less. If this gas injection angle θ increases, there is a possibility that an appropriate swirling gas flow along the inside wall surface 100 is not formed depending on the amount of the gas and the gas velocity. Regarding each of the present embodiment, an embodiment shown in Fig. 15 described later, and embodiments shown in Fig. 16 to fig. 19, the gas injection angle θ is about 0° to 5°.

According to the present invention, regarding the above-described tubular flame burner, in the case where a low-calorific gas, e.g., a blast furnace gas, a CDQ gas, and an exhaust gas containing a small amount of combustible component, having a calorific value of 1,000 kcal/Nm$^3$ or less (in particular 800 kcal/Nm$^3$ or less) is used as a fuel gas, hydrogen is added to the fuel gas for facilitating stable combustion thereof. This hydrogen may be added as a pure hydrogen gas, or be added as a hydrogen-containing gas (hereafter in the present specification, a term "hydrogen (added to a fuel gas)" includes "a hydrogen-containing gas"). In the case where a fuel gas contains hydrogen originally, it is necessary that the hydrogen concentration of this hydrogen-containing gas is more than the hydrogen concentration of the fuel gas, as a matter of course. Therefore, in the case where a blast furnace gas (usually, H$_2$ concentration: 2 to 3 percent by volume) is used as the fuel gas, it is necessary that a hydrogen-containing gas having a hydrogen concentration higher than that of the blast furnace gas is used. The hydrogen concentration of the hydrogen-containing gas is not specifically limited except this point. However, in general, it is preferable that a hydrogen-containing gas having a hydrogen concentration of 20 percent by volume or more is used. Among gases generated in iron and steel processes, for example, a coke battery gas obtained in production of coke has a particularly high hydrogen concentration (usually about 55 percent by volume) and is suitable for the hydrogen-containing gas.

In order to add hydrogen to the fuel gas, regarding the combustion burner shown in Fig. 13 and Fig. 14, the fuel gas and hydrogen are supplied to the mixing chamber 4 of the gas nozzle 3a through the fuel gas supply pipe 5 and the hydrogen supply pipe 6, and hydrogen is mixed into the fuel gas here. The resulting hydrogen-mixed fuel gas (fuel gas mixed with hydrogen, the same holds true hereafter) enters the nozzle main body. Meanwhile, the combustion-supporting gas is supplied to the gas nozzle 3b through the combustion-supporting gas supply pipe 7. The hydrogen-mixed fuel gas and the combustion-supporting gas supplied to the gas nozzles 3a and 3b, as described above, are injected into the combustion chamber 1 from the openings 2a and 2b (nozzle ports). Combustion is performed while this hydrogen-mixed fuel gas and the combustion-supporting gas form a swirling flow along the inside wall surface 100 of the combustion chamber 1 and, thereby, a flame is formed. In this regard, the above-described combustion is started by ignition with the ignition plug 13, and in the case where combustion continues, ignition with the ignition plug 13 is finished at that point in time.

In the case where the calorific value of the fuel gas is fluctuated, for example, the calorific value is further reduced, and thereby, the combustion state detected by the combustion state detector 12 is not stabilized, the amount of supply of hydrogen is increased by the flow meter 11 and the flow rate control valve 9 disposed in the hydrogen supply pipe 6.

In this regard, as for this combustion burner, a gas in which the fuel gas and the combustion-supporting gas are mixed in advance (premixed gas) may be used. In this case, at least one opening 2 (nozzle port) to inject the premixed gas of the fuel gas and the combustion-supporting gas in such a way that a swirling gas flow (swirling gas flow along the circumferential direction of the inside wall surface 100) occurs in the combustion chamber 1 is disposed in the inside wall surface 100 of the combustion chamber 1, and a gas nozzle 3 to supply the premixed gas is connected to this opening 2. The above-described opening 2 is disposed in such a way that the gas is injected in directions diverted from the axis center of the combustion chamber 1 (eccentric direction) and that the gas injected into the combustion chamber 1 forms thereby a swirling flow, in the same manner as the opening 2a, 2b shown in Fig. 13 and Fig. 14. In particular, it is preferable that the opening 2 is disposed in such a way as to inject the gas (premixed gas) nearly in the tangential direction of the inside wall surface 100. Then, hydrogen is added to the fuel gas before premixing with the combustion-supporting gas or the premixed gas. The premixed gas containing hydrogen added, as described above, is injected into the combustion chamber 1 from the opening 2 through the gas nozzle 3. By the way, the gas is injected from this opening 2 in such a way that a swirling gas flow (swirling gas flow along the circumferential direction of the inside wall surface 100) occurs in the combustion chamber 1. The preferable method for setting the gas injection direction and the preferable gas injection angle θ from the viewpoint of the burner structure are the same as that described above with respect to the opening 2a, 2b on the basis of Fig. 21.

In the above-described combustion burner, the hydrogen-mixed fuel gas and the combustion-supporting gas

(or the premixed gas of the two), which are injected into the combustion chamber 1 from the gas nozzles 3a and 3b and the openings 2a and 2b and which form a swirling flow, are stratified on the basis of a difference in density of the gas, and gas layers having different densities are generated in both sides of a flame. That is, a high-temperature combustion exhaust gas is present in the axis center side where the swirling velocity is small and an unburned gas is present in the inside wall surface 100 side where the swirling velocity is large. Furthermore, in the vicinity of the inside wall surface 100; a flame cannot remain in the vicinity of the inside wall surface because the swirling velocity is larger than the flame propagation velocity. Consequently, a tubular flame is formed in the combustion chamber 1 stably. Moreover, an unburned gas is present in the vicinity of the inside wall surface of the combustion chamber 1, so that the inside wall surface of the combustion chamber 1 is not heated to a high temperature due to direct heat transfer. Then, gases in the combustion chamber 1 flow toward the end side while swirling. In the meantime, gases in the inside wall surface 100 side are burned sequentially and are moved to the axis center side. The combustion gas is discharged from the open end.

The combustion velocity of hydrogen is very high as compared with those of other combustible gases, e.g., CO. Consequently, stable combustion of a low-calorific value gas can be performed by adding hydrogen. Here, the maximum combustion potential (MCP) of a gas is determined on the basis of the composition thereof and is calculated by the following formulae.

[Mathematical expression 3]

$$MCP = \Sigma\,(S_i\, f_i\, A_i) / \Sigma\,(f_i\, A_i) \times (1-K)$$

$$K = \frac{\Sigma A_i}{\Sigma\,(\alpha_i\, A_i)}\left\{\frac{2.5\, CO_2 + N_2 - 3.77\, O_2}{100 - 4.77\, O_2} + \left[\frac{N_2 - 3.77\, O_2}{100 - 4.77\, O_2}\right]^2\right\}$$

where $S_i$: combustion velocity of each of combustible gases in the gas, and the value is shown in Table described below
$f_i$: coefficient with respect to each of combustible gases in the gas, and the value is shown in Table described below
$A_i$: content of each of combustible gases in the gas (percent by volume)
K: attenuation coefficient
$\alpha_i$: correction coefficient of each of combustible gases in the gas, and the value is shown in Table described below
$CO_2$: content of carbon dioxide in the gas (percent by volume)
$N_2$: content of nitrogen in the gas (percent by volume)
O2: content of oxygen in the gas (percent by volume)

[Table 2]

Table 2

|  | $S_i$ | $f_i$ | $\alpha_i$ |
|---|---|---|---|
| $H_2$ | 282 | 1 | 1.33 |
| CO | 100 | 0.871 | 1.00 |
| $CH_4$ | 36 | 8.72 | 2.00 |
| $C_2H_6$ | 41 | 16.6 | 4.55 |
| $C_2H_4$ | 66 | 11.0 | 4.00 |
| $C_3H_8$ | 41 | 24.6 | 4.55 |
| $C_3H_6$ | 47 | 21.8 | 4.55 |
| $C_4H_{10}$ | 38 | 32.7 | 5.56 |
| $C_4H_8$ | 47 | 28.5 | 4.55 |

As for the MCP calculated by the above-described formulae, hydrogen is 282 and CO is 100, so that the combustion velocity of hydrogen is 2.8 times that of CO. Therefore, stable combustion of a low-calorific value gas can be performed by adding hydrogen. Theoretically, combustion of the low-calorific value gas continues insofar as the adiabatic flame temperature of the low-calorific value gas is a temperature higher than or equal to the firing point of gas species contained in the fuel gas (CO firing point: 609°C, $H_2$ firing point: 500°C) or the concentration of the combustible gas contained in the fuel gas is more than or equal to the explosion lower limit concentration (CO explosion lower limit concentration: 12.5 percent by volume, $H_2$: 4 percent by volume). However, according to the study of the present inventors, it was found that regarding the low-calorific value gas containing CO, e.g., a blast furnace gas, stable combustion was able to be performed when the adiabatic flame temperature after addition of hydrogen became 750°C or higher. For example, regarding a gas containing 10.1 percent by volume of CO (the remainder is inert gases, e.g., $N_2$, and/or $CO_2$), the calorific value is 305 kcal/Nm$^3$ and the adiabatic flame temperature is 645°C, so that combustion does not continue stably in this state and a pilot burner is required separately for supporting combustion. The adiabatic flame temperature becomes 750°C by adding 3.0 percent by volume of hydrogen to this gas, so that stable combustion can continue. The adiabatic flame temperature is a temperature theoretically calculated on the assumption that the heat generated by combustion is not lost to the outside and is used for raising the temperature of the combustible gas.

Therefore, regarding the low-calorific value gas containing CO, e.g., a blast furnace gas, it is preferable that hydrogen is added in such a way that the adiabatic flame temperature becomes 750°C or higher. Meanwhile, as the amount of addition of hydrogen increases, the stability in combustion is enhanced correspondingly, but if the amount of addition of hydrogen is too large, the economy is impaired.

As described above, the present invention can also be applied in the case where a low-calorific value gas containing hydrogen originally is used as the fuel gas, and as a matter of course, the amount of addition of hydrogen is adjusted in accordance with the concentration of hydrogen contained originally.

Furthermore, in the combustion method according to the present invention, in the case where the combustion chamber 1 is brought into the pressurized state, the gas density increases and, thereby, an apparent calorific value increases. Consequently, regarding even a fuel gas having a lower calorific value, stable combustion can be performed.

In the present invention, oxygen-containing gases, e.g., air, and an oxygen gas can be used as the combustion-supporting gas. The present invention is particularly useful in the case where the air is used as the combustion-supporting gas. The amount of supply of the combustion-supporting gas is the amount required for maintaining a stable combustion state. In the case where the air is used as the combustion-supporting gas, usually, the air is supplied in such a way that the air ratio becomes 1 or more. The air ratio refers to a ratio of the amount of actually supplied air to the amount of air theoretically required for combustion of the fuel (actual amount of air/theoretical amount of air). Complete combustion of the fuel gas occurs at the air ratio of 1, and $CO_2$ and $H_2O$ are generated. Incomplete combustion occurs under the condition of the air ratio of less than 1, and stable combustion cannot continue. Furthermore, in the case where the air ratio is excessive, lean burn occurs and in this case as well, a stable combustion state cannot be maintained. Therefore, usually, it is preferable that the combustion-supporting gas is supplied at the air ratio within the range of 1.0 to 1.5.

The ejection velocities of the fuel gas and the combustion-supporting gas from nozzles (openings) are not specifically limited, although it is preferable that the two are the same level of velocities.

In the embodiment shown in Fig. 13 and Fig. 14, hydrogen is added to the fuel gas before injection into the combustion chamber 1. However, hydrogen may be added to the fuel gas injected into the combustion chamber 1 (that is, hydrogen is added to the fuel gas in the combustion chamber 1). Fig. 15 is a sectional view showing an embodiment of the combustion burner used in this case (a sectional view of the section taken along the same section line as that of Fig. 14). Regarding this combustion burner, the same openings 2a and 2b as those shown in Fig. 14 are disposed in an inside wall surface 100 in the inner part (rear end side) of the combustion chamber 1 and, in addition, openings $2c_1$ and $2c_2$ (nozzle ports) to inject hydrogen (a hydrogen gas or a hydrogen-containing gas, the same holds true hereafter) in such a way that a swirling gas flow (swirling gas flow along the circumferential direction of the inside wall surface 100) occurs in the combustion chamber 1 are disposed at center positions between the opening 2a and the opening 2b in the circumferential direction of the inside wall surface 100 (that is, positions 90° from the openings 2a and 2b in the circumferential direction). Gas nozzles $3c_1$ and $3c_2$ for hydrogen are connected to these openings $2c_1$ and $2c_2$, respectively. In the same manner as the openings 2a and 2b, the above-described openings $2c_1$ and $2c_2$ (nozzle ports) are disposed in such a way that the gas (hydrogen) is injected in a direction diverted from the axis center of the combustion chamber 1 (eccentric direction) and that the gas injected into the combustion chamber 1 form thereby a swirling flow. The openings $2c_1$ and $2c_2$ according to the present embodiment are disposed in such a way as to inject hydrogen nearly in the tangential directions of the inside wall surface 100.

The above-described openings $2c_1$ and $2c_2$ are formed having the shape of a slit along the pipe axis direction in the same manner as the above-described openings 2a and 2b. In this regard, any one of these openings $2c_1$ and $2c_2$ may be disposed, or at least three openings may be disposed. In that case, each opening 2c is connected to a gas nozzle 3c.

By the way, the gas (hydrogen) is injected from the openings $2c_1$ and $2c_2$ in such a way that a swirling gas flow (swirling gas flow along the circumferential direction of the inside wall surface 100) occurs in the combustion chamber 1. The preferable method for setting the gas injection direction and the preferable gas injection angle $\theta$ from the viewpoint of the burner structure are the same as that described above with respect to the opening 2a, 2b on the basis of Fig. 21.

Regarding such a combustion burner, hydrogen is injected into the combustion chamber 1 from the openings $2c_1$ and $2c_2$ through the gas nozzle 3c and, thereby, hydrogen is added to the fuel gas in the combustion chamber 1.

The other structures and functions of the combustion burner in the embodiment shown in Fig. 15 are the same as those of the combustion burner in the embodiment shown in Fig. 13 and Fig. 14 and, therefore, detailed explanations are omitted. In this regard, in the same manner as the combustion burner in the embodiment shown in Fig. 13 and Fig. 14, a gas in which the fuel gas and the combustion-supporting gas are mixed in advance (premixed gas) may be used. In this case, as described above, at least one opening 2 (nozzle port) to inject the premixed gas of the fuel gas and the combustion-supporting gas is disposed in place of the above-described openings 2a and 2b, and a gas nozzle 3 to supply the premixed gas is connected to this opening 2.

According to the present invention, the fuel gas containing hydrogen added and the combustion-supporting gas form a swirling flow in the combustion chamber 1 in the combustion burner and, thereby, stable combustion of a low-calorific value fuel gas can be performed. In the case where the fuel gas is a gas, e.g., a blast furnace gas, primarily containing $CO$, $CO_2$, and $N_2$, hydrogen has a low gas density as compared with those gas components, and when hydrogen is injected in such a way as to form a swirling flow, as in the embodiment shown in Fig. 15, hydrogen moves in the axis center side because of the difference in density, combustion is performed preferentially, and combustion of the other gases are facilitated. Consequently, combustibility of the low-calorific value fuel gas can be further enhanced.

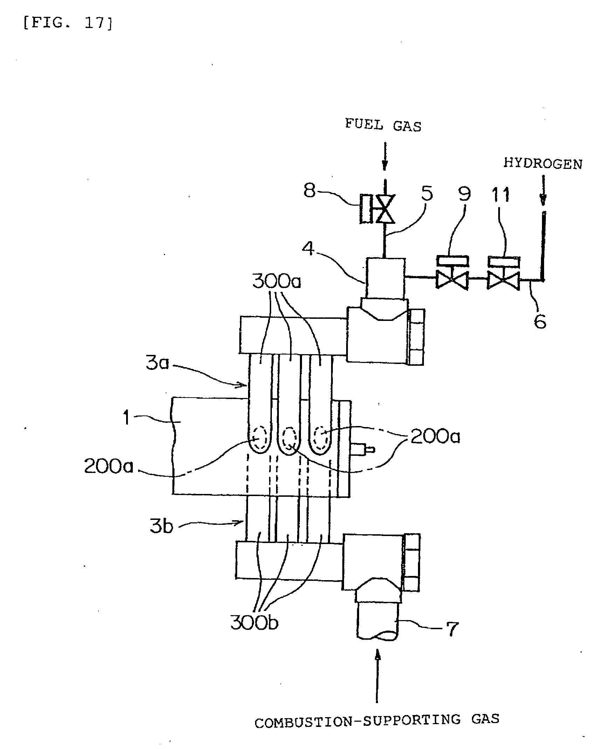

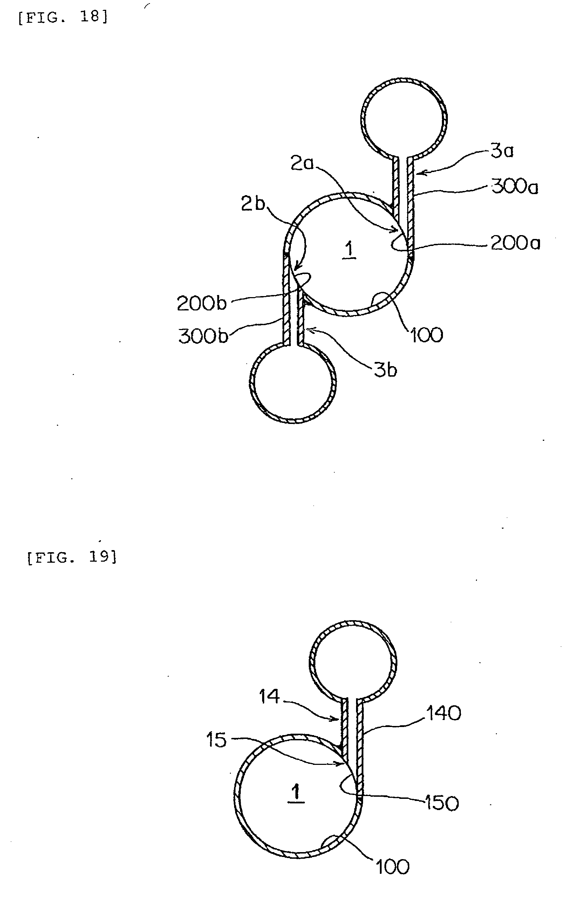

Fig. 16 to Fig. 19 show another embodiment of the combustion burner (tubular flame burner) used in the present invention. Fig. 16 is a partial cutaway plan view of the combustion burner. Fig. 17 is a bottom view partly showing the combustion burner. Fig. 18 is a sectional view of the section taken along a line VI-VI shown in Fig. 16. Fig. 19 is a sectional view of the section taken along a line VII-VII shown in Fig. 16.

In the embodiment shown in Fig. 16 to Fig. 19, a gas nozzle 3a for a fuel gas and a gas nozzle 3b for a combustion-supporting gas are formed from a plurality of nozzle pipes 300a and a plurality of nozzle pipes 300b, respectively, arranged in parallel in the burner axis direction. The gas nozzles 3a and 3b are formed from the plurality of nozzle pipes 300a and 300b, as described above, in order that the swirl number Sw is specified to be within a preferable range while an appropriate swirling flow is formed by the gas nozzles 3a and 3b in the combustion chamber 1, as described later.

In the same manner as the embodiment shown in Fig. 13 and Fig. 14, openings 2a and 2b (nozzle ports) to inject the fuel gas and the combustion-supporting gas, respectively, are disposed in an inside wall surface 100 in the inner part (rear end side) of the above-described combustion chamber 1 in such a way that a swirling gas flow (swirling gas flow along the circumferential direction of the inside wall surface 100) occurs in the combustion chamber 1. These openings 2a and 2b are also formed from a plurality of openings 200a and a plurality of openings 200b, respectively. Then, the individual above-described individual nozzle pipes 300a are connected to their respective openings 200a, and the above-described individual nozzle pipes 300b are connected to their respective openings 200b. The above-described openings 200a and 200b are disposed in such a way that gases are injected in directions diverted from the axis center of the combustion chamber 1 (eccentric direction) and that the gases injected into the combustion chamber 1 form thereby a swirling flow. The openings 200a and 200b according to the present embodiment are disposed in such a way as to inject the fuel gas and the combustion-supporting gas, respectively, nearly in the tangential directions of the inside wall surface 100.

Furthermore, a gas nozzle 14 to supply a diluent gas, which dilutes the combustion gas and which adjusts the temperature and/or the composition thereof, into the combustion chamber 1 is disposed at the position nearer to the end of the combustion chamber than are the above-described gas nozzles 3a and 3b (openings 2a and 2b). This gas nozzle 14 is to supply the gas to dilute the combustion gas and, therefore, the position of installation (connection) in the longitudinal direction of the combustion chamber is not specifically limited insofar as the position of installation does not hinder gas combustion in the combustion chamber 1. In the present embodiment, the gas nozzle 14 is disposed at the position nearer to the end of the combustion chamber than is the center position in the longitudinal direction of the combustion chamber.

The gas nozzle 14 may be formed from a single nozzle pipe. However, in the present embodiment, the gas nozzle 14 is formed from a plurality of nozzle pipes 140 arranged in parallel in the burner axis direction. An opening 15 (nozzle port) to inject the diluent gas nearly in the tangential direction of the inside wall surface 100 in such a way that a swirling gas flow (swirling gas flow along the circumferential direction of the inside wall surface 100) occurs in the combustion chamber 1 is disposed in the inside wall surface in the combustion chamber 1 at a position where the gas nozzle 14 is disposed. The above-described gas nozzle 14 is connected to the opening 15. In the present embodiment, the opening 15 is formed from a plurality of openings 150, each of the openings 150 is connected to the above-described nozzle pipe 140. The opening 15 may be a single opening in the shape of a slit along the pipe axis direction and be connected to a single gas nozzle 14. In this regard, the opening 15 for the diluent gas does not necessarily have a structure to inject the gas in such a way that a swirling gas flow occurs in the combustion chamber 1.

The other structures and functions of the combustion burner in the embodiment shown in Fig. 16 to Fig. 19 are the same as those of the combustion burner in the embodiment shown in Fig. 13 and Fig. 14 and, therefore, detailed explanations are omitted.

By the way, the gases are injected from the above-described openings 200a and 200b in such a way that a swirling gas flow (swirling gas flow along the circumferential direction of the inside wall surface 100) occurs in the combustion chamber 1. The preferable method for setting the gas injection direction and the preferable gas injection angle θ from the viewpoint of the burner structure are the same as that described above with respect to the opening 2a, 2b on the basis of Fig. 21.

Regarding the combustion burner used in the present invention, a high-temperature combustion gas is generated in the combustion chamber 1. For example, the theoretical combustion temperature of the blast furnace gas is about 1,300°C at an air ratio of 1.0. In the case where the present invention is applied to a blast furnace operating method, described later, and a combustion gas of a combustion burner is injected as a preheating gas into the blast furnace, it is preferable that the combustion gas is diluted and the temperature and the composition thereof are controlled in such a way that coke in the furnace is not consumed by $CO_2$ in the injected combustion gas, nor is iron ore (magnetite), which has been reduced in the furnace, reoxidized. In the present embodiment, for such a purpose, the diluent gas to adjust the temperature and/or the composition of the combustion gas is supplied from the gas nozzle 14 into the combustion.chamber 1.

The type of the diluent gas used may be selected appropriately in accordance with the purpose of addition to the combustion gas (gas temperature control and/or gas composition control). From the viewpoint of adjusting the composition of the combustion gas, those containing reducing gas, e.g., CO and $H_2$, are preferable. For example, at least one type of a blast furnace gas, a converter gas, a coke battery gas, and the like can be used. In particular, it is preferable that a part of the blast furnace gas is taken and used as the diluent gas.

Moreover, in the case where a combustion gas of a combustion burner is injected as a preheating gas into the blast furnace, it is desirable that the temperature of the preheating gas is 500°C or higher, and preferably 800°C or higher, as described later. Therefore, preferably the temperature and the amount of supply of the diluent gas are selected in such a way that the above-described preheating gas temperature is obtained.

By the way, regarding a combustion burner having a gas nozzle to inject a premixed gas of the fuel gas and the combustion-supporting gas and a combustion burner having a gas nozzle 3c to inject hydrogen as in the embodiment shown in Fig. 15, those gas nozzles can be formed from a plurality of nozzle pipes arranged in parallel in the burner axis direction. Furthermore, regarding these combustion burners as well, the above-described gas nozzle 14 and the opening 15 for a diluent gas can be disposed.

In the combustion method according to the present invention, it is preferable that the swirl number Sw of the gas flow in the combustion chamber 1 is specified to be within the range of 3 to 10. The swirl number is a dimensionless number representing the intensity of swirling with respect to a flow of a fluid associated with swirling, and as the swirl number Sw becomes large, the flow is associated with intense swirling. If the swirl number is too small, mixing of the fuel gas and the combustion-supporting gas becomes insufficient and ignition of the combustion gas becomes unstable. On the other hand, if the swirl number is too large, a combustion flame may be blown off. From the above-described point of view, the swirl. number Sw is preferably within the range of 3 to 10.

The swirl number Sw can be calculated on the basis of the known basic formula to calculate the swirl number Sw and by a formula in accordance with the type and the form of use of the combustion burner employed. For example, in the case where the combustion burner having the opening 2a to inject the fuel gas and the opening 2b to inject the combustion-supporting gas is used, as in the embodiment shown in Fig. 13 and Fig. 14, the swirl number Sw can be determined by the following formula. In this regard, the fuel gas in the following formula refers to a hydrogen-mixed fuel gas.

[Mathematical expression 4]

$$Sw = \frac{(\rho a \cdot Qa \cdot Va + \rho f \cdot Qf \cdot Vf) \cdot Rb}{[(\rho a \cdot Qa + \rho f \cdot Qf) \cdot (Qa + Qf) \cdot Rb] / Ab}$$

where Rb: combustion chamber radius (m)
Ab: combustion chamber cross-sectional area ($m^2$)
pa: combustion-supporting gas density ($kg/m^3$)
pf: fuel gas density ($kg/m^3$)
Va: combustion-supporting gas velocity at opening (nozzle port) (m/s)
Vf: fuel gas velocity at.opening (nozzle port) (m/s)
Qa: actual flow rate of combustion-supporting gas ($m^3/s$)
Qf: actual flow rate of fuel gas ($m^3/s$)

Meanwhile, in the case where the combustion burner having the opening to inject the premixed gas of the fuel gas and the combustion-supporting gas is used, the swirl number Sw can be determined by the following formula. In this regard, the premixed gas in the following formula refers to "fuel gas + hydrogen + combustion-supporting gas".

[Mathematical expression 5]

$$Sw = \frac{(\rho m \cdot Qm \cdot Vm) \cdot Rb}{[(\rho m \cdot Qm) \cdot Qm \cdot Rb] / Ab}$$

where Rb: combustion chamber radius (m)
Ab: combustion chamber cross-sectional area (m$^2$)
pm: premixed gas density (kg/m$^3$)
Vm: premixed gas velocity at opening (nozzle port) (m/s)
Qm: actual flow rate of premixed gas (m$^3$/s)

Moreover, in the case where the combustion burner having the opening 2c to inject hydrogen in addition to the opening 2a to inject the fuel gas and the opening 2b to inject the combustion-supporting gas is used as in the embodiment shown in Fig. 15, the swirl number Sw can be determined by the following formula.

[Mathematical expression 6]

$$Sw = \frac{(\rho a \cdot Qa \cdot Va + \rho f \cdot Qf \cdot Vf + \rho h \cdot Qh \cdot Vh) \cdot Rb}{[(\rho a \cdot Qa + \rho f \cdot Qf + \rho h \cdot Qh) \cdot (Qa + Qf + Qh) \cdot Rb] / Ab}$$

where Rb: combustion chamber radius (m)
Ab: combustion chamber cross-sectional area (m$^2$)
pa: combustion-supporting gas density (kg/m$^3$)
pf: fuel gas density (kg/m$^3$)
ph: hydrogen (hydrogen gas or hydrogen-containing gas) density (kg/m$^3$)
Va: combustion-supporting gas velocity at opening (nozzle port) (m/s)
Vf: fuel gas velocity at opening (nozzle port) (m/s)
Vh: hydrogen (hydrogen gas or hydrogen-containing gas) velocity at opening (nozzle port) (m/s)
Qa: actual flow rate of combustion-supporting gas (m$^3$/s)
Qf: actual flow rate of fuel gas (m$^3$/s)
Qh: actual flow rate of hydrogen (hydrogen gas or hydrogen-containing gas) (m$^3$/s)

In the case where the swirl number Sw is specified to be within the above-described preferable range, it is preferable that, as in the embodiment shown in Fig. 16 to Fig. 19, the gas nozzle 3a for the fuel gas and the gas nozzle 3b for the combustion-supporting gas are formed from a plurality of nozzle pipes 300a and a plurality of nozzle pipes 300b, respectively, arranged in parallel in the burner axis direction. This is for the following reasons. For example, in the case of conditions of the combustion chamber inside diameter: 50 mm, the amount of the combustion gas (blast furnace gas): 30 Nm$^3$/h (gas density: 1.34 kg/Nm$^3$), the amount of air: 21.4 Nm$^3$/h (gas density: 1.29 kg/Nm$^3$), the air ratio: 1.1, and the pressure in the furnace: 245 kPa (pressure in the furnace where the combustion burner is disposed as the gas combustion and injection device a in a blast furnace, as in the blast furnace operating method described later), if each of the gas nozzles 3a and 3b are assumed to be formed from a single (one) nozzle pipe, when the swirl number Sw is 3, the inside diameter of the nozzle pipe (equivalent circle inside diameter, that is, the diameter of a circle having the cross-sectional area equal to the cross-sectional area in the inside of the nozzle pipe, and hereafter a term "inside diameter of nozzle pipe" refers to the same) is 21 mm as for the gas nozzle 3a (the fuel gas velocity at the opening 2a: 7 m/s) and is 21 mm as for the gas nozzle 3b (the combustion-supporting gas velocity at the opening 2b: 5 m/s). However, in the case where each of the gas nozzles 3a and 3b is formed from a single nozzle pipe, as described above, in the sectional view of the section taken along the line II-II shown in Fig. 13, the inside diameter of the nozzle pipe becomes about four-tenths of the inside diameter of the combustion chamber, the flows toward the center (axis center) of the combustion chamber increase with respect to both the fuel gas and the combustion-supporting gas, and a good swirling flow is not formed easily. Consequently, the high-temperature combustion exhaust gas present in the axis center side may be cooled, so that the effects of the present invention may be reduced. Fig. 22 schematically shows a section in a diameter direction of the inside of the combustion chamber at the position where the opening 2a, 2b is disposed. The center position of the gas flow injected from the opening 2a, 2b (= axis center of the gas nozzle 3a, 3b) is the position at a distance of (R - t/2) from the center of the combustion chamber 1, where the radius of the combustion chamber 1 is represented by R and the inside width or the actual inside diameter of the gas nozzle 3a, 3b in the diameter direction of the combustion chamber is represented by t. Here, if t increases relative to R, a flow toward the center of the combustion chamber (axis center) increases. Consequently, a good swirling flow is not formed easily and a tubular flame is formed at a position apart from a pipe wall, so that combustion tends to become unstable. From this point of view, it is preferable that (R - t/2)/R ≥ 0.8 is satisfied, although the above-described example is out of this preferable condition.

On the other hand, in the case where the gas nozzle 3a, 3b is formed from a plurality of nozzle pipes 300a, 300b arranged in parallel in the burner axis direction, the inside diameter per nozzle pipe becomes small, so that the above-described problems do not occur easily, and it is possible to generate a good swirling flow while the swirl number Sw is specified to be within the preferable range. Consequently, it is preferable that the gas nozzle 3a for the fuel gas and the gas nozzle 3b for the combustion-supporting gas are formed from a plurality of nozzle pipes 300a and a plurality of nozzle pipes 300b, respectively, arranged in parallel in the burner axis direction. For the same reason, regarding the combustion burner having the gas nozzle to inject the premixed gas of the fuel gas and the combustion-supporting gas and the combustion burner having the gas nozzle 3c to inject a hydrogen gas, as in the embodiment shown in Fig. 15, it is preferable that those gas nozzles are formed from a plurality of nozzle pipes arranged in parallel in the burner axis direction.

In the present invention, the low-calorific value gas used as the fuel gas has a calorific value of 1,000 kcal/Nm$^3$ or less. In general, combustion of a gas having a calorific value exceeding 1,000 kcal/Nm$^3$ can be performed by a method in the related art without specifically applying the present invention. Therefore, regarding the present invention, it is substantially a requirement that the calorific value of the fuel gas containing hydrogen added is 1,000 kcal/Nm$^3$ or less. Furthermore, regarding a gas having a calorific value of less than 800 kcal/Nm$^3$ or less, stable combustibility is not obtained easily. Therefore, in the case where this is used as the fuel gas, the usefulness of present invention is particularly high. Meanwhile, if the calorific value of the fuel gas is less than 300 kcal/Nm$^3$, even when the present invention is applied, it may become difficult to perform stable combustion. Consequently, it is preferable that the fuel gas used in the present invention has a calorific value of 300 kcal/Nm$^3$ or more.

Next, a blast furnace operating method, to which a low-calorific value gas combustion method by using the above-described combustion burner is applied, will be described.

A blast furnace operating method according to the present invention relates to a blast furnace operating method, in which air or oxygen-enriched air is brown from a tuyere, that is, an operation of a normal blast furnace. In the case where the oxygen-enriched air is blown from the tuyere, usually, an operation is performed at an oxygen enrichment of 20 percent by volume or less, and preferably 10 percent by volume or less. In this regard, as the oxygen enrichment increases, the amount of gas passing through the furnace is reduced and the amount of injection gas required for raising the temperature of the upper portion of the shaft increases significantly. From this point of view as well, an operation at the above-described oxygen enrichment is preferable.

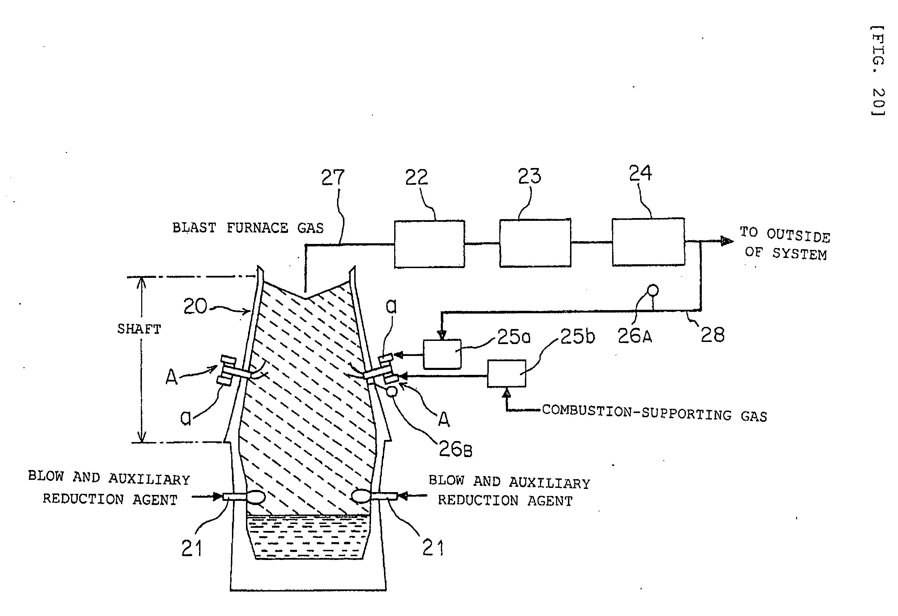

Fig. 20 is an explanatory diagram schematically showing an embodiment of a blast furnace operating method according to the present invention. In the drawing, reference numeral 20 denotes a blast furnace and reference numeral 21 denotes a tuyere thereof. A hot gas and an auxiliary reduction agent (for example, pulverized coal or LNG) are injected into the furnace from this tuyere 21.

A blast furnace gas discharged from the furnace top portion of the blast furnace 20 (furnace top gas) is led to a furnace top gas power generation apparatus 24 after dust is removed with a dust catcher 22 serving as a gas cleaning apparatus and moisture is removed with a mist separator 23 serving as the gas cleaning apparatus. The pressure of the furnace top gas is recovered as electricity and, subsequently, the furnace top gas is led to the outside of the system.

In the present invention, a gas is injected into the blast furnace from a gas injection portion A disposed in a shaft portion (preferably, a shaft middle portion to upper portion). The main purpose of injection of the gas into the furnace in such a manner is to supplement a reduction in the amount of blowing due to a low RAR operation and, thereby, ensure the flow rate in the furnace upper portion. However, injection of a gas at a temperature which unnecessarily decreases the furnace top gas temperature goes against the aims of the invention. Therefore, a preheating gas is used as the injection gas.

In injection of the preheating gas from the gas injection portion A into the blast furnace, as described above, according to the present invention, the gas injection portion A is formed from a gas combustion and-injection device a in which an end of the combustion chamber of the above-described combustion burner (for example, any one of the combustion burner shown in Fig. 13 and Fig. 14, the combustion burner shown in Fig. 15, and the combustion burner shown in Fig. 16 to Fig. 19) is communicated with the inside of the blast furnace, and a combustion gas of the gas combustion and injection device a is injected as the preheating gas into the blast furnace. That is, in Fig. 13 and Fig. 16, reference numeral x denotes a furnace body of the blast furnace 20 and the gas combustion and injection device a is formed by mounting the combustion burner on the furnace body x in such a way that the end of the combustion chamber 1 is communicated with the inside of the blast furnace.

. The basic structure of such a gas combustion and injection device a has been known as a tubular flame burner. However, this tubular flame burner has been developed and used for furnaces and combustion apparatuses and, therefore, an application to a gas injection device of the blast furnace has not been studied at all. Furthermore, in recent years, the blast furnace operation has been performed under a high-pressure condition and, therefore, it is necessary that the preheating gas is injected after the pressure is raised to a pressure higher than the pressure in the furnace at the position of the injection. However, the tubular flame burner is predicated on use in the state of normal pressure, and the use under the above-described pressure condition has not been studied at all. On the other hand, according to the present invention, it was found that a tubular flame burner type gas combustion and injection device a had a very excellent function as a device for preheating a low-calorific value gas, e.g., a blast furnace gas, through combustion and injecting this from a shaft portion of a blast furnace into the furnace. Moreover, it was found that in the case where a low-calorific value gas, e.g., a blast furnace gas, was used as a fuel gas, stable combustion was able to be performed by adding hydrogen to the fuel gas, as described above.

Regarding the embodiment shown in Fig. 20, a part of a blast furnace gas, which is discharged from the furnace top portion and, thereafter, which is passed through the gas cleaning apparatus (the dust catcher 22 and the mist separator 23) and the furnace top gas power generation apparatus 24, is taken and introduced as a fuel gas into the gas combustion and injection device a constituting the gas injection portion A after being pressurized with a booster 25a. In the case where hydrogen is mixed into the fuel gas, hydrogen is introduced into a pipe of the fuel gas directly or hydrogen is mixed into the fuel gas by using a mixer, although not shown in the drawing, so as to produce a hydrogen-mixed fuel gas. Regarding a flow path 27 of the blast furnace gas discharged from the furnace top portion of the blast furnace 20, a flow path 28 to supply a part of the blast furnace gas to the gas combustion and injection device a is branched from a flow path portion on the downstream side of the furnace top gas power generation apparatus 24.

Meanwhile, a combustion-supporting gas, which is an oxygen-containing gas (air, oxygen-enriched air, high-oxygen concentration gas, or the like), is supplied to the gas combustion and injection device a. This combustion-supporting gas is also pressurized with a booster 25b and, thereafter, is introduced into the gas combustion and injection device a. In this regard, in the case where a premixed gas of the fuel gas and the combustion-supporting gas is used in the gas combustion and injection device a, the fuel gas and the combustion-supporting gas may be pressurized in advance with the boosters 25a and 25b separately, or the premixed gas may be pressurized with a single booster 25. In this case, hydrogen is introduced (or hydrogen is mixed by a mixer) into the fuel gas before premixing with the combustion-supporting gas or hydrogen is introduced (or hydrogen is mixed by a mixer) into the premixed gas.

Meanwhile, in the case of the combustion burner shown in Fig. 14, hydrogen is pressurized with a booster. Thereafter, hydrogen is introduced into the gas combustion and injection device a separately from the fuel gas and is injected into the combustion chamber thereof.

Furthermore, in the case of the combustion burner shown in Fig. 16 to Fig. 19, the diluent gas is supplied from the gas nozzle 14 into the combustion chamber 1 in order to dilute the combustion gas and control the temperature and the composition thereof in such a way that coke is not consumed by $CO_2$ in the combustion gas injected into the blast furnace, nor is iron ore (magnetite), which has been reduced in the furnace, reoxidized. As described above, as for the diluent gas, those containing reducing gases, e.g., CO and $H_2$, are preferable. For example, at least one type of a blast furnace gas, a converter gas, a coke battery gas, and the like can be used. Most of all, it is preferable that a part of the blast furnace gas is taken and used as the diluent gas. Moreover, it is desirable that the temperature of the preheating gas is 500°C or higher, and preferably 800°C or higher. Therefore, the temperature and the amount of supply of the diluent gas are selected in such a way that the above-described preheating gas temperature is obtained.

Next, the effects obtained by using the tubular flame burner type gas combustion and injection device a and adding hydrogen to the low-calorific value gas (in particular, in the case where a blast furnace gas generated in a low-reducing agent ratio operation is used) serving as a fuel gas in the present invention will be described in comparison with the case where other type gas burners in the related art are used.

Most of gas burners previously industrially used have a structure in which a flame is formed forward of a burner end. Therefore, in the case where the above-described gas burner is used as the gas combustion and injection device a, charged materials (iron ore, coke) coming down from the upper portion of the blast furnace are directly exposed to a flame, a solution loss reaction of the coke is effected, and problems occur in that, for example, coke is consumed uselessly.

Meanwhile, the furnace top gas of the oxygen blast furnace process, in which pure oxygen is blown, is a gas in which a nitrogen content is small and CO is contained primarily, and the calorific value is high (for example, about 1,200 kcal/Nm$^3$). Consequently, the furnace top gas can be used as a fuel gas for the above-described common gas burner in the related art with no problem. On the other hand, regarding the blast furnace gas generated in a normal blast furnace process related to the present invention, the calorific value is low (for example, about 800 kcal/Nm$^3$), and if the blast furnace gas is applied to the above-described common gas burner in the related art, stable combustion is not performed easily. Moreover, in the case where a low RAR operation is directed, the calorific value of the blast furnace gas is further reduced. For example, according to calculation on the basis of the mass and heat balance model in the blast furnace, the calorific value of the blast furnace gas becomes (1) 722 kcal/Nm$^3$ as for an operation corresponding to RAR 494 kg/t (PCR: 130 kg/t, blowing temperature: 1,150°C), (2) 620 kcal/Nm$^3$ as for an operation corresponding to RAR 450 kg/t (PCR: 130 kg/t, blowing temperature: 1,200°C, high-reactivity coke is used, the heat loss is reduced by 43%, the shaft efficiency is increased by 2% relative to the operation of the above-described item (1)), and (3) 517 kcal/Nm$^3$ as for an operation corresponding to RAR 412 kg/t (PCR: 130 kg/t, blowing temperature: 1,200°C, high-reactivity coke is used, the heat loss is reduced by 57%, the shaft efficiency is increased by 4% relative to the operation of the above-described item (1)). According to the above-described calculation, the temperature of the blast furnace top gas becomes 110°C or lower in the operations of the above-described items (2) and (3). Then, for example, in the case where a part of the blast furnace gas discharged from the furnace top portion is taken, a preheating gas prepared by combustion with oxygen is injected into the furnace from the shaft portion, and the blast furnace top gas temperature is kept at 110°C or higher, the blast furnace gas calorific value is further reduced. For example, in the case where 100 Nm$^3$/t of preheating gas at 800°C is injected in the operation of the above-described item (2), the blast furnace gas calorific value becomes 590 kcal/Nm$^3$, and in the case where 150 Nm$^3$/t of preheating gas at 800°C is injected in the operation of the above-described item (3), the blast furnace gas calorific value becomes 477 kcal/Nm$^3$. Such a reduction in blast furnace gas calorific value due to the low RAR operation makes stable combustion by the above-described common gas burner in the related art further difficult.

Furthermore, the common blast furnace is operated under a pressure of 4 to 5 kg/cm$^2$ and, in addition, charged materials come down from the upper portion of the blast furnace, so that the pressure fluctuates always. Moreover, blow-by resulting from adhesion of materials to the furnace wall of the blast furnace and the like occur. Regarding the above-described common gas burner in the related art, the stability of the flame is hindered because of these factors and blow-off and the like may occur.

Regarding the above-described problems with respect to the common gas burner in the related art, according to the present invention, the effects obtained by using the tubular flame burner type gas combustion and injection device a and adding hydrogen to a low-calorific value gas, e.g., a blast furnace gas, used as the fuel gas so as to perform stable combustion are as described below.

(a) Combustion of gas is performed in the combustion chamber 1 and no flame is present outside the combustion chamber 1. Therefore, the charged materials (iron ore, coke) coming down from the upper portion of the blast furnace are not exposed to a flame directly, so that an influence exerted on the charged materials is at a small level. Furthermore, as described above, no flame is present outside the combustion chamber 1, so that a stable flame is formed without being affected by the pressure in the blast furnace and fluctuations thereof, blow-by, and the like and a combustion gas at a desired temperature can be injected into the furnace stably.

(b) It is necessary that the preheating gas injected into the furnace has a pressure higher than the pressure in the furnace at the position of the injection. Therefore, it is necessary that combustion of gas is performed actually under pressure in the combustion chamber 1 of the gas combustion and injection device a. In the case where the combustion chamber 1 comes into a pressurized state, as described above, the condition advantageous for sable combustion of even a low-calorific value gas, e.g., especially a blast furnace gas, is brought about. Regarding the gas combustion and injection device a, a stable flame is formed in the combustion chamber 1, the mixing property of the fuel gas and the combustion-supporting gas is good and, therefore, efficient uniform combustion of the gas can be performed. In particular, as described above, the combustion chamber 1 comes into the pressurized state, so that the gas density increases and, thereby, an apparent calorific value increases as compared with the calorific value in the standard state. Consequently, combined with addition of hydrogen to the fuel gas, even in the case where the fuel gas is a low-calorific value gas, e.g., a blast furnace gas, or in the case where the concentration of the fuel gas component is very small, stable combustion can be performed.

(c) The combustion chamber 1 comes into a pressurized state, as described above, so that the gas density increases and, thereby, the amount of heat held by the fuel gas can be transferred to the combustion gas efficiently. In particular, an unburned gas and the combustion-supporting gas are present in the vicinity of the inside wall surface 100 of the combustion chamber 1, so that the inside wall surface 100 of the combustion chamber 1 is not heated to a high temperature due to direct heat transfer. Consequently, a heat loss from the pipe wall is small and, thereby, the effect thereof is further enhanced.

(d) It is preferable that the preheating gas injected from the gas injection portion A does not contain oxygen (oxygen gas as $O_2$, the same holds true hereafter) or has a low oxygen concentration. This is because if the preheating gas contains oxygen, iron oxide ($Fe_3O_4$, FeO), which is reduced in the furnace, is reoxidized. In this regard, the gas combustion and injection device a exhibits a high efficiency of utilization of oxygen because a stable flame is formed in the combustion chamber 1. In particular, the combustion chamber 1 comes into a pressurized state and, thereby, the efficiency of utilization of oxygen can be further increased, so that stable combustion can be performed with an amount of oxygen smaller than the theoretical amount of oxygen. Consequently, a preheating gas containing no oxygen or having a very low oxygen concentration can be injected into the furnace.

(e) A stable flame is formed in the combustion chamber 1, so that the variations in temperature of the preheating gas (combustion gas) injected into the furnace are reduced, and temperatures of the blast furnace gas from the lower portion of the furnace and the charged materials coming down from the upper portion of the furnace can be raised without variations.

Usually, a sensor $26_A$ to measure the composition, the temperature, the pressure, and the like of the blast furnace gas is disposed in the flow path 28 to lead the blast furnace gas to the booster 25, and a sensor $26_B$ to measure the pressure and the temperature in the furnace is disposed in the vicinity of the gas injection portion A. On the basis of the measurement values with these sensors $26_A$ and $26_B$, the gas pressure which is increased by the boosters 25a and 26b, the amount of combustion-supporting gas injected into the gas combustion and injection device a, the amount of hydrogen, and the like are controlled.

The injection of the preheating gas from the gas injection portion A may be performed constantly, or be performed only in the case where the furnace top gas temperature is decreased. In the latter case, for example, the furnace top gas temperature is measured with the sensor, and in the case where the furnace top gas temperature becomes lower than or equal to a predetermined temperature (for example, 110°C or lower), the preheating gas is injected from the gas injection portion A.

The temperature of the preheating gas injected from the gas injection portion A is not specifically limited. However, if the temperature of the preheating gas is lower than the temperature of the gas in the furnace at the position of injection, the inside of the furnace is, on the contrary, cooled. Therefore, it is preferable that the temperature of the preheating gas is higher than the temperature of the gas in the furnace at the position of injection, and in general, 500°C or higher, preferably 800°C or higher is desirable.

The amount of injection of the preheating gas is not specifically limited insofar as the amount of injection of the gas can maintain the furnace top gas temperature at 100°C or higher in general.

The position of installation of the gas injection portion A in the furnace height direction (position of injection of the preheating gas) is preferably middle portion to upper portion of the shaft. In particular, when the throat radius is represented by $R_0$, the position at a depth of $R_0$ from the stock line is represented by $p_1$, and the position at a height from the lower end of the shaft portion of one-third of the total height of the shaft portion is represented by $p_2$, it is preferable that the gas injection portion A is installed between the position $p_1$ and the position $p_2$ in the furnace height direction and the preheating gas is injected from this gas injection portion A. If the position of injection of the preheating gas is too shallow (the position is too high), the load of a raw material-packed bed is small, so that fluidization or agitation of the raw material occurs and the stability in coming down of the raw material may be reduced. On the other hand, if the position of injection of the preheating gas is too deep (the position is too low), a softening-melting zone in the furnace may be reached unfavorably.

The number of installation and the form of installation of the gas injection portions A in the furnace circumferential direction are not specifically limited, although installation at a plurality of places at regular intervals in the furnace circumferential direction is preferable. In particular, it is preferable that at least the gas injection portions A are installed at n places (where n is an even number of 4 or more) at regular intervals in the furnace circumferential direction and among the above-described gas injection portions A at n places, the gas injection portions A used for injection of the preheating gas are selected at regular intervals in the furnace circumferential direction in accordance with the total amount of injection. In this case, the number of installation of the gas injection portions A at regular intervals is 4, 8, 16, 32, 64, and the like. In this regard, in actual equipment, it may be difficult to install the gas injection portions A at accurately regular intervals in the furnace circumferential direction because of the relationship with the furnace body cooling structure and the like and, therefore, deviation of the position of installation to some extent is acceptable.

The present invention relates to embodiments in which it is preferable that a blast furnace gas having a low calorific value and being capable of introducing from a place at close range is used as the fuel gas of the gas combustion and injection device a. Most of all, it can be said that particularly preferable embodiment is to take a part of a blast furnace gas discharged from a furnace top portion from an appropriate position of a flow path so as to use as a fuel gas from the viewpoint of effective utilization of energy (sensible heat of the gas can be used as-is) and, in addition, from the viewpoint of equipment. However, as for the fuel gas, gases other than the blast furnace gas may be used, and the blast furnace gas and gases other than that may be used in combination. Furthermore, as for the blast furnace gas, a blast furnace gas taken from the downstream side of a gas cleaning apparatus (the dust catcher 22, the mist separator 23), a blast furnace gas taken between the furnace top portion and the gas cleaning apparatus, a blast furnace gas stored in a gas holder, and the like may be used.

[EXAMPLES]

[EXAMPLE 1]

A test apparatus of combustion burner having a structure shown in Fig. 8 was used and a combustion test was performed under the condition shown in Table 3 by using a fuel gas (low-calorific value gas) containing hydrogen added and a combustion-supporting gas (air). Regarding the combustion chamber of this test apparatus, the inside diameter was 50 mm, the total length was 300 mm, an opening to inject the fuel gas (nozzle slit) disposed in the inside wall surface thereof had a length of 48 mm and a width of 5 mm, and a similar opening to inject the combustion-supporting gas (nozzle slit) had a length of 31 mm and a width of 5 mm.

In Invention examples 1 to 4, low-calorific value gases (CO: 10.1 percent by volume, $CO_2$: 10.4 percent by volume, and $N_2$: 79.5 percent by volume) having about 300 kcal/$Nm^3$ were prepared as fuel gases, and hydrogen was added to the resulting fuel gases in such a way that the concentrations in the fuel gases became 3.7 percent by volume, 4.0 percent by volume, 6.0 percent by volume, and 2.0 percent by volume, respectively. Then, a combustion test was performed. Furthermore, in Invention examples 5 and 6, a blast furnace gas in an operation corresponding to RAR 412 kg/t was used as the fuel gas, hydrogen was added thereto, and the combustion test was performed. Furthermore, in Invention examples 7 and 8, a blast furnace gas in an operation corresponding to RAR 450 kg/t was used as the fuel gas, hydrogen was added thereto, and the combustion test was performed. In each case, air was supplied to 30 $Nm^3$/h of fuel gas containing hydrogen in such a way that the theoretical amount of oxygen became 1.1. Meanwhile, a combustion test by using a fuel gas not mixed with hydrogen was performed for the purpose of comparison.

Regarding this combustion test, the combustion stability was evaluated on the basis of the following criteria.

○: There was no pulsation of flame and combustion was stable while following fluctuations in pressure (excellent)
Δ: There was pulsation of flame, but flame-out was not observed (good)
x: There was pulsation of flame and flame-out due to fluctuations in pressure was observed (unacceptable)

The results thereof are shown in Table 2 together with the test conditions. According to them, regarding each of Invention examples, stable combustion was realized. In particular, in the case where hydrogen was added in such a way that the adiabatic flame temperature became 750°C or higher, very stable combustion was realized.

[Table 3]

Table 3

| | | | Comparative example | Invention example 1 | Invention example 2 | Invention example 3 | Invention example 4 | Invention example 5 | Invention example 6 | Invention example 7 | Invention example 8 |
|---|---|---|---|---|---|---|---|---|---|---|---|
| Fuel gas composition *1 | $N_2$ | (vol%) | 79.5 | 76.6 | 76.3 | 74.7 | 77.9 | 54.0 | 52.8 | 54.4 | 53.8 |
| | $CO_2$ | (vol%) | 10.4 | 10.0 | 10.0 | 9.8 | 10.2 | 27.4 | 26.8 | 23.5 | 23.3 |
| | CO | (vol%) | 10.1 | 9.7 | 9.7 | 9.5 | 9.9 | 14.7 | 14.4 | 18.1 | 17.9 |
| | $H_2$ | (vol%) | 0.0 | 3.7 | 4.0 | 6.0 | 2.0 | 4.0 | 6.0 | 4.0 | 5.0 |
| Calorific value | | ($kcal/Nm^3$) | 305 | 406 | 414 | 469 | 359 | 564 | 616 | 668 | 692 |
| Air ratio | | (-) | 1.1 | 1.1 | 1.1 | 1.1 | 1.1 | 1.1 | 1.1 | 1.1 | 1.1 |
| Amount of fuel gas *2 | | ($Nm^3/h$) | 30.0 | 30.0 | 30.0 | 30.0 | 30.0 | 30.0 | 30.0 | 30.0 | 30.0 |
| Amount of air | | ($Nm^3/h$) | 8.0 | 10.6 | 10.8 | 12.3 | 9.4 | 14.8 | 16.1 | 17.5 | 18.1 |
| Adiabatic flame temperature | | (°C) | 629 | 750 | 759 | 814 | 698 | 836 | 876 | 913 | 930 |
| Combustion stability | | | × | ○ | ○ | ○ | Δ | ○ | ○ | ○ | ○ |
| *1 In the case of Invention example, the gas composition after mixing with hydrogen<br>*2 In the case of Invention example, the amount of gas after mixing with hydrogen | | | | | | | | | | | |

[EXAMPLE 2]

Test apparatuses of combustion burners including the different number of nozzle pipes constituting the gas nozzle for the fuel gas and the combustion-supporting gas were used, and a combustion test was performed under the condition shown in Table 4 by using a fuel gas (hydrogen-mixed fuel gas) and a combustion-supporting gas (air). Here, the combustion burner in which each gas nozzle is formed from one (single) nozzle pipe is a burner including gas nozzles having a structure as in the embodiment shown in Fig. 13 and Fig. 14, and the combustion burner in which each gas nozzle is formed from a plurality of nozzle pipes is a burner including gas nozzles having a structure as in the embodiment shown in Fig. 16 to Fig. 19.

Regarding the combustion chamber of each combustion burner, the inside diameter was 50 mm, the total length was 700 mm, the number of nozzle pipes constituting each of the gas nozzle for the fuel gas and the gas nozzle for the combustion-supporting gas was 5 as for Test example 1, 4 as for Test example 2, 2 as for Test example 3, 1 as for Test example 4, 4 as for Test example 5, and 2 as for Test example 6.

Regarding the combustion burners used in Test examples 1 to 4, the inside diameter of the nozzle pipe constituting the gas nozzle for injecting the fuel gas was 10 mm and the inside diameter of the nozzle pipe constituting the similar gas nozzle for injecting the combustion-supporting gas was 10 mm. Regarding the combustion burner used in Test example 5, the inside diameter of the nozzle pipe constituting the gas nozzle for injecting the fuel gas was 6 mm and the inside diameter of the nozzle pipe constituting the similar gas nozzle for injecting the combustion-supporting gas was 6 mm. Regarding the combustion burner used in Test example 6, the inside diameter of the nozzle pipe constituting the gas nozzle for injecting the fuel gas was 10 mm and the inside diameter of the nozzle pipe constituting the similar gas nozzle for injecting the combustion-supporting gas was 10 mm.

A blast furnace gas (hydrogen-mixed blast furnace gas) used as the fuel gas had a gas composition of $CO$: 22 percent by volume, $CO_2$: 21 percent by volume, $H_2$: 5 percent by volume, and $N_2$: 52 percent by volume and a calorific value of 792 kcal/$Nm^3$. Relative to 30 $Nm^3$/h of this fuel gas, 19.5 $NM^3$/h of air serving as a combustion-supporting gas was supplied in such a way that the theoretical amount of oxygen became 1. The pressure in the furnace of the applied test furnace was 245 kPa.

In Test example 6, a combustion burner in which a gas nozzle (inside diameter 20 mm) for a diluent gas was disposed at the position 500 mm in the burner axis direction from the center of the position of injection of the fuel gas·combustion-supporting gas was used, and 33.8 $Nm^3$/h of diluent gas (blast furnace gas) was supplied in such a way that the temperature of the combustion exhaust gas discharged from the combustion chamber became 800°C. The CO (reducing gas) content in the combustion gas composition became 10.3 percent by volume by addition of the diluent gas.

In Test examples 1 to 6, observation of the inside of the combustion chamber (observation through a sight glass shown in Fig. 8) and gas composition analysis of the combustion exhaust gas were performed, and the combustion state was evaluated on the basis of the following criteria. The results thereof are shown in Table 3 together with the configuration of the gas nozzle, the gas flow rate, the swirl number Sw, the combustion gas composition (in Test example 6, the gas composition after addition of the diluent gas), and the like.

    x: Pulsation was observed in the combustion state and a significant amount of unburned Co was measured.

    ○: Stable combustion continued and unburned CO was hardly measured (where the CO concentration in Test example 6 was due to mixing with the diluent gas)

[Table 4]

Table 4

| | | | Test example 1 | Test example 2 | Test example 3 | Test example 4 | Test example 5 | Test example 6 |
|---|---|---|---|---|---|---|---|---|
| The number of nozzle pipes of gas nozzle | Fuel gas | (-) | 5 | 4 | 2 | 1 | 4 | 2 |
| | Combustion-supporting gas | (-) | 5 | 4 | 2 | 1 | 4 | 2 |

(continued)

|  |  |  | Test example 1 | Test example 2 | Test example 3 | Test example 4 | Test example 5 | Test example 6 |
|---|---|---|---|---|---|---|---|---|
| Gas flow rate | Fuel gas | (m/s) | 6.1 | 7.6 | 15.2 | 30.3 | 21.1 | 15.2 |
|  | Combustion-supporting gas | (m/s) | 3.9 | 4.9 | 9.8 | 19.6 | 13.6 | 9.8 |
| Swirl number (-) |  |  | 2.6 | 3.3 | 6.6 | 13.1 | 9.1 | 6.6 |
| Combustion gas composition (on dry basis) | $N_2$ | (vol%) | 70.6 | 70.6 | 70.6 | 70.6 | 70.6 | 67.4 |
|  | $CO_2$ | (vol%) | 29.4 | 29.4 | 29.4 | 29.3 | 29.4 | 17.9 |
|  | CO | (vol ppm) | 1800 | 0 | 0 | 3100 | 30 | 10.3*1 |
|  | $H_2$ | (vol%) | 0.0 | 0.0 | 0.0 | 0.0 | 0.0 | 2.3 |
|  | $O_2$ | (vol%) | 0.0 | 0.0 | 0.0 | 0.0 | 0.0 | 0.0 |
| Combustion exhaust gas temperature | | (°C) | 1150 | 1198 | 1198 | 1120 | 1190 | 800 |
| Evaluation of combustion state | | | × | ○ | ○ | × | ○ | ○ |
| *1 CO concentration in Test example 6 is expressed in % | | | | | | | | |

[EXAMPLE 3]

Regarding a blast furnace having a volume in a furnace of 5,000 m³, the present invention was executed according to the embodiment shown in Fig. 20 by using the gas combustion and injection device a as shown in Fig. 13 and Fig. 14. The operation condition was specified to be the amount of injection of pulverized coal: 130 kg/t, the coke ratio: 320 kg/t, and the blowing temperature: 1,150°C (moisture: 10 g/Nm³), and high-reactivity coke was used. A blast furnace gas (CO: 17.7 percent by volume, $CO_2$: 23.1 percent by volume, $H_2$: 2.4 percent by volume, $H_2O$: 3.6 percent by volume, and $N_2$: 53.2 percent by volume) taken from the downstream side of the furnace top gas power generation apparatus 24 was pressurized with a booster 25a to a pressure 0.2 atm higher than the pressure in the furnace and was introduced as a fuel gas into the gas combustion and injection device a constituting a gas injection portion A. At that time, hydrogen was added to the blast furnace gas in such a way that the hydrogen concentration became 4.0 percent by volume, so as to produce a hydrogen-mixed fuel gas. Furthermore, air was pressurized with a booster 25b and was introduced as a combustion-supporting gas into the gas combustion and injection device a.

In the combustion·injection apparatus a, combustion of 100 Nm³/t of hydrogen-mixed fuel gas was performed with 37.8 Nm³/t of air, so as to generate a combustion gas at 800°C, and the combustion gas was injected as a preheating gas into the furnace. The oxygen ratio in the gas combustion and injection device a was 0.736 (relative to the theoretical amount of oxygen). The composition of the preheating gas was CO: 3.5 percent by volume, $CO_2$: 27.3 percent by volume, $H_2$: 0.8 percent by volume, $H_2O$: 5.0 percent by volume, and $N_2$: 63.3 percent by volume. The furnace top gas temperature became 149°C by injecting the above-described preheating gas, condensation of moisture in the pipe was avoided completely in the blast furnace operation, and a stable operation was able to be performed. In the case where the preheating gas is not injected, the result of calculation on the basis of the mass and heat balance is 97°C.

[EXAMPLE 4]

Regarding a blast furnace having a volume in a furnace of 5,000 m³, the present invention was executed according to the embodiment shown in Fig. 20 by using the gas combustion and injection device a as shown in Fig. 16 to Fig. 19. The blast furnace operation condition was specified to be the same as that in Example 3. A blast furnace gas (CO: 17.7 percent by volume, $CO_2$: 23.1 percent by volume, $H_2$: 2.4 percent by volume, $H_2O$: 3.6 percent by volume, and $N_2$: 53.2 percent by volume) taken from the downstream side of the furnace top gas power generation apparatus 24 was pressurized with a booster 25a to a pressure 0.2 atm higher than the pressure in the furnace and was introduced as a fuel gas into the gas combustion and injection device a constituting a gas injection portion A. At that time, hydrogen was added to the blast furnace gas in such a way that the hydrogen concentration became 4.0 percent by volume, so as to produce a hydrogen-mixed blast furnace gas. Furthermore, air was pressurized with a booster 25b and was introduced as a combustion-supporting gas into the gas combustion and injection device a.

In the combustion·injection apparatus a, combustion of 73.6 $Nm^3/t$ of hydrogen-mixed blast furnace gas was performed with 37.8 $Nm^3/t$ of air (oxygen ratio 1.0) and, in addition, 26.4 $Nm^3/t$ of diluent gas (BFG) was supplied into the combustion chamber, so as to generate a combustion gas at 800°C. The combustion gas was injected as a preheating gas into the furnace. The composition of the preheating gas was the same as that in Example 3. The furnace top gas temperature became 147°C by injecting the above-described preheating gas, condensation of moisture in the pipe was avoided completely in the blast furnace operation, and a stable operation was able to be performed. In the case where the preheating gas is not injected, the result of calculation on the basis of the mass and heat balance is 97 °C.

[Third, unclaimed, embodiment]

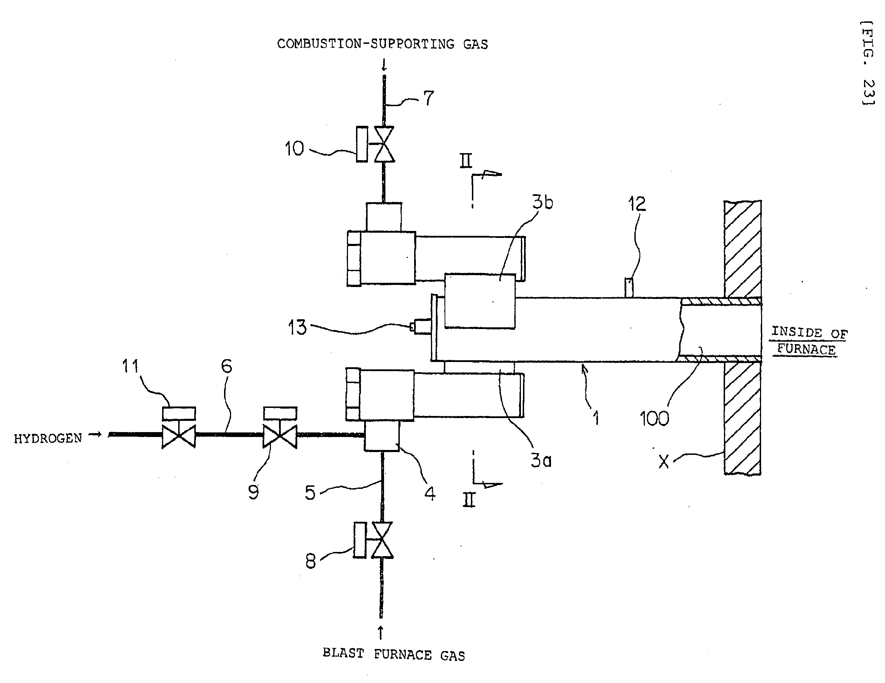

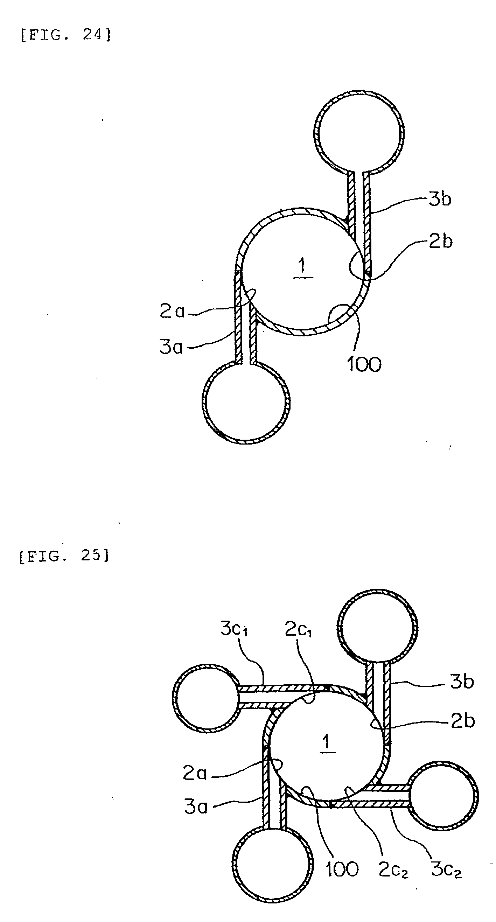

Fig. 23 and Fig. 24 show an embodiment of a combustion burner (tubular flame burner) used in the present invention. Fig. 23 is a partial cutaway plan view and Fig. 24 is a sectional view of the section taken along a line II-II shown in Fig. 1.

In the drawing, reference numeral 1 denotes a tubular (cylindrical) combustion chamber with an open end, reference numeral 3a denotes a gas nozzle for a fuel gas, and reference numeral 3b denotes a gas nozzle for a combustion-supporting gas.

Openings 2a and 2b (nozzle ports) to inject the fuel gas and the combustion-supporting gas, respectively, are disposed in an inside wall surface 100 in the inner part (rear end side) of the above-described combustion chamber 1 in such a way that a swirling gas flow (swirling gas flow along the circumferential direction of the inside wall surface 100) occurs in the combustion chamber. The above-described gas nozzles 3a and 3b are connected to these openings 2a and 2b, respectively. The above-described openings 2a and 2b (nozzle ports) are disposed in such a way that gases are injected in directions diverted from the axis center of the combustion chamber 1 (eccentric direction) and that the gases injected into the combustion chamber 1 form thereby a swirling flow. The openings 2a and 2b according to the present embodiment are disposed in such a way as to inject the fuel gas and the combustion-supporting gas, respectively, nearly in the tangential directions of the inside wall surface 100.

The above-described openings 2a and 2b are formed having the shape of a slit along the pipe axis direction and are disposed at 180° opposite positions in the inside wall surface 100 (inside circumference surface). A plurality of openings 2a and a plurality of openings 2b may be disposed. In that case, the individual openings 2a and 2b are connected to their respective gas nozzles 3a and 3b.

A mixing chamber 4 to mix a blast furnace gas and hydrogen is disposed in a gas introduction portion of the gas nozzle 3a. A blast furnace gas supply pipe 5 and a hydrogen supply pipe 6 are connected to this mixing chamber 4. Meanwhile, a combustion-supporting gas supply pipe 7 is connected to a gas introduction portion of the gas nozzle 3b.

In addition, in the drawing, reference numerals 8 to 10 denote flow rate control valves disposed in the blast furnace gas supply pipe 5, the hydrogen supply pipe 6, and the combustion-supporting gas supply pipe 7, respectively, reference numeral 11 denotes a flow meter disposed in the hydrogen supply pipe 6, reference numeral 12 denotes a combustion state detector to detect the combustion state in the combustion chamber 1, and reference numeral 13 denotes an ignition plug. The above-described combustion state detector 12 may employ, for example, a system in which a thermocouple or the like is inserted into a flame to measure a temperature or an optical system in which ultraviolet rays in a flame is detected by using ultra vision. Furthermore, reference numeral x denotes a furnace body provided with the combustion burner.

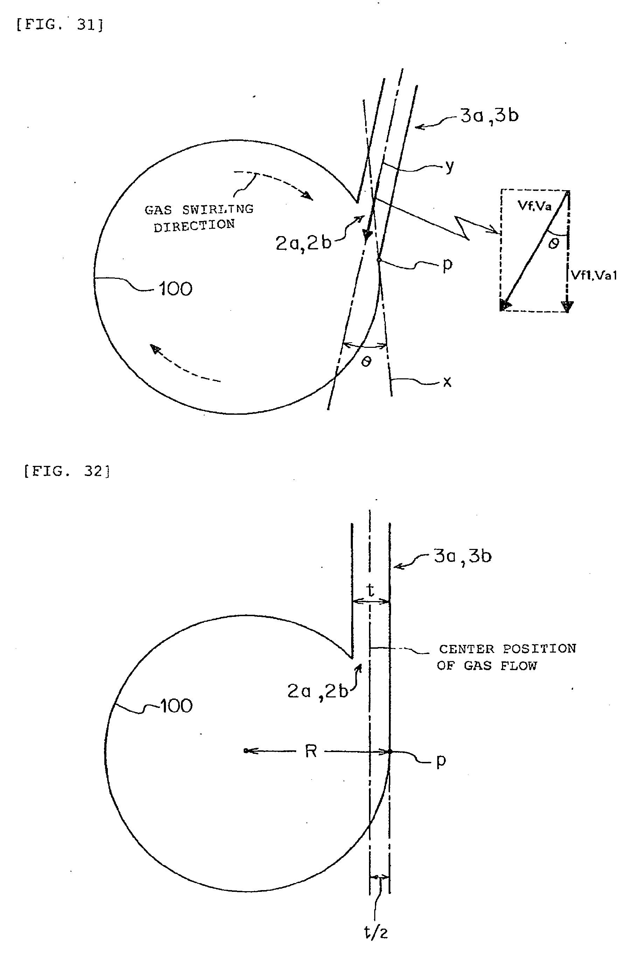

Here, the fuel gas and the combustion-supporting gas may be injected from the openings 2a and 2b (nozzle ports), respectively, in such a way that a swirling gas flow (swirling gas flow along the circumferential direction of the inside wall surface 100) occurs in the combustion chamber 1. In particular, preferably, the directions of the gas injection from the openings 2a and 2b are set in such a way that the swirl number Sw (a dimensionless number representing the intensity of swirling with respect to a flow of a fluid associated with swirling) of the swirling gas flow becomes within a preferable range described later. Fig. 31 schematically shows a section in a diameter direction of the inside of the combustion chamber at a position at which the opening 2a, 2b is disposed. Regarding such a section in a diameter direction of the combustion chamber 1, it is preferable that a gas injection angle $\theta$ is set in such a way that the swirl number Sw becomes within the preferable range (Sw: 3 to 10), where among end portions of the opening 2a, 2b in the circumferential direction of the inside wall surface 100, the end portion on the end side in the swirling (rotation) direction of the gas flow, which is discharged from the opening 2a, 2b so as to swirl, is specified to be point p, a tangential line of the inside wall surface 100 at this point p is specified to be x, the center line of the gas flow discharged from the opening 2a, 2b (= axis center of the gas nozzle 3a, 3b) is specified to be y, and the angle between the tangential line x and the gas flow center line y is specified to be the gas injection angle $\theta$. That is, the fuel gas velocity component Vf1 and the combustion-supporting gas velocity component Va1 in the tangential line x direction satisfy the following, where the fuel gas velocity at the opening 2a, calculated from the inside diameter of the gas nozzle 3a, is specified to be Vf and the combustion-supporting gas velocity at the opening 2b, calculated from the inside diameter of the gas nozzle 3b, is specified to be Va.

$$Vf1 = Vf \times \cos\theta$$

$$Va1 = Va \times \cos\theta$$

Then, preferably, the gas injection angle $\theta$ is determined in such a way that the swirl number Sw calculated on the basis of the Vf1 and Va1, which are assumed to be the gas velocities at the openings 2a and 2b, becomes within the predetermined preferable range. The method for determining the swirl number Sw is as described later.

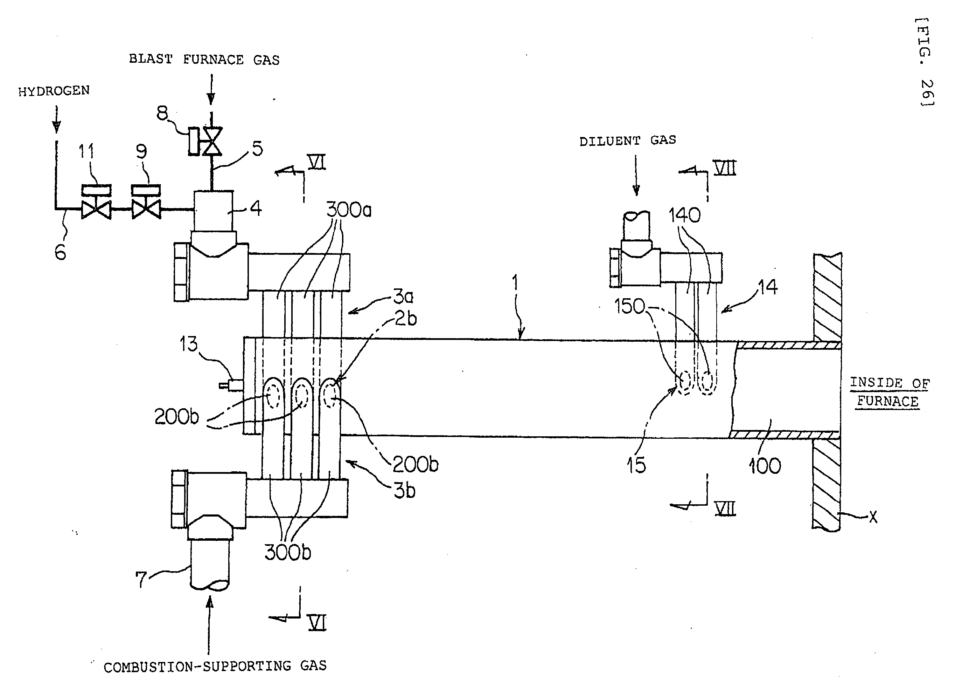

Meanwhile, from the viewpoint of the structure of the combustion burner, it is preferable that the combustion burner has a structure in which the openings 2a and 2b to inject the fuel gas and the combustion-supporting gas, respectively, nearly in the tangential direction of the inside wall surface 100 are disposed in the inside wall surface of the combustion chamber 1. This is because such a structure can realize the preferable swirl number Sw regardless of modifications and changes of the amount of gas and the gas velocity. Specifically, it is desirable that the gas injection angle $\theta$ shown in Fig. 32 is specified to be 30° or less, and more preferably 10° or less. If this gas injection angle $\theta$ increases, there is a possibility that an appropriate swirling gas flow along the inside wall surface 100 is not formed depending on the amount of the gas and the gas velocity. Regarding each of the present embodiment, an embodiment shown in Fig. 25 described later, and an embodiment shown in Fig. 26 to Fig. 29, the gas injection angle $\theta$ is about 0° to 5°.

According to the present invention, regarding the above-described tubular flame burner, in the case where a blast furnace gas is used as a fuel gas, hydrogen is added to the blast furnace gas for facilitating stable combustion thereof. This hydrogen may be added as a pure hydrogen gas, or be added as a hydrogen-containing gas (hereafter in the present specification, a term "hydrogen (added to a blast furnace gas)" includes "a hydrogen-containing gas"). It is necessary that the hydrogen concentration of this hydrogen-containing gas is more than the hydrogen concentration of the blast furnace gas (usually, $H_2$ concentration: 2 to 3 percent by volume), as a matter of course. The hydrogen concentration of the hydrogen-containing gas is not specifically limited except this point. However, in general, it is preferable that a hydrogen-containing gas having a hydrogen concentration of 20 percent by volume or more is used. Among gases generated in iron and steel processes, for example, a coke battery gas obtained in production of coke has particularly high hydrogen concentration (usually about 55 percent by volume) and is suitable for the hydrogen-containing gas.

In order to add hydrogen to the blast furnace gas, regarding the combustion burner shown in Fig. 23 and Fig. 24, the blast furnace gas and hydrogen are supplied to the mixing chamber 4 of the gas nozzle 3a through the blast furnace gas supply pipe 5 and the hydrogen supply pipe 6, and hydrogen is mixed into the blast furnace gas here. The resulting hydrogen-mixed blast furnace gas (blast furnace gas mixed with hydrogen, the same holds true hereafter) enters the nozzle main body. Meanwhile, the combustion-supporting gas is supplied to the gas nozzle 3b through the combustion-supporting gas supply pipe 7. The hydrogen-mixed blast furnace gas and the combustion-supporting gas supplied to the gas nozzles 3a and 3b, as described above, are injected into the combustion chamber 1 from the openings 2a and 2b (nozzle ports). Combustion is performed while this hydrogen-mixed blast furnace gas and the combustion-supporting gas form a swirling flow along the inside wall surface 100 of the combustion chamber 1 and, thereby, a flame is formed. In this regard, the above-described combustion is started by ignition with the ignition plug 13, and in the case where combustion continues, ignition with the ignition plug 13 is finished at that point in time.

In the case where the calorific value of the blast furnace gas is fluctuated, for example, the calorific value is reduced, and thereby, the combustion state detected by the combustion state detector 12 is not stabilized, the amount of supply of hydrogen is increased by the flow meter 11 and the flow rate control valve 9 disposed in the hydrogen supply pipe 6.

In this regard, as for this combustion burner, a gas in which the blast furnace gas and the combustion-supporting gas are mixed in advance (premixed gas) may be used. In this case, at least one opening 2 (nozzle port) to inject the premixed gas of the fuel gas and the combustion-supporting gas in such a way that a swirling gas flow (swirling gas flow along the circumferential direction of the inside wall surface 100) occurs in the combustion chamber 1 is disposed in the inside wall surface 100 of the combustion chamber 1, and a gas nozzle 3 to supply the premixed gas is connected to this opening 2. The above-described opening 2 is disposed in such a way that the gas is injected in a direction diverted from the axis center of the combustion chamber 1 (eccentric direction) and that the gas injected into the combustion chamber 1 forms thereby a swirling flow, in the same manner as the opening 2a, 2b shown in Fig. 23 and Fig. 24. In particular, it is preferable that the opening 2 is disposed in such a way as to inject the gas (premixed gas) nearly in the tangential direction of the inside wall surface 100. Then, hydrogen is added to the blast furnace gas before premixing with the combustion-supporting gas or the premixed gas. The premixed gas containing hydrogen added, as described above, is injected into the combustion chamber 1 from the opening 2 through the gas nozzle 3. By the way, the gas is injected from this opening 2 in such a way that a swirling gas flow (swirling gas flow along the circumferential direction of the inside wall surface 100) occurs in the combustion chamber 1. The preferable method for setting the gas injection direction and the preferable gas injection angle θ from the viewpoint of the burner structure are the same as that described above with respect to the opening 2a, 2b on the basis of Fig. 31.

In the above-described combustion burner, the hydrogen-mixed blast furnace gas and the combustion-supporting gas (or the premixed gas of the two), which are injected into the combustion chamber 1 from the gas nozzles 3a and 3b and the openings 2a and 2b and which form a swirling flow, are stratified on the basis of a difference in density of the gas, and gas layers having different densities are generated in both sides of a flame. That is, a high-temperature combustion exhaust gas is present in the axis center side where the swirling velocity is small and an unburned gas is present in the inside wall surface 100 side where the swirling velocity is large. Furthermore, in the vicinity of the inside wall surface 100, a flame cannot remain in the vicinity of the inside wall surface because the swirling velocity is larger than the flame propagation velocity. Consequently, a tubular flame is formed in the combustion chamber 1 stably. Moreover, an unburned gas is present in the vicinity of the inside wall surface of the combustion chamber 1, so that the inside wall surface of the combustion chamber 1 is not heated to a high temperature due to direct heat transfer. Then, gases in the combustion chamber 1 flow toward the end side while swirling. In the meantime, gases in the inside wall surface 100 side are burned sequentially and are moved to the axis center side. The combustion gas is discharged from the open end.

The combustion velocity of hydrogen is very high as compared with those of other combustible gases, e.g., CO. Consequently, stable combustion of a blast furnace gas can be performed by adding hydrogen. Here, the maximum combustion potential (MCP) of a gas is determined on the basis of the composition thereof and is calculated by the following formulae.

[Mathematical expression 7]

$$MCP = \Sigma (S_i\, f_i\, A_i) / \Sigma (f_i\, A_i) \times (1-K)$$

$$K = \frac{\Sigma A_i}{\Sigma (\alpha_i\, A_i)} \left\{ \frac{2.5\, CO_2 + N_2 - 3.77\, O_2}{100 - 4.77\, O_2} + \left[ \frac{N_2 - 3.77\, O_2}{100 - 4.77\, O_2} \right]^2 \right\}$$

where $S_i$: combustion velocity of each of combustible gases in the gas, and the value is shown in Table described below
$f_i$: coefficient with respect to each of combustible gases in the gas, and the value is shown in Table described below
$A_i$: content of each of combustible gases in the gas (percent by volume)
K: attenuation coefficient
$\alpha_i$: correction coefficient of each of combustible gases in the gas, and the value is shown in Table described below
$CO_2$: content of carbon dioxide in the gas (percent by volume)
$N_2$: content of nitrogen in the gas (percent by volume)
$O_2$: content of oxygen in the gas (percent by volume)

[Table 5]

Table 5

| | $S_i$ | $f_i$ | $\alpha_i$ |
|---|---|---|---|
| $H_2$ | 282 | 1 | 1.33 |
| CO | 100 | 0.871 | 1.00 |
| $CH_4$ | 36 | 8.72 | 2.00 |
| $C_2H_6$ | 41 | 16.6 | 4.55 |
| $C_2H_4$ | 66 | 11.0 | 4.00 |
| $C_3H_8$ | 41 | 24.6 | 4.55 |

(continued)

|  | Si | fi | $\alpha i$ |
|---|---|---|---|
| $C_3H_6$ | 47 | 21.8 | 4.55 |
| $C_4H_{10}$ | 38 | 32.7 | 5.56 |
| $C_4H_8$ | 47 | 28.5 | 4.55 |

As for the MCP calculated by the above-described formulae, hydrogen is 282 and CO is 100, so that the combustion velocity of hydrogen is 2.8 times that of CO. Therefore, stable combustion of a blast furnace gas can be performed by adding hydrogen. Theoretically, combustion of the blast furnace gas continues insofar as the adiabatic flame temperature of the blast furnace gas is a temperature higher than or equal to the firing point of gas species contained in the blast furnace gas (CO firing point: 609°C, $H_2$ firing point: 500°C) or the concentration of the combustible gas contained in the blast furnace gas is more than or equal to the explosion lower limit concentration (CO explosion lower limit concentration: 12.5 percent by volume, $H_2$: 4 percent by volume). However, according to the study of the present inventors, it was found that regarding the low-calorific value gas containing CO, e.g., a blast furnace gas, stable combustion was able to be performed when the adiabatic flame temperature after addition of hydrogen became 750°C or higher. For example, regarding a blast furnace gas containing 18.2 percent by volume of CO, 26.9 percent by volume of $CO_2$, and 2.1 percent by volume of $H_2$ (the remainder is $N_2$), the calorific value is 612 kcal/Nm$^3$ and the adiabatic flame temperature is 746°C (air ratio 0.7), so that combustion does not continue stable in this state and a pilot burner is required separately for supporting combustion. The adiabatic flame temperature becomes 784°C by adding hydrogen to this gas in such a way that the $H_2$ content becomes 4.2 percent by volume, so that stable combustion can continue. The adiabatic flame temperature is a temperature theoretically calculated on the assumption that the heat generated by combustion is not lost to the outside and is used for raising the temperature of the combustible gas.

Therefore, regarding the blast furnace gas, it is preferable that hydrogen is added in such a way that the adiabatic flame temperature becomes 750°C or higher. Meanwhile, as the amount of addition of hydrogen increases, the stability in combustion is enhanced correspondingly, but if the amount of addition of hydrogen is too large, the economy is impaired.

Furthermore, in the combustion method according to the present invention, in the case where the combustion chamber 1 is brought into the pressurized state, the gas density increases and, thereby, an apparent calorific value increases. Consequently, regarding even a blast furnace gas, more stable combustion can be performed.

In the present invention, oxygen-containing gases, e.g., air, and an oxygen gas can be used as the combustion-supporting gas. The present invention is particularly useful in the case where the air is used as the combustion-supporting gas. The amount of supply of the combustion-supporting gas is the amount required for maintaining a stable combustion state. In the case where the air is used as the combustion-supporting gas, usually, the air is supplied in such a way that the air ratio becomes 1 or more. The air ratio refers to a ratio of the amount of actually supplied air to the amount of air theoretically required for combustion of the fuel (actual amount of air/theoretical amount of air). Complete combustion of the fuel gas occurs at the air ratio of 1, and $CO_2$ and $H_2O$ are generated. Incomplete combustion occurs under the condition of the air ratio of less than 1, and stable combustion cannot continue. Furthermore, in the case where the air ratio is excessive, lean burn occurs and in this case as well, a stable combustion state cannot be maintained. Therefore, usually, it is preferable that the combustion-supporting gas is supplied at the air ratio within the range of 1.0 to 1.5.

The ejection velocities of the fuel gas and the combustion-supporting gas from nozzles (openings) are not specifically limited, although it is preferable that the two are the same level of velocities.

In the embodiment shown in Fig. 23 and Fig. 24, hydrogen is added to the blast furnace gas before injection into the combustion chamber 1. However, hydrogen may be added to the blast furnace gas injected into the combustion chamber 1 (that is, hydrogen is added to the blast furnace gas in the combustion chamber 1). Fig. 25 is a sectional view showing an embodiment of the combustion burner used in this case (a sectional view of the section taken along the same section line as that of Fig. 24). Regarding this combustion burner, the same openings 2a and 2b as those shown in Fig. 24 are disposed in an inside wall surface 100 in the inner part (rear end side) of the combustion chamber 1 and, in addition, openings $2c_1$ and $2c_2$ (nozzle ports) to inject hydrogen (a hydrogen gas or a hydrogen-containing gas, the same holds true hereafter) in such a way that a swirling gas flow (swirling gas flow along the circumferential direction of the inside wall surface 100) occurs in the combustion chamber 1 are disposed at center positions between the opening 2a and the opening 2b in the circumferential direction of the inside wall surface 100 (that is, positions 90° from the openings 2a and 2b in the circumferential direction). Gas nozzles $3c_1$ and $3c_2$ for hydrogen are connected to these openings $2c_1$ and $2c_2$, respectively. In the same manner as the openings 2a and 2b, the above-described openings $2c_1$ and $2c_2$ (nozzle ports) are disposed in such a way that the gas (hydrogen) is injected in a direction diverted from the axis center of the combustion chamber 1 (eccentric direction) and that the gas injected into the combustion chamber 1 form thereby a swirling flow. The openings $2c_1$ and $2c_2$ according to the present embodiment are disposed in such a way as to inject hydrogen nearly in the tangential directions of the inside wall surface 100.

The above-described openings $2c_1$ and $2c_2$ are formed having the shape of a slit along the pipe axis direction in the same manner as the openings 2a and 2b. In this regard, any one of these openings $2c_1$ and $2c_2$ may be disposed, or at least three openings may be disposed. In that case, each opening 2c is connected to a gas nozzle 3c.

By the way, the gas (hydrogen) is injected from the openings $2c_1$ and $2c_2$ in such a way that a swirling gas flow (swirling gas flow along the circumferential direction of the inside wall surface 100) occurs in the combustion chamber 1. The preferable method for setting the gas injection direction and the preferable gas injection angle $\theta$ from the viewpoint of the burner structure are the same as that described above with respect to the opening 2a, 2b on the basis of Fig. 10.

Regarding such a combustion burner, hydrogen is injected into the combustion chamber 1 from the openings $2c_1$ and $2c_2$ through the gas nozzle 3c and, thereby, hydrogen is added to the blast furnace gas in the combustion chamber 1.

The other structures and functions of the combustion burner in the embodiment shown in Fig. 25 are the same as those of the combustion burner in the embodiment shown in Fig. 23 and Fig. 24 and, therefore, detailed explanations are omitted. In this regard, in the same manner as the combustion burner in the embodiment shown in Fig. 23 and Fig. 24, a gas in which the blast furnace gas and the combustion-supporting gas are mixed in advance (premixed gas) may be used. In this case, as described above, at least one opening 2 (nozzle port) to inject the premixed gas of the fuel gas and the combustion-supporting gas is disposed in place of the above-described openings 2a and 2b, and a gas nozzle 3 to supply the premixed gas is connected to this opening 2.

According to the present invention, the blast furnace gas containing hydrogen added and the combustion-supporting gas form a swirling flow in the combustion chamber 1 in the combustion burner and, thereby, stable combustion of the blast furnace gas can be performed. In particular, the blast furnace gas is a gas primarily containing $CO$, $CO_2$, and $N_2$, and hydrogen has a low gas density as compared with those components. Therefore, when hydrogen is injected in such a way as to form a swirling flow, as in the embodiment shown in Fig. 25, hydrogen moves to the axis center side because of the difference in density, combustion is performed preferentially, and combustion of the other gases are facilitated. Consequently, combustibility of the blast furnace gas can be further enhanced.

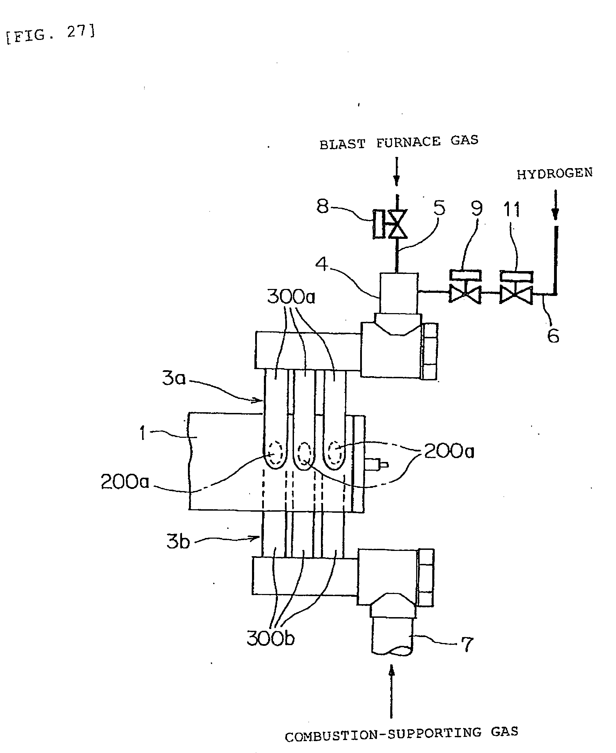

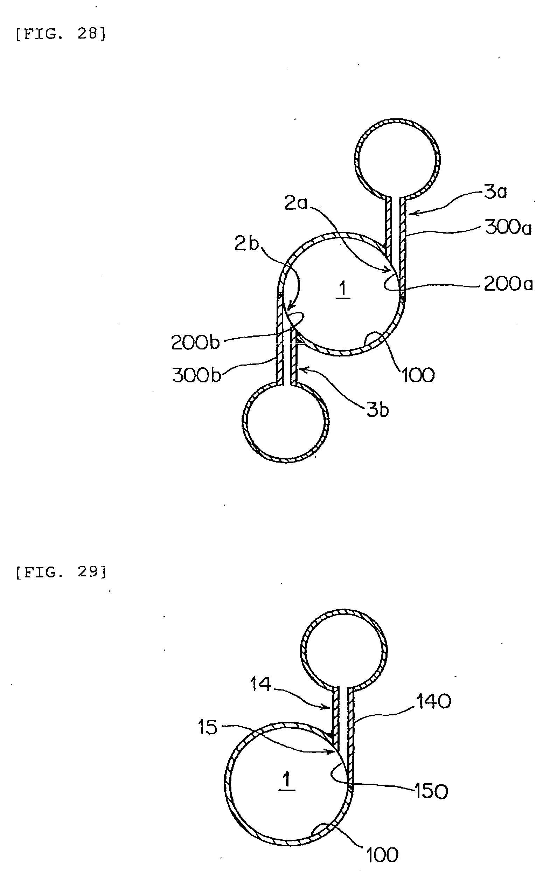

Fig. 26 to Fig. 29 show another embodiment of the combustion burner (tubular flame burner) used in the present invention. Fig. 26 is a partial cutaway plan view of the combustion burner. Fig. 27 is a bottom view partly showing the combustion burner. Fig. 28 is a sectional view of the section taken along a line VI-VI shown in Fig. 26. Fig. 29 is a sectional view of the section taken along a line VII-VII shown in Fig. 26.

In the embodiment shown in Fig. 26 to Fig. 29, a gas nozzle 3a for a fuel gas and a gas nozzle 3b for a combustion-supporting gas are formed from a plurality of nozzle pipes 300a and a plurality of nozzle pipes 300b, respectively, arranged in parallel in the burner axis direction. The gas nozzles 3a and 3b are formed from the plurality of nozzle pipes 300a and 300b, as described above, in order that the swirl number Sw is specified to be within a preferable range while an appropriate swirling flow is formed by the gas nozzles 3a and 3b in the combustion chamber 1, as described later.

In the same manner as the embodiment shown in Fig. 23 and Fig. 24, openings 2a and 2b (nozzle ports) to inject the fuel gas and the combustion-supporting gas, respectively, are disposed in an inside wall surface 100 in the inner part (rear end side) of the above-described combustion chamber 1 in such a way that a swirling gas flow (swirling gas flow along the circumferential direction of the inside wall surface 100) occurs in the combustion chamber 1. These openings 2a and 2b are also formed from a plurality of openings 200a and a plurality of openings 200b, respectively. Then, the individual above-described individual nozzle pipes 300a are connected to their respective openings 200a, and the above-described individual nozzle pipes 300b are connected to their respective openings 200b. The above-described openings 200a and 200b are disposed in such a way that gases are injected in directions diverted from the axis center of the combustion chamber 1 (eccentric direction) and that the gases injected into the combustion chamber 1 form thereby a swirling flow. The openings 200a and 200b according to the present embodiment are disposed in such a way as to inject the fuel gas and the combustion-supporting gas, respectively, nearly in the tangential directions of the inside wall surface 100.

Furthermore, a gas nozzle 14 to supply a diluent gas, which dilutes the combustion gas and which adjusts the temperature and/or the composition thereof, into the combustion chamber 1 is disposed at the position nearer to the end of the combustion chamber than are the above-described gas nozzles 3a and 3b (openings 2a and 2b). This gas nozzle 14 is to supply the gas to dilute the combustion gas and, therefore, the position of installation (connection) in the longitudinal direction of the combustion chamber is not specifically limited insofar as the position of installation does not hinder gas combustion in the combustion chamber 1. In the present embodiment, the gas nozzle 14 is disposed at the position nearer to the end of the combustion chamber than is the center position in the longitudinal direction of the combustion chamber.

The gas nozzle 14 may be formed from a single nozzle pipe. However, in the present embodiment, the gas nozzle 14 is formed from a plurality of nozzle pipes 140 arranged in parallel in the burner axis direction. An opening 15 (nozzle port) to inject the diluent gas nearly in the tangential direction of the inside wall surface 100 in such a way that a swirling gas flow (swirling gas flow along the circumferential direction of the inside wall surface 100) occurs in the combustion chamber 1 is disposed in the inside wall surface in the combustion chamber 1 at a position where the gas nozzle 14 is disposed. The above-described gas nozzles 14 is connected to the opening 15. In the present embodiment, the opening 15 is formed from a plurality of openings 150, each of the openings 150 is connected to the above-described nozzle pipe 140. The opening 15 may be a single opening in the shape of a slit along the pipe axis direction and be connected to a single gas nozzle 14. In this regard, the opening 15 for the diluent gas does not necessarily have a structure to inject the gas in such a way that a swirling gas flow occurs in the combustion chamber 1.

The other structures and functions of the combustion burner in the embodiment shown in Fig. 26 to Fig. 29 are the same as those of the combustion burner in the embodiment shown in Fig. 23 and Fig. 24 and, therefore, detailed explanations are omitted.

By the way, the gases are injected from the above-described openings 200a and 200b in such a way that a swirling gas flow (swirling gas flow along the circumferential direction of the inside wall surface 100) occurs in the combustion chamber 1. The preferable method for setting the gas injection direction and the preferable gas injection angle θ from the viewpoint of the burner structure are the same as that described above with respect to the opening 2a, 2b on the basis of Fig. 32.

Regarding the combustion burner used in the present invention, a high-temperature combustion gas is generated in the combustion chamber 1. For example, the theoretical combustion temperature of the blast furnace gas is about 1,300°C at an air ratio of 1.0. In the case where the present invention is applied to a blast furnace operating method, described later, and a combustion gas of a combustion burner is injected as a preheating gas into the blast furnace, it is preferable that the combustion gas is diluted and the temperature and the composition thereof are controlled in such a way that coke in the furnace is not consumed by $CO_2$ in the injected combustion gas, nor is iron ore (magnetite), which has been reduced in the furnace, reoxidized. In the present embodiment, for such a purpose, the diluent gas to adjust the temperature and/or the composition of the combustion gas is supplied from the gas nozzle 14 into the combustion chamber 1.

The type of the diluent gas used may be selected appropriately in accordance with the purpose of addition to the combustion gas (gas temperature control and/or gas composition control). From the viewpoint of adjusting the composition of the combustion gas, those containing reducing gas, e.g., CO and $H_2$, are preferable. For example, at least one type of a blast furnace gas, a converter gas, a coke battery gas, and the like can be used. In particular, it is preferable that a part of the blast furnace gas is taken and used as the diluent gas.

Moreover, in the case where a combustion gas of a combustion burner is injected as a preheating gas into the blast furnace, it is desirable that the temperature of the preheating gas is 500°C or higher, and preferably 800°C or higher, as described later. Therefore, preferably the temperature and the amount of supply of the diluent gas are selected in such a way that the above-described preheating gas temperature is obtained.

By the way, regarding a combustion burner having a gas nozzle to inject a premixed gas of the fuel gas and the combustion-supporting gas and a combustion burner having a gas nozzle 3c to inject hydrogen as in the embodiment shown in Fig. 3, those gas nozzles can be formed from a plurality of nozzle pipes arranged in parallel in the burner axis direction. Furthermore, regarding these combustion burners as well, the above-described gas nozzle 14 for a diluent gas and the opening 15 can be disposed.

In the blast furnace gas combustion method according to the present invention, it is preferable that the swirl number Sw of the gas flow in the combustion chamber 1 is specified to be within the range of 3 to 10. The swirl number is a dimensionless number representing the intensity of swirling with respect to a flow of a fluid associated with swirling, and as the swirl number Sw becomes large, the flow is associated with intense swirling. If the swirl number is too small, mixing of the fuel gas and the combustion-supporting gas becomes insufficient and ignition of the combustion gas becomes unstable. On the other hand, if the swirl number is too large, a combustion flame may be blown off. From the above-described point of view, the swirl number Sw is preferably within the range of 3 to 10.

The swirl number Sw can be calculated on the basis of the known basic formula to calculate the swirl number Sw and by a formula in accordance with the type and the form of use of the combustion burner employed. For example, in the case where the combustion burner having the opening 2a to inject the fuel gas and the opening 2b to inject the combustion-supporting gas is used, as in the embodiment shown in Fig. 23 and Fig. 24, the swirl number Sw can be determined by the following formula. In this regard, the fuel gas in the following formula refers to a hydrogen-mixed blast furnace gas.

[Mathematical expression 8]

$$Sw = \frac{(\rho a \cdot Qa \cdot Va + \rho f \cdot Qf \cdot Vf) \cdot Rb}{[(\rho a \cdot Qa + \rho f \cdot Qf) \cdot (Qa + Qf) \cdot Rb]/Ab}$$

where Rb: combustion chamber radius (m)
Ab: combustion chamber cross-sectional area (m$^2$)
pa: combustion-supporting gas·density (kg/m$^3$)
ρf: fuel gas density (kg/m$^3$)
Va: combustion-supporting gas velocity at opening (nozzle port) (m/s)
Vf: fuel gas velocity at opening (nozzle port) (m/s)
Qa: actual flow rate of combustion-supporting gas (m$^3$/s)
Qf: actual flow rate of fuel gas (m$^3$/s)

Meanwhile, in the case where the combustion burner having the opening to inject the premixed gas of the fuel gas and the combustion-supporting gas is used, the swirl number Sw can be determined by the following formula. In this regard, the premixed gas in the following formula refers to "fuel gas (blast furnace gas) + hydrogen + combustion-supporting gas".

[Mathematical expression 9]

$$Sw = \frac{(\rho m \cdot Qm \cdot Vm) \cdot Rb}{[(\rho m \cdot Qm) \cdot Qm \cdot Rb]/Ab}$$

where Rb: combustion chamber radius (m)
Ab: combustion chamber cross-sectional area (m$^2$)
pm: premixed gas density (kg/m$^3$)
Vm: premixed gas velocity at opening (nozzle port) (m/s)
Qm: actual flow rate of premixed gas (m$^3$/s)

Moreover, in the case where the combustion burner having the opening 2c to inject hydrogen in addition to the opening 2a to inject the fuel gas and the opening 2b to inject the combustion-supporting gas is used as in the embodiment shown in Fig. 25, the swirl number Sw can be determined by the following formula.

[Mathematical expression 10]

$$Sw = \frac{(\rho a \cdot Qa \cdot Va + \rho f \cdot Qf \cdot Vf + \rho h \cdot Qh \cdot Vh) \cdot Rb}{[(\rho a \cdot Qa + \rho f \cdot Qf + \rho h \cdot Qh) \cdot (Qa + Qf + Qh) \cdot Rb]/Ab}$$

where Rb: combustion chamber radius (m)
Ab: combustion chamber cross-sectional area (m$^2$)
pa: combustion-supporting gas density (kg/m$^3$)
pf: fuel gas density (kg/m$^3$)
ph: hydrogen (hydrogen gas or hydrogen-containing gas) density (kg/m$^3$)
Va: combustion-supporting gas velocity at opening (nozzle port) (m/s)
Vf: fuel gas velocity at opening (nozzle port) (m/s)
Vh: hydrogen (hydrogen gas or hydrogen-containing gas) velocity at opening (nozzle port) (m/s)
Qa: actual flow rate of combustion-supporting gas (m$^3$/s)
Qf: actual flow rate of fuel gas (m$^3$/s)
Qh: actual flow rate of hydrogen (hydrogen gas or hydrogen-containing gas) (m$^3$/s)

In the case where the swirl number Sw is specified to be within the above-described preferable range, it is preferable that, as in the embodiment shown in Fig. 26 to Fig. 29, the gas nozzle 3a for the fuel gas and the gas nozzle 3b for the combustion-supporting gas are formed from a plurality of nozzle pipes 300a and a plurality of nozzle pipes 300b, respectively, arranged in parallel in the burner axis direction. This is for the following reasons. For example, in the case of conditions of the combustion chamber inside diameter: 50 mm, the amount of the blast furnace gas: 30 Nm$^3$/h (gas density: 1.34 kg/Nm$^3$), the amount of air: 21.4 Nm$^3$/h (gas density: 1.29 kg/Nm$^3$), the air ratio: 1.1, and the pressure in the furnace: 245 kPa (pressure in the furnace where the combustion burner is disposed as the gas combustion and injection device a in a blast furnace, as in the blast furnace operating method described later), if each of the gas nozzles 3a and 3b are assumed to be formed from a single (one) nozzle pipe, when the swirl number Sw is 3, the inside diameter of the nozzle pipe (equivalent circle inside diameter, that is, the diameter of a circle having the cross-sectional area equal to the cross-sectional area in the inside of the nozzle pipe, and hereafter a term "inside diameter of nozzle pipe" refers to the same) is 21 mm as for the gas nozzle 3a (the fuel gas velocity at the opening 2a: 7 m/s) and is 21 mm as for the gas nozzle 3b (the combustion-supporting gas velocity at the opening 2b: 5 m/s). However, in the case where each of the gas nozzles 3a and 3b is formed from a single nozzle pipe, as described above, in the sectional view of the section taken along the line II-II shown in Fig. 23, the inside diameter of the nozzle pipe becomes about four-tenths of the inside diameter of the combustion chamber, the flows toward the center (axis center) of the combustion chamber increase with respect to both the fuel gas and the combustion-supporting gas, and a good swirling flow is not formed easily. Consequently, the high-temperature combustion exhaust gas present in the axis center side may be cooled, so that the effects of the present invention may be reduced. Fig. 32 schematically shows a section in a diameter direction of the inside of the combustion chamber at the position where the opening 2a, 2b is disposed. The center position of the gas flow injected from the opening 2a, 2b (= axis center of the gas nozzle 3a, 3b) is the position at a distance of (R - t/2) from the center of the combustion chamber 1, where the radius of the combustion chamber 1 is represented by R and the inside width or the actual inside diameter of the gas nozzle 3a, 3b in the diameter direction of the combustion chamber is represented by t. Here, if t increases relative to R, a flow toward the center of the combustion chamber (axis center) increases. Consequently, a good swirling flow is not formed easily and a tubular flame is formed at a position apart from a pipe wall, so that combustion tends to become unstable. From this point of view, it is preferable that (R - t/2)/R $\geq$ 0.8 is satisfied, although the above-described example is out of this preferable condition.

On the other hand, in the case where the gas nozzle 3a, 3b is formed from a plurality of nozzle pipes 300a, 300b arranged in parallel in the burner axis direction, the inside diameter per nozzle pipe becomes small, so that the above-described problems do not occur easily, and it is possible to generate a good swirling flow while the swirl number Sw is specified to be within the preferable range. Consequently, it is preferable that the gas nozzle 3a for the fuel gas and the gas nozzle 3b for the combustion-supporting gas are formed from a plurality of nozzle pipes 300a and a plurality of nozzle pipes 300b, respectively, arranged in parallel in the burner axis direction. For the same reason, regarding the combustion burner having the gas nozzle to inject the premixed gas of the fuel gas and the combustion-supporting gas and the combustion burner having the gas nozzle 3c to inject a hydrogen gas, as in the embodiment shown in Fig. 3, it is preferable that those gas nozzles are formed from a plurality of nozzle pipes arranged in parallel in the burner axis direction.

Next, a blast furnace operating method, to which a blast furnace gas combustion method by using the above-described combustion burner is applied, will be described.

A blast furnace operating method according to the present invention relates to a blast furnace operating method, in which air or oxygen-enriched air is brown from a tuyere, that is, an operation of a normal blast furnace. In the case where the oxygen-enriched air is blown from the tuyere, usually, an operation is performed at an oxygen enrichment of 20 percent by volume or less, and preferably 10 percent by volume or less. In this regard, as the oxygen enrichment increases, the amount of gas passing through the furnace is reduced and the amount of injection gas required for raising the temperature of the upper portion of the shaft increases significantly. From this point of view as well, an operation at the above-described oxygen enrichment is preferable.

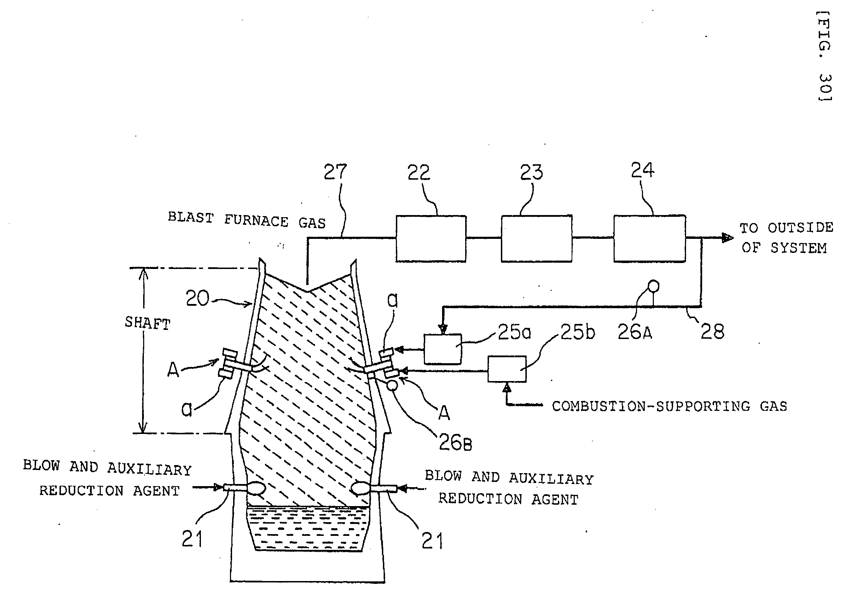

Fig. 30 is an explanatory diagram schematically showing an embodiment of a blast furnace operating method according to the present invention. In the drawing, reference numeral 20 denotes a blast furnace and reference numeral 21 denotes a tuyere thereof. A hot gas and an auxiliary reduction agent (for example, pulverized coal or LNG) are injected into the furnace from this tuyere 21.

A blast furnace gas discharged from the furnace top portion of the blast furnace 20 (furnace top gas) is led to a furnace top gas power generation apparatus 24 after dust is removed with a dust catcher 22 serving as a gas cleaning apparatus and moisture is removed with a mist separator 23 serving as the gas cleaning apparatus. The pressure of the furnace top gas is recovered as electricity and, subsequently, the furnace top gas is led to the outside of the system.

In the present invention, a gas is injected into the blast furnace from a gas injection portion A disposed in a shaft portion (preferably, a shaft middle portion to upper portion). The main purpose of injection of the gas into the furnace in such a manner is to supplement a reduction in the amount of blowing due to a low RAR operation and, thereby, ensure the flow rate in the furnace upper portion. However, injection of a gas at a temperature which unnecessarily decreases the furnace top gas temperature goes against the aims of the invention. Therefore, a preheating gas is used as the injection gas.

In injection of the preheating gas from the gas injection portion A into the blast furnace as described above, according to the present invention, the gas injection portion A is formed from a gas combustion and injection device a in which an end of the above-described combustion chamber of the combustion burner (for example, any one of the combustion burner shown in Fig. 23 and Fig. 24, the combustion burner shown in Fig. 25, and the combustion burner shown in Fig. 26 to Fig. 29) is communicated with the inside of the blast furnace, and a combustion gas of the gas combustion and injection device a is injected as the preheating gas into the blast furnace. That is, in Fig. 23 and Fig. 26, reference numeral x denotes a furnace body of the blast furnace 20 and the gas combustion and injection device a is formed by mounting the combustion burner on the furnace body x in such a way that the end of the combustion chamber 1 is communicated with the inside of the blast furnace.

The basic structure of such a gas combustion and injection device a has been known as a tubular flame burner. However, this tubular flame burner has been developed and used for furnaces and combustion apparatuses and, therefore, an application to a gas injection device of the blast furnace has not been studied at all. Furthermore, in recent years, the blast furnace operation has been performed under a high-pressure condition and, therefore, it is necessary that the preheating gas is injected after the pressure is raised to a pressure higher than the pressure in the furnace at the position of the injection. However, the tubular flame burner is predicated on use in the state of normal pressure, and the use under the above-described pressure condition has not been studied at all. On the other hand, according to the present invention, it was found that a tubular flame burner type gas combustion and injection device a had a very excellent function as a device for preheating a blast furnace gas through combustion and injecting this from a shaft portion of a blast furnace into the furnace. Moreover, it was found that in the case where a blast furnace gas is used as a fuel gas, stable combustion was able to be performed by adding hydrogen to the blast furnace gas, as described above.

Regarding the embodiment shown in Fig. 30, a part of a blast furnace gas, which is discharged from the furnace top portion and, thereafter, which is passed through the gas cleaning apparatus (the dust catcher 22 and the mist separator 23) and the furnace top gas power generation apparatus 24, is taken and introduced as a fuel gas into the gas combustion and injection device a constituting the gas injection portion A after being pressurized with a booster 25a. In the case where hydrogen is mixed into the blast furnace gas, hydrogen is introduced into a pipe of the blast furnace gas directly or hydrogen is mixed into the blast furnace gas by using a mixer, although not shown in the drawing, so as to produce a hydrogen-mixed blast furnace gas. Regarding a flow path 27 of the blast furnace gas discharged from the furnace top portion of the blast furnace 20, a flow path 28 to supply a part of the blast furnace gas to the gas combustion and injection device a is branched from a flow path portion on the downstream side of the furnace top gas power generation apparatus 24.

Meanwhile, a combustion-supporting gas, which is an oxygen-containing gas (air, oxygen-enriched air, high-oxygen concentration gas, or the like), is supplied to the gas combustion and injection device a. This combustion-supporting gas is also pressurized with a booster 25b and, thereafter, is introduced into the gas combustion and injection device a. In this regard, in the case where a premixed gas of a blast furnace gas and a combustion-supporting gas is used in the gas combustion and injection device a, the blast furnace gas and the combustion-supporting gas may be pressurized in advance with the boosters 25a and 25b separately, or the premixed gas may be pressurized with a single booster 25. In this case, hydrogen is introduced (or hydrogen is mixed by a mixer) into the blast furnace gas before premixing with the combustion-supporting gas or hydrogen is introduced (or hydrogen is mixed by a mixer) into the premixed gas.

Meanwhile, in the case of the combustion burner shown in Fig. 25, hydrogen is pressurized with a booster. Thereafter, hydrogen is introduced into the gas combustion and injection device a separately from the blast furnace gas and is injected into the combustion chamber thereof.

Furthermore, in the case of the combustion burner shown in Fig. 26 to Fig. 29, the diluent gas is supplied from the gas nozzle 14 into the combustion chamber 1 in order to dilute the combustion gas and control the temperature and the composition thereof in such a way that coke is not consumed by $CO_2$ in the combustion gas injected into the blast furnace, nor is iron ore (magnetite), which has been reduced in the furnace, reoxidized. As described above, as for the diluent gas, those containing reducing gases, e.g., CO and $H_2$, are preferable. For example, at least one type of a blast furnace gas, a converter gas, a coke battery gas, and the like can be used. Most of all, it is preferable that a part of the blast furnace gas is taken and used as the diluent gas. Moreover, it is desirable that the temperature of the preheating gas is 500°C or higher, and preferably 800°C or higher. Therefore, the temperature and the amount of supply of the diluent gas are selected in such a way that the above-described preheating gas temperature is obtained.

Next, the effects obtained by using the tubular flame burner type gas combustion and injection device a and adding hydrogen to the blast furnace gas (in particular, in the case where a blast furnace gas generated in a low-reducing agent ratio operation is used) serving as a fuel gas in the present invention will be described in comparison with the case where other type gas burners in the related art are used.

Most of gas burners previously industrially used have a structure in which a flame is formed forward of a burner end. Therefore, in the case where the above-described gas burner is used as the gas combustion and injection device a, charged materials (iron ore, coke) coming down from the upper portion of the blast furnace are directly exposed to a flame, a solution loss reaction of the coke is effected, and problems occur in that, for example, coke is consumed uselessly.

Meanwhile, the furnace top gas of the oxygen blast furnace process, in which pure oxygen is blown, is a gas in which a nitrogen content is small and CO is contained primarily, and the calorific value is high (for example, about 1,200 kcal/Nm$^3$). Consequently, the furnace top gas can be used as a fuel gas for the above-described common gas burner in the related art with no problem. On the other hand, regarding the blast furnace gas generated in a normal blast furnace process related to the present invention, the calorific value is low (for example, about 800 kcal/Nm$^3$), and if the blast furnace gas is applied to the above-described common gas burner in the related art, stable combustion is not performed easily. Moreover, in the case where a low RAR operation is directed, the calorific value of the blast furnace gas is further reduced. For example, according to calculation on the basis of the mass and heat balance model in the blast furnace, the calorific value of the blast furnace gas becomes (1) 722 kcal/Nm$^3$ as for an operation corresponding to RAR 494 kg/t (PCR: 130 kg/t, blowing temperature: 1,150°C), (2) 620 kcal/Nm$^3$ as for an operation corresponding to RAR 450 kg/t (PCR: 130 kg/t, blowing temperature: 1,200°C, high-reactivity coke is used, the heat loss is reduced by 43%, the shaft efficiency is increased by 2% relative to the operation of the above-described item (1)), and (3) 517 kcal/Nm$^3$ as for an operation corresponding to RAR 412 kg/t (PCR: 130 kg/t, blowing temperature: 1,200°C, high-reactivity coke is used, the heat loss is reduced by 57%, the shaft efficiency is increased by 4% relative to the operation of the above-described item (1)). According to the above-described calculation, the temperature of the blast furnace top gas becomes 110°C or lower in the operations of the above-described items (2) and (3). Then, for example, in the case where a part of the blast furnace gas discharged from the furnace top portion is taken, a preheating gas prepared by combustion with oxygen is injected into the furnace from the shaft portion, and the blast furnace top gas temperature is kept at 110°C or higher, the blast furnace gas calorific value is further reduced. For example, in the case where 100 Nm$^3$/t of preheating gas at 800°C is injected in the operation of the above-described item (2), the blast furnace gas calorific value becomes 590 kcal/Nm$^3$, and in the case where 150 Nm$^3$/t of preheating gas at 800°C is injected in the operation of the above-described item (3), the blast furnace gas calorific value becomes 477 kcal/Nm$^3$. Such a reduction in blast furnace gas calorific value due to the low RAR operation makes stable combustion by the above-described common gas burner in the related art further difficult.

Furthermore, the common blast furnace is operated under a pressure of 4 to 5 kg/cm$^2$ and, in addition, charged materials come down from the upper portion of the blast furnace, so that the pressure fluctuates always. Moreover, blow-by resulting from adhesion of materials to the furnace wall of the blast furnace and the like occur. Regarding the above-described common gas burner in the related art, the stability of the flame is hindered because of these factors and blow-off and the like may occur.

Regarding the above-described problems with respect to the common gas burner in the related art, according to the present invention, the effects obtained by using the tubular flame burner type gas combustion and injection device a and adding hydrogen to a low-calorific value gas, e.g., a blast furnace gas, used as the fuel gas so as to perform stable combustion are as described below.

(a) Combustion of gas is performed in the combustion chamber 1 and no flame is present outside the combustion chamber 1. Therefore, the charged materials (iron ore, coke) coming down from the upper portion of the blast furnace are not exposed to a flame directly, so that an influence exerted on the charged materials is at a small level. Furthermore, as described above, no flame is present outside the combustion chamber 1, so that a stable flame is formed without being affected by the pressure in the blast furnace and fluctuations thereof, blow-by, and the like and a combustion gas at a desired temperature can be injected into the furnace stably.

(b) It is necessary that the preheating gas injected into the furnace has a pressure higher than the pressure in the furnace at the position of the injection. Therefore, it is necessary that combustion of gas is performed actually under pressure in the combustion chamber 1 of the gas combustion and injection device a. In the case where the combustion chamber 1 comes into a pressurized state, as described above, the condition advantageous for stable combustion of especially a blast furnace gas is brought about. Regarding the gas combustion and injection device a, a stable flame is formed in the combustion chamber 1, the mixing property of the blast furnace gas and the combustion-supporting gas is good and, therefore, efficient uniform combustion of the gas can be performed. In particular, as described above, the combustion chamber 1 comes into the pressurized state, so that the gas density increases and, thereby, an apparent calorific value increases as compared with the calorific value in the standard state. Consequently, combined with addition of hydrogen to the fuel gas, stable combustion can be performed even in the case where the fuel gas is a low-calorific value gas, e.g., a blast furnace gas.

(c) The combustion chamber 1 comes into a pressurized state, as described above, so that the gas density increases and, thereby, the amount of heat held by the blast furnace gas can be transferred to the combustion gas efficiently. In particular, an unburned gas and the combustion-supporting gas are present in the vicinity of the inside wall surface 100 of the combustion chamber 1, so that the inside wall surface 100 of the combustion chamber 1 is not heated to a high temperature due to direct heat transfer. Consequently, a heat loss from the pipe wall is small and, thereby, the effect thereof is further enhanced.

(d) It is preferable that the preheating gas injected from the gas injection portion A does not contain oxygen (oxygen gas as $O_2$, the same holds true hereafter) or has a low oxygen concentration. This is because if the preheating gas contains oxygen, iron oxide ($Fe_3O_4$, FeO), which is reduced in the furnace, is reoxidized. In this regard, the gas combustion and injection device a exhibits a high efficiency of utilization of oxygen because a stable flame is formed in the combustion chamber 1. In particular, the combustion chamber 1 comes into a pressurized state and, thereby, the efficiency of utilization of oxygen can be further increased, so that stable combustion can be performed with an amount of oxygen smaller than the theoretical amount of oxygen. Consequently, a preheating gas containing no oxygen or having a very low oxygen concentration can be injected into the furnace.

(e) A stable flame is formed in the combustion chamber 1, so that the variations in temperature of the preheating gas (combustion gas) injected into the furnace are reduced, and temperatures of the blast furnace gas from the lower portion of the furnace and the charged materials coming down from the upper portion of the furnace can be raised without variations.

Usually, a sensor $26_A$ to measure the composition, the temperature, the pressure, and the like of the blast furnace gas is disposed in the flow path 28 to lead the blast furnace gas to the booster 25, and a sensor $26_B$ to measure the pressure and the temperature in the furnace is disposed in the vicinity of the gas injection portion A. On the basis of the measurement values with these sensors $26_A$ and $26_B$, the gas pressure which is increased by the boosters 25a and 26b, the amount of combustion-supporting gas injected into the gas combustion and injection device a, the amount of hydrogen, and the like are controlled.

The injection of the preheating gas from the gas injection portion A may be performed constantly, or be performed only in the case where the furnace top gas temperature is decreased. In the latter case, for example, the furnace top gas temperature is measured with the sensor, and in the case where the furnace top gas temperature becomes lower than or equal to a predetermined temperature (for example, 110°C or lower), the preheating gas is injected from the gas injection portion A.

The temperature of the preheating gas injected from the gas injection portion A is not specifically limited. However, if the temperature of the preheating gas is lower than the temperature of the gas in the furnace at the position of injection, the inside of the furnace is, on the contrary, cooled. Therefore, it is preferable that the temperature of the preheating gas is higher than the temperature of the gas in the furnace at the position of injection, and in general, 500°C or higher, preferably 800°C or higher is desirable.

The amount of injection of the preheating gas is not specifically limited insofar as the amount of injection of the gas can maintain the furnace top gas temperature at 100°C or higher in general.

The position of installation of the gas injection portion A in the furnace height direction (position of injection of the preheating gas) is preferably middle portion to upper portion of the shaft. In particular, when the throat radius is represented by $R_0$, the position at a depth of $R_0$ from the stock line is represented by $p_1$, and the position at a height from the lower end of the shaft portion of one-third of the total height of the shaft portion is represented by $p_2$, it is preferable that the gas injection portion A is installed between the position $p_1$ and the position $p_2$ in the furnace height direction and the preheating gas is injected from this gas injection portion A. If the position of injection of the preheating gas is too shallow (the position is too high), the load of a raw material-packed bed is small, so that fluidization or agitation of the raw material occurs and the stability in coming down of the raw material may be reduced. On the other hand, if the position of injection of the preheating gas is too deep (the position is too low), a softening-melting zone in the furnace may be reached unfavorably.

The number of installation and the form of installation of the gas injection portions A in the furnace circumferential direction are not specifically limited, although installation at a plurality of places at regular intervals in the furnace circumferential direction is preferable. In particular, it is preferable that at least the gas injection portions A are installed at n places (where n is an even number of 4 or more) at regular intervals in the furnace circumferential direction and among the above-described gas injection portions A at n places, the gas injection portions A used for injection of the preheating gas are selected at regular intervals in the furnace circumferential direction in accordance with the total amount of injection. In this case, the number of installation of the gas injection portions A at regular intervals is 4, 8, 16, 32, 64, and the like. In this regard, in actual equipment, it may be difficult to install the gas injection portions A at accurately regular intervals in the furnace circumferential direction because of the relationship with the furnace body cooling structure and the like and, therefore, deviation of the position of installation to some extent is acceptable.

According to the present invention, a blast furnace gas having a low calorific value and being capable of introducing from a place at close range is used as the fuel gas of the gas combustion and injection device a. Most of all, it can be said that particularly preferable embodiment is to take a part of a blast furnace gas discharged from a furnace top portion from an appropriate position of a flow path so as to use as a fuel gas from the viewpoint of effective utilization of energy (sensible heat of the gas can be used as-is) and, in addition, from the viewpoint of equipment. Furthermore, as for the blast furnace gas, a blast furnace gas taken from the downstream side of a gas cleaning apparatus (the dust catcher 22, the mist separator 23), a blast furnace gas taken between the furnace top portion and the gas cleaning apparatus, a blast furnace gas stored in a gas holder, and the like may be used.

[EXAMPLES]

[EXAMPLE 1]

A test apparatus of combustion burner having a structure shown in Fig. 8 was used and a combustion test was performed under the condition shown in Table 2 by using a blast furnace gas containing hydrogen added and a combustion-supporting gas (air). Regarding the combustion chamber of this test apparatus, the inside diameter was 50 mm, the total length was 300 mm, an opening to inject the fuel gas (nozzle slit) disposed in the inside wall surface thereof had a length of 48 mm and a width of 5 mm, and a similar opening to inject the combustion-supporting gas (nozzle slit) had a length of 31 mm and a width of 5 mm.

Combustion tests were performed by using a blast furnace gas in an operation corresponding to RAR 443 kg/t as a fuel gas in Comparative example 1 and by using a blast furnace gas in an operation corresponding to RAR 446 kg/t as a fuel gas in Comparative example 2. Meanwhile, in Invention examples 1, 3, and 4, a blast furnace gas in an operation corresponding to RAR 443 kg/t was used as the fuel gas, hydrogen was added thereto, and the combustion test was performed. Furthermore, in Invention example 2, a blast furnace gas in an operation corresponding to RAR 446 kg/t was used as the fuel gas, hydrogen was added thereto, and the combustion test was performed. In each case, air was supplied to 30 Nm$^3$/h of blast furnace gas (in Invention examples, a blast furnace gas mixed with hydrogen).

Regarding this combustion test, the combustion stability was evaluated on the basis of the following criteria.

○ : There was no pulsation of flame and combustion was stable while following fluctuations in pressure (excellent)
Δ : There was pulsation of flame, but flame-out was not observed (good)
× : There was pulsation of flame and flame-out due to fluctuations in pressure was observed (unacceptable)

The results thereof are shown in Table 2 together with the test conditions. According to them, regarding each of Invention examples, stable combustion was realized. In particular, in the case where hydrogen was added in such a way that the adiabatic flame temperature became 750°C or higher, very stable combustion was realized.

[Table 6]

Table 6

| | | | Invention example 1 | Invention example 2 | Invention example 3 | Invention example 4 | Comparative example 1 | Comparative example 2 |
|---|---|---|---|---|---|---|---|---|
| Fuel gas composition *1 | $N_2$ | (vol%) | 51.7 | 51.8 | 49.2 | 52.6 | 52.8 | 52.7 |
| | $CO_2$ | (vol%) | 26.3 | 26.0 | 25.1 | 26.8 | 26.9 | 26.5 |
| | CO | (vol%) | 17.8 | 18.3 | 17.0 | 18.1 | 18.2 | 18.6 |
| | $H_2$ | (vol%) | 4.2 | 4.0 | 8.8 | 2.4 | 2.1 | 2.2 |
| Calorific value | | $(kcal/Nm^3)$ | 664 | 671 | 779 | 621 | 612 | 628 |
| Air ratio | | (-) | 0.7 | 0.65 | 0.7 | 0.7 | 0.7 | 0.65 |
| Amount of fuel gas *2 | | $(Nm^3/h)$ | 30.0 | 30.0 | 30.0 | 30.0 | 30.0 | 30.0 |
| Amount of air | | $(Nm^3/h)$ | 11.1 | 10.4 | 13.0 | 10.4 | 10.2 | 9.7 |
| Adiabatic flame temperature | | (°C) | 784 | 758 | 861 | 752 | 746 | 727 |
| Combustion stability | | | ○ | ○ | ○ | Δ | × | × |
| *1 In the case of Invention example, the gas composition after mixing with hydrogen<br>*2 In the case of Invention example, the amount of gas after mixing with hydrogen | | | | | | | | |

[EXAMPLE 2]

Test apparatuses of combustion burners including the different number of nozzle pipes constituting the gas nozzle for the fuel gas and the combustion-supporting gas were used, and a combustion test was performed under the condition shown in Table 3 by using a fuel gas (hydrogen-mixed blast furnace gas) and a combustion-supporting gas (air). Here, the combustion burner in which each gas nozzle is formed from one (single) nozzle pipe is a burner including gas nozzles having a structure as in the embodiment shown in Fig. 23 and Fig. 24, and the combustion burner in which each gas nozzle is formed from a plurality of nozzle pipes is a burner including gas nozzles having a structure as in the embodiment shown in Fig. 26 to Fig. 29.

Regarding the combustion chamber of each combustion burner, the inside diameter was 50 mm, the total length was 700 mm, the number of nozzle pipes constituting each of the gas nozzle for the fuel gas and the gas nozzle for the combustion-supporting gas was 5 as for Test example 1, 4 as for Test example 2, 2 as for Test example 3, 1 as for Test example 4, 4 as for Test example 5, and 2 as for Test example 6.

Regarding the combustion burners used in Test examples 1 to 4, the inside diameter of the nozzle pipe constituting the gas nozzle for injecting the fuel gas was 10 mm and the inside diameter of the nozzle pipe constituting the similar gas nozzle for injecting the combustion-supporting gas was 10 mm. Regarding the combustion burner used in Test example 5, the inside diameter of the nozzle pipe constituting the gas nozzle for injecting the fuel gas was 6 mm and the inside diameter of the nozzle pipe constituting the similar gas nozzle for injecting the combustion-supporting gas was 6 mm. Regarding the combustion burner used in Test example 6, the inside diameter of the nozzle pipe constituting the gas nozzle for injecting the fuel gas was 10 mm and the inside diameter of the nozzle pipe constituting the similar gas nozzle for injecting the combustion-supporting gas was 10 mm.

A blast furnace gas (hydrogen-mixed blast furnace gas) used as the fuel gas had a gas composition of CO: 22 percent by volume, $CO_2$: 21 percent by volume, $H_2$: 5 percent by volume, and $N_2$: 52 percent by volume and a calorific value of 792 kcal/$Nm^3$. Relative to 30 $Nm^3$/h of this fuel gas, 19.5 $NM^3$/h of air serving as a combustion-supporting gas was supplied in such a way that the theoretical amount of oxygen became 1. The pressure in the furnace of the applied test furnace was 245 kPa.

In Test example 6, a combustion burner in which a gas nozzle (inside diameter 20 mm) for a diluent gas was disposed at the position 500 mm in the burner axis direction from the center of the position of injection of the fuel gas·combustion-supporting gas was used, and 33.8 $Nm^3$/h of diluent gas (blast furnace gas) was supplied in such a way that the temperature of the combustion exhaust gas discharged from the combustion chamber became 800°C. The CO (reducing gas) content in the combustion gas composition became 10.3 percent by volume by addition of the diluent gas.

In Test examples 1 to 6, observation of the inside of the combustion chamber (observation through a sight glass shown in Fig. 31) and gas composition analysis of the combustion exhaust gas were performed, and the combustion state was evaluated on the basis of the following criteria. The results thereof are shown in Table 3 together with the configuration of the gas nozzle, the gas flow rate, the swirl number Sw, the combustion gas composition (in Test example 6, the gas composition after addition of the diluent gas), and the like.

× : Pulsation was observed in the combustion state and a significant amount of unburned Co was measured.

○ : Stable combustion continued and unburned CO was hardly measured (where the CO concentration in Test example 6 was due to mixing with the diluent gas)

[Table 7]

Table 7

| | | | Test example 1 | Test example 2 | Test example 3 | Test example 4 | Test example 5 | Test example 6 |
|---|---|---|---|---|---|---|---|---|
| The number of nozzle pipes of gas nozzle | Fuel gas | (-) | 5 | 4 | 2 | 1 | 4 | 2 |
| | Combustion-supporting gas | (-) | 5 | 4 | 2 | 1 | 4 | 2 |

(continued)

| | | | Test example 1 | Test example 2 | Test example 3 | Test example 4 | Test example 5 | Test example 6 |
|---|---|---|---|---|---|---|---|---|
| Gas flow rate | Fuel gas | (m/s) | 6.1 | 7.6 | 15.2 | 30.3 | 21.1 | 15.2 |
| | Combustion-supporting gas | (m/s) | 3.9 | 4.9 | 9.8 | 19.6 | 13.6 | 9.8 |
| Swirl number | | (-) | 2.6 | 3.3 | 6.6 | 13.1 | 9.1 | 6.6 |
| Combustion gas composition (on dry basis) | $N_2$ | (vol%) | 70.6 | 70.6 | 70.6 | 70.6 | 70.6 | 67.4 |
| | $CO_2$ | (vol%) | 29.4 | 29.4 | 29.4 | 29.3 | 29.4 | 17.9 |
| | CO | (vol ppm) | 1800 | 0 | 0 | 3100 | 30 | 10.3 *1 |
| | $H_2$ | (vol%) | 0.0 | 0.0 | 0.0 | 0.0 | 0.0 | 2.3 |
| | $O_2$ | (vol%) | 0.0 | 0.0 | 0.0 | 0.0 | 0.0 | 0.0 |
| Combustion exhaust gas temperature | | (°C) | 1150 | 1198 | 1198 | 1120 | 1190 | 800 |
| Evaluation of combustion state | | | × | ○ | ○ | × | ○ | ○ |
| *1 CO concentration in Test example 6 is expressed in % | | | | | | | | |

[EXAMPLE 3]

Regarding a blast furnace having a volume in a furnace of 5,000 m³, the present invention was executed according to the embodiment shown in Fig. 30 by using the gas combustion and injection device a as shown in Fig. 23 and Fig. 24. The operation condition was specified to be the amount of injection of pulverized coal: 130 kg/t, the coke ratio: 320 kg/t, and the blowing temperature: 1,150°C (moisture: 10 g/Nm³), and high-reactivity coke was used. A blast furnace gas (CO: 17.7 percent by volume, $CO_2$: 23.1 percent by volume, $H_2$: 2.4 percent by volume, $H_2O$: 3.6 percent by volume, and $N_2$: 53.2 percent by volume) taken from the downstream side of the furnace top gas power generation apparatus 24 was pressurized with a booster 25a to a pressure 0.2 atm higher than the pressure in the furnace and was introduced as a fuel gas into the gas combustion and injection device a constituting a gas injection portion A. At that time, hydrogen was added to the blast furnace gas in such a way that the hydrogen concentration became 4.0 percent by volume, so as to produce a hydrogen-mixed blast furnace gas. Furthermore, air was pressurized with a booster 25b and was introduced as a combustion-supporting gas into the gas combustion and injection device a.

In the combustion·injection apparatus a, combustion of 100 Nm³/t of hydrogen-mixed blast furnace gas was performed with 37.8 Nm³/t of air, so as to generate a combustion gas at 800°C, and the combustion gas was injected as a preheating gas into the furnace. The oxygen ratio in the gas combustion and injection device a was 0.736 (relative to the theoretical amount of oxygen). The composition of the preheating gas was CO: 3.5 percent by volume, $CO_2$: 27.3 percent by volume, $H_2$: 0.8 percent by volume, $H_2O$: 5.0 percent by volume, and $N_2$: 63.3 percent by volume. The furnace top gas temperature became 149°C by injecting the above-described preheating gas, condensation of moisture in the pipe was avoided completely in the blast furnace operation, and a stable operation was able to be performed. In the case where the preheating gas is not injected, the result of calculation on the basis of the mass and heat balance is 97°C.

[EXAMPLE 4]

Regarding a blast furnace having a volume in a furnace of 5,000 m³, the present invention was executed according to the embodiment shown in Fig. 8 by using the gas combustion and injection device a as shown in Fig. 26 to Fig. 29. The blast furnace operation condition was specified to be the same as that in Example 3. A blast furnace gas (Co: 17.7 percent by volume, $CO_2$: 23.1 percent by volume, $H_2$: 2.4 percent by volume, $H_2O$: 3.6 percent by volume, and $N_2$: 53.2 percent by volume) taken from the downstream side of the furnace top gas power generation apparatus 24 was pressurized with a booster 25a to a pressure 0.2 atm higher than the pressure in the furnace and was introduced as a fuel gas into the gas combustion and injection device a constituting a gas injection portion A. At that time, hydrogen was added to the blast furnace gas in such a way that the hydrogen concentration became 4.0 percent by volume, so as to produce a hydrogen-mixed blast furnace gas. Furthermore, air was pressurized with a booster 25b and was introduced as a combustion-supporting gas into the gas combustion and injection device a.

In the combustion·injection apparatus a, combustion of 73.6 $Nm^3/t$ of hydrogen-mixed blast furnace gas was performed with 37.8 $Nm^3/t$ of air (oxygen ratio 1.0) and, in addition, 26.4 $Nm^3/t$ of diluent gas (BFG) was supplied into the combustion chamber, so as to generate a combustion gas at 800°C. The combustion gas was injected as a preheating gas into the furnace. The composition of the preheating gas was the same as that in Example 3. The furnace top gas temperature became 147°C by injecting the above-described preheating gas, condensation of moisture in the pipe was avoided completely in the blast furnace operation, and a stable operation was able to be performed. In the case where the preheating gas is not injected, the result of calculation on the basis of the mass and heat balance is 97°C.

[Reference Signs List]

1 combustion chamber
2a, 2b, $2c_1$, $2c_2$ opening
3a, 3b, $3c_1$, $3c_2$ gas nozzle
4 mixing chamber
5 fuel gas supply pipe
6 hydrogen supply pipe
7 combustion-supporting gas supply pipe
8, 9, 10 flow rate control valve, 11 flow meter
12 combustion state detector
13 ignition plug
14 gas nozzle
15 opening
16 gas injection port
17a to 17d gas injection port group
18 header pipe
19 connection pipe
20 blast furnace, 21 tuyere

22 dust catcher, 23 mist separator
24 furnace top gas power generation apparatus
25a, 25b booster
$26_A$, $26_B$ sensor
27, 28 flow path
100 inside wall surface

103 injection port
104 connection pipe
140 nozzle pipe
150 opening

**Claims**

**1.** A blast furnace operating method, comprising blowing air or oxygen-enriched air into a blast furnace (20) from a tuyere (21);
forming a gas injection portion (A) in a shaft portion, the gas injection portion (A) having a gas combustion and injection device (a), the gas combustion and injection device (a) having a tubular combustion chamber (1), an open front-end of the combustion chamber (1) being communicated with an inside of the blast furnace (20); injecting a combustion gas, which serves as a preheating gas, from the gas combustion and injection device (a) into the blast furnace (20), so as to inject the preheating gas into the blast furnace from the gas injection portion (A); **characterised by**
forming an opening (2) in an inside wall surface of the combustion chamber (1) for injecting a fuel gas and a combustion-supporting gas or for injecting a premixed gas of the fuel gas and the combustion-supporting gas such that a swirling gas flow generates in the combustion chamber (1), wherein the each of the fuel gas and the combustion-supporting gas or the premixed gas of the fuel gas and the combustion-supporting gas is injected nearly in the tangential direction of the inside wall surface.

2. The blast furnace operating method according to claim 1, **characterized in that** the fuel gas supplied to the gas combustion and injection device (a) is a blast furnace gas.

3. The blast furnace operating method according to claim 1, **characterized in that** a gas nozzle (3) to supply each of a fuel gas and a combustion-supporting gas or a gas nozzle to supply a premixed gas of the fuel gas and the combustion-supporting gas into the combustion chamber through the opening (2) disposed in the inside wall surface of the combustion chamber (1) comprises a plurality of nozzle pipes (300) arranged in parallel in the axis direction of the gas combustion and injection device (a).

4. The blast furnace operating method according to claim 1, **characterized in that** a gas flow in the combustion chamber (1) of the gas combustion and injection device (a) has a swirl number Sw of 3 to 10.

5. The blast furnace operating method according to claim 1, **characterized in that** a diluent gas to dilute the combustion gas and adjust the gas temperature or/and the gas composition is supplied into the combustion chamber (1) of the gas combustion and injection device (a).

6. The blast furnace operating method according to claim 1, **characterized in that** the front end of the combustion chamber (1) of the gas combustion and injection device (a) is communicated with the inside of the blast furnace (20) through a gas conduit.

7. The blast furnace operating method according to claim 6, **characterized in that**

the gas conduit is a header pipe (18),
the header pipe (18) is connected to a plurality of gas injection ports (16) disposed in the furnace body through connecting pipes, and
the header pipe (18) is connected to the front-end of the combustion chamber (1) of the gas combustion and injection device (a).

8. The blast furnace operating method according to claim 1, **characterized in that** the injection of the combustion gas into the blast furnace (20) comprises:

using a gas having a calorific value of 1,000 kcal/Nm$^3$ or less as the fuel gas;
adding hydrogen to the fuel gas before injection into the combustion chamber (1) or/and the fuel gas after injection into the combustion chamber (1) and combusting the hydrogen added fuel gas; and
injecting the combustion gas as a preheating gas into the blast furnace (20).

9. The blast furnace operating method according to claim 8, **characterized in that** the fuel gas is a CO-containing fuel gas, and the hydrogen is added such that the adiabatic flame temperature of the fuel gas becomes 750°C or more.

10. The blast furnace operating method according to claim 8, **characterized in that** the fuel gas and the combustion-supporting gas or the premixed gas of the fuel gas and the combustion-supporting gas is injected from a plurality of nozzle pipes (300) arranged in parallel in the axis direction of the gas combustion and injection device (a).

11. The blast furnace operating method according to claim 8, **characterized in that** the fuel gas is a blast furnace gas.

12. The blast furnace operating method according to claim 8, **characterized by** comprising:

using the gas combustion and injection device (a) provided with another opening (2) in the inside wall surface of the combustion chamber (1), the another opening (2) being used for injecting a gas in such a way as to generate a swirling gas flow in the combustion chamber (1);
injecting hydrogen into the combustion chamber (1) from the another opening (2).

13. The blast furnace operating method according to claim 8, **characterized by** comprising:

48

using the gas combustion and injection device (a) further provided with another opening (2) in the inside wall surface of the combustion chamber (1), the another opening (2) being used for injecting a gas approximately in the tangential direction of the inside wall surface to generate a swirling gas flow in the combustion chamber (1); and

injecting hydrogen into the combustion chamber (1) from the opening (2).

14. The blast furnace operating method according to claim 12 or claim 13, **characterized in that** a gas nozzle (3) to supply hydrogen into the combustion chamber through the another opening (2) disposed in the inside wall surface of the combustion chamber (1) comprises a plurality of nozzle pipes (300) arranged in parallel in the axis direction of the gas combustion and injection device (a).

15. The blast furnace operating method according to claim 8, **characterized in that** the swirl number Sw of a gas flow in the combustion chamber (1) of the gas combustion and injection device (a) is specified to be 3 to 10.

16. The blast furnace operating method according to claim 8, **characterized by** comprising:

supplying a diluent gas to dilute the combustion gas and adjust the gas temperature or/and the gas composition into the combustion chamber (1) of the gas combustion and injection device (a).

17. The blast furnace operating method according to claim 1, **characterized in that** the injection of the .combustion gas into the blast furnace (20) comprises:

using a blast furnace gas as the fuel gas;
adding hydrogen to the fuel gas before injection into the combustion chamber (1) or/and the fuel gas after injection into the combustion chamber (1) and combusting the hydrogen added fuel gas; and
injecting the combustion gas as a preheating gas into the blast furnace (20).

18. The blast furnace operating method according to claim 17, **characterized in that** the hydrogen is added in such a way that the adiabatic flame temperature of the fuel gas becomes 750°C or more.

19. The blast furnace operating method according to claim 17, **characterized in that** the gas nozzle (3) to supply a fuel gas and a combustion-supporting gas or the gas nozzle (3) to supply a premixed gas of the fuel gas and the combustion-supporting gas into the combustion chamber (1) through the opening (2) disposed in the inside wall surface of the combustion chamber (1) comprises a plurality of nozzle pipes (300) arranged in parallel in the axis direction of the gas combustion and injection device (a).

20. The blast furnace operating method according to claim 17, **characterized by** comprising:

using the gas combustion and injection device (a) further provided with another opening (2) in the inside wall surface of the combustion chamber, the another opening (2) being used for injecting a gas approximately in the tangential direction of the inside wall surface in such a way as to generate a swirling gas flow in the combustion chamber (1); and
injecting hydrogen into the combustion chamber (1) from the opening (2).

21. The blast furnace operating method according to claim 17, **characterized in that** a gas nozzle (3) to supply hydrogen into the combustion chamber (1) through the another opening (2) disposed in the inside wall surface of the combustion chamber (1) comprises a plurality of nozzle pipes (300) arranged in parallel in the axis direction of the gas combustion and injection device (a).

22. The blast furnace operating method according to claim 17, **characterized in that** the swirl number Sw of a gas flow in the combustion chamber (1) of the gas combustion and injection device (a) is specified to be 3 to 10.

23. The blast furnace operating method according to claim 17, **characterized by** comprising:

supplying a diluent gas to dilute the combustion gas and adjust the gas temperature or/and the gas composition into the combustion chamber (1) of the gas combustion and injection device (a).

24. A blast furnace plant comprising a blast furnace (20) into which air or oxygen-enriched air is blown from a tuyere (21), in which a gas injection portion (A) is disposed in a shaft portion, wherein
the gas injection portion (A) comprises a gas combustion and injection device (a) having a tubular combustion chamber (1), an open front-end of the combustion chamber (1) being communicated with an inside of the blast furnace (20), wherein the gas combustion and injection device (a) injects a combustion gas into the blast furnace (20); **characterised in that**
an opening (2) is formed in an inside wall surface of the combustion chamber (1) for injecting a fuel gas and a combustion-supporting gas or injecting a premixed gas of the fuel gas and the combustion-supporting gas in such a way that a swirling gas flow generates in the combustion chamber (1), wherein the each of the fuel gas and the combustion-supporting gas or the premixed gas of the fuel gas and the combustion-supporting gas is injected nearly in the tangential direction of the inside wall surface.

25. The blast furnace plant according to claim 24, **characterized by** comprising a flow path (28) to take a part of a blast furnace gas from a flow path (27) of the blast furnace gas discharged from the furnace top portion of the blast furnace (20) and supply to the gas combustion and injection device (a).

26. The blast furnace plant according to claim 24, **characterized by** comprising a booster (25) to pressurize each of the fuel gas and the combustion-supporting gas supplied to the gas combustion and injection device (a) or pressurize the premixed gas of the fuel gas and the combustion-supporting gas.

27. The blast furnace plant according to claim 24, **characterized in that** the gas combustion and injection device (a) comprises a gas nozzle (3) to supply each of the fuel gas and the combustion-supporting gas or a gas nozzle (3) to supply the premixed gas of the fuel gas and the combustion-supporting gas into the combustion chamber (1) through the opening (2) disposed in the inside wall surface of the combustion chamber (1), wherein the gas nozzle (3) comprises a plurality of nozzle pipes (300a) arranged in parallel in the axis direction of the gas combustion and injection device (a).

28. The blast furnace plant according to claim 24, **characterized in that** the gas combustion and injection device (a) comprises a device to supply a diluent gas into the combustion chamber(1), the diluent gas dilutes the combustion gas and adjusts the gas temperature or/and the gas composition.

29. The blast furnace plant according to claim 24, **characterized in that** the end of the combustion chamber (1) of the gas combustion and injection device (a) is communicated with the inside of the blast furnace (20) through a gas conduit.

30. The blast furnace plant according to claim 29, **characterized in that** the gas conduit is a header pipe (18) and the header pipe (18) is connected to a plurality of gas injection ports (16) disposed in the furnace body through connecting pipes and, in addition, is connected to the end of the combustion chamber (1) of the gas combustion and injection device (a).

**Patentansprüche**

1. Hochofenbetriebsverfahren, umfassend das Einblasen von Luft oder sauerstoffangereicherter Luft in einen Hochofen (20) aus einer Windform (21);
Bilden eines Gaseinspeiseabschnitts (A) in einem Schachtabschnitt, wobei der Gaseinspeiseabschnitt (A) ein Gasverbrennungs- und Einspeiseelement (a) aufweist, wobei das Gasverbrennungs- und Einspeiseelement (a) eine röhrenförmige Verbrennungskammer (1) aufweist und ein offenes Vorderende der Verbrennungskammer (1) mit dem Inneren des Hochofens (20) verbunden ist; Einspeisen eines Verbrennungsgases, das als Vorheizgas dient, aus dem Gasverbrennungs- und Einspeiseelement (a) in den Hochofen (20), so dass das Vorheizgas von dem Gaseinspeiseabschnitt (A) in den Hochofen eingespeist wird;
**dadurch gekennzeichnet, dass**
eine Öffnung (2) in einer inneren Wandfläche der Verbrennungskammer zum Einspeisen eines Brennstoffgases und eines verbrennungsunterstützenden Gases oder zum Einspeisen eines vorgemischten Gases aus dem Brennstoffgas und dem verbrennungsunterstützenden Gas gebildet wird, so dass ein wirbelnder Gasfluss in der Verbrennungskammer (1) erzeugt wird, wobei jedes von dem Brennstoffgas und dem verbrennungsunterstützenden Gas oder dem vorgemischten Gas aus dem Brennstoffgas und dem verbrennungsunterstützenden Gas ungefähr in einer tangentialen Richtung zur inneren Wandfläche eingespeist wird.

**2.** Hochofenbetriebsverfahren gemäß Anspruch 1, **dadurch gekennzeichnet, dass** das Brennstoffgas, das dem Gasverbrennungs- und Einspeiseelement (a) zugeführt wird, ein Hochofengas ist.

**3.** Hochofenbetriebsverfahren gemäß Anspruch 1, **dadurch gekennzeichnet, dass** eine Gasdüse (3) zum Zuführen jedes von einem Brennstoffgas und einem verbrennungsunterstützenden Gas oder eine Gasdüse zum Zuführen eines vorgemischten Gases aus dem Brennstoffgas und dem verbrennungsunterstützenden Gas in die Verbrennungskammer durch die in der inneren Wandfläche der Verbrennungskammer (1) angeordnete Öffnung (2) eine Vielzahl von Düsenrohren (300) aufweist, die parallel in der Achsenrichtung des Gasverbrennungs- und Einspeiseelements (a) angeordnet sind.

**4.** Hochofenbetriebsverfahren gemäß Anspruch 1, **dadurch gekennzeichnet, dass** ein Gasfluss in der Verbrennungskammer (1) des Gasverbrennungs- und Einspeiseelements (a) eine Drallzahl Sw von 3 bis 10 aufweist.

**5.** Hochofenbetriebsverfahren gemäß Anspruch 1, **dadurch gekennzeichnet, dass** ein Verdünnungsgas zum Verdünnen des Verbrennungsgases und zum Justieren der Gastemperatur und/oder der Gaszusammensetzung der Verbrennungskammer (1) des Gasverbrennungs- und Einspeiseelements (a) zugeführt wird.

**6.** Hochofenbetriebsverfahren gemäß Anspruch 1, **dadurch gekennzeichnet, dass** das Vorderende der Verbrennungskammer (1) des Gasverbrennungs- und Einspeiseelements (a) mit dem Inneren des Hochofens (20) über eine Gasleitung verbunden ist.

**7.** Hochofenbetriebsverfahren gemäß Anspruch 6, **dadurch gekennzeichnet, dass**

die Gasleitung ein Sammelrohr (18) ist,
das Sammelrohr (18) über Verbindungsrohre mit einer Vielzahl von Gaseinspeiseanschlüssen (16), die im Ofengehäuse angeordnet sind, verbunden ist, und
das Sammelrohr mit dem Vorderende der Verbrennungskammer (1) des Gasverbrennungs- und Einspeiseelements (a) verbunden ist.

**8.** Hochofenbetriebsverfahren gemäß Anspruch 1, **dadurch gekennzeichnet, dass** das Einspeisen des Brennstoffgases in den Hochofen (20) umfasst:

Verwendung eines Gases als Brennstoffgas, das einen Brennwert von 1000 kcal/Nm$^3$ oder weniger aufweist;
Hinzufügen von Wasserstoff zu dem Brennstoffgas vor dem Einspeisen in die Verbrennungskammer (1) und/oder zu dem Brennstoffgas nach dem Einspeisen in die Verbrennungskammer (1) und Verbrennen des um Wasserstoff ergänzten Brennstoffgases; und
Einspeisen des Verbrennungsgases als Vorheizgas in den Hochofen (20).

**9.** Hochofenbetriebsverfahren gemäß Anspruch 8, **dadurch gekennzeichnet, dass** das Brennstoffgas ein CO-beinhaltendes Brennstoffgas ist, und dass Wasserstoff derart hinzugefügt wird, dass die adiabatische Flammentemperatur des Brennstoffgases 750°C oder mehr beträgt.

**10.** Hochofenbetriebsverfahren gemäß Anspruch 8, **dadurch gekennzeichnet, dass** das Brennstoffgas und das verbrennungsunterstützende Gas oder das vorgemischte Gas aus dem Brennstoffgas und dem verbrennungsunterstützenden Gas aus einer Vielzahl von Düsenrohren (300), die parallel in der Achsenrichtung des Gasverbrennungs- und Einspeiseelements (a) angeordnet sind, eingespeist wird.

**11.** Hochofenbetriebsverfahren gemäß Anspruch 8, **dadurch gekennzeichnet, dass** das Brennstoffgas ein Hochofengas ist.

**12.** Hochofenbetriebsverfahren gemäß Anspruch 8, **dadurch gekennzeichnet, dass** es umfasst:

Verwendung des Gasverbrennungs- und Einspeiseelements (a), ausgestattet mit einer weiteren Öffnung (2) in der inneren Wandfläche der Verbrennungskammer (1), wobei die weitere Öffnung (2) derart für das Einspeisen von einem Gas verwendet wird, dass ein wirbelnder Gasfluss in der Verbrennungskammer (1) erzeugt wird;
Einspeisen von Wasserstoff in die Verbrennungskammer (1) aus der weiteren Öffnung (2).

**13.** Hochofenbetriebsverfahren gemäß Anspruch 8, **dadurch gekennzeichnet, dass** es umfasst:

Verwendung des mit einer weiteren Öffnung (2) in der inneren Wandfläche der Verbrennungskammer (1) ausgestatteten Gasverbrennungs- und Einspeiseelements (a), wobei die weitere Öffnung (2) für das Einspeisen von einem Gas ungefähr in einer tangentialen Richtung zur inneren Wandfläche zum Erzeugen eines wirbelnden Gasflusses in der Verbrennungskammer (1) verwendet wird; und

Einspeisen von Wasserstoff in die Verbrennungskammer (1) aus der Öffnung (2).

14. Hochofenbetriebsverfahren gemäß Anspruch 12 oder Anspruch 13, **dadurch gekennzeichnet, dass** eine Gasdüse (3) zum Zuführen von Wasserstoff in die Verbrennungskammer durch die in der inneren Wandfläche der Verbrennungskammer (1) angeordnete weitere Öffnung (2) eine Vielzahl von Düsenrohren (300) aufweist, die parallel in der Achsenrichtung des Gasverbrennungs- und Einspeiseelements (a) angeordnet sind.

15. Hochofenbetriebsverfahren gemäß Anspruch 8, **dadurch gekennzeichnet, dass** die Drallzahl Sw eines Gasflusses in der Verbrennungskammer (1) des Gasverbrennungs- und Einspeiseelements (a) auf 3 bis 10 festgelegt ist.

16. Hochofenbetriebsverfahren gemäß Anspruch 8, **dadurch gekennzeichnet, dass** es umfasst:

Zuführen eines Verdünnungsgases zum Verdünnen des Verbrennungsgases und Justieren der Gastemperatur und/oder der Gaszusammensetzung in die Verbrennungskammer (1) des Gasverbrennungs- und Einspeiseelements (a).

17. Hochofenbetriebsverfahren gemäß Anspruch 1, **dadurch gekennzeichnet, dass** das Einspeisen des Verbrennungsgases in den Hochofen (20) umfasst:

Verwendung eines Hochofengases als Brennstoffgas;
Hinzufügen von Wasserstoff zu dem Brennstoffgas vor dem Einspeisen in die Verbrennungskammer (1) und/oder zu dem Brennstoffgas nach dem Einspeisen in die Verbrennungskammer (1) und Verbrennen des um Wasserstoff ergänzten Brennstoffgases; und
Einspeisen des Verbrennungsgases als Vorheizgas in den Hochofen (20).

18. Hochofenbetriebsverfahren gemäß Anspruch 17, **dadurch gekennzeichnet, dass** der Wasserstoff derart hinzugefügt wird, dass die adiabatische Flammentemperatur des Brennstoffgases 750°C oder mehr beträgt.

19. Hochofenbetriebsverfahren gemäß Anspruch 17, **dadurch gekennzeichnet, dass** die Gasdüse (3) zum Zuführen eines Brennstoffgases und eines verbrennungsunterstützenden Gases oder die Gasdüse (3) zum Zuführen eines vorgemischten Gases aus dem Brennstoffgas und dem verbrennungsunterstützenden Gas in die Verbrennungskammer (1) durch die in der inneren Wandfläche der Verbrennungskammer (1) angeordnete Öffnung (2) eine Vielzahl von Düsenrohren (300) aufweist, die parallel in der Achsenrichtung des Gasverbrennungs- und Einspeiseelements (a) angeordnet sind.

20. Hochofenbetriebsverfahren gemäß Anspruch 17, **dadurch gekennzeichnet, dass** es umfasst:

Verwendung des mit einer weiteren Öffnung (2) in der inneren Wandfläche der Verbrennungskammer ausgestatteten Gasverbrennungs- und Einspeiseelements (a), wobei die weitere Öffnung (2) für das Einspeisen von einem Gas ungefähr in der tangentialen Richtung zur inneren Wandfläche zum Erzeugen eines wirbelnden Gasflusses in der Verbrennungskammer (1) verwendet wird; und
Einspeisen von Wasserstoff in die Verbrennungskammer (1) aus der Öffnung (2).

21. Hochofenbetriebsverfahren gemäß Anspruch 17, **dadurch gekennzeichnet, dass** eine Gasdüse (3) zum Zuführen von Wasserstoff in die Verbrennungskammer (1) durch die in der inneren Wandfläche der Verbrennungskammer (1) angeordnete weitere Öffnung (2) eine Vielzahl von Düsenrohren (300) aufweist, die parallel in der Achsenrichtung des Gasverbrennungs- und Einspeiseelements (a) angeordnet sind.

22. Hochofenbetriebsverfahren gemäß Anspruch 17, **dadurch gekennzeichnet, dass** die Drallzahl Sw eines Gasflusses in der Verbrennungskammer (1) des Gasverbrennungs- und Einspeiseelements (a) auf 3 bis 10 festgelegt ist.

23. Hochofenbetriebsverfahren gemäß Anspruch 17, **dadurch gekennzeichnet, dass** es umfasst:

Zuführen eines Verdünnungsgases zum Verdünnen des Verbrennungsgases und Justieren der Gastemperatur und/oder der Gaszusammensetzung in die Verbrennungskammer (1) des Gasverbrennungs- und Einspeiseelements (a).

24. Hochofenanlage, umfassend einen Hochofen (20), in welchen Luft oder sauerstoffangereicherte Luft aus einer Windform (21) eingeblasen wird, in welchem ein Gaseinspeiseabschnitt (A) in einem Schachtabschnitt angeordnet ist, wobei
der Gaseinspeiseabschnitt (A) ein Gasverbrennungs- und Einspeiseelement (a) aufweist, das eine röhrenförmige Verbrennungskammer (1) aufweist, und ein offenes Vorderende der Verbrennungskammer (1) mit dem Inneren des Hochofens (20) verbunden ist, wobei das Gasverbrennungs- und Einspeiseelement (a) ein Verbrennungsgas in den Hochofen (20) einspeist; **dadurch gekennzeichnet, dass**
eine Öffnung (2) in der inneren Wandfläche der Verbrennungskammer (1) zum Einspeisen eines Brennstoffgases und eines verbrennungsunterstützenden Gases oder zum Einspeisen eines vorgemischten Gases aus dem Brennstoffgas und dem verbrennungsunterstützenden Gas gebildet ist, so dass ein wirbelnder Gasfluss in der Verbrennungskammer (1) erzeugt wird, wobei jedes von dem Brennstoffgas und dem verbrennungsunterstützenden Gas oder dem vorgemischten Gas aus dem Brennstoffgas und dem verbrennungsunterstützenden Gas ungefähr in einer tangentialen Richtung zur inneren Wandfläche eingespeist wird.

25. Hochofenanlage gemäß Anspruch 24, **dadurch gekennzeichnet, dass** sie einen Strömungsweg (28) umfasst, um einen Teil eines Hochofengases von einem Strömungsweg (27) des von dem Ofenoberabschnitt des Hochofens (20) ausgestoßenen Hochofengases zu entnehmen und dem Gasverbrennungs- und Einspeiseelement (a) zuzuführen.

26. Hochofenanlage gemäß Anspruch 24, **dadurch gekennzeichnet, dass** sie einen Kompressor zur Druckbeaufschlagung von sowohl dem Brennstoffgas als auch dem verbrennungsunterstützenden Gas, welche dem Gasverbrennungs- und Einspeiseelement (a) zugeführt werden, oder zur Druckbeaufschlagung von dem vorgemischten Gas aus dem Brennstoffgas und dem verbrennungsunterstützenden Gas umfasst.

27. Hochofenanlage gemäß Anspruch 24, **dadurch gekennzeichnet, dass** das Gasverbrennungs- und Einspeiseelement (a) eine Gasdüse (3) zum Zuführen jedes von einem Brennstoffgas und einem verbrennungsunterstützenden Gas oder eine Gasdüse (3) zum Zuführen eines vorgemischten Gases aus dem Brennstoffgas und dem verbrennungsunterstützenden Gas in die Verbrennungskammer (1) durch die in der inneren Wandfläche der Verbrennungskammer (1) angeordnete Öffnung (2) umfasst, wobei die Gasdüse (3) eine Vielzahl von Düsenrohren (300a) aufweist, die parallel in der Achsenrichtung des Gasverbrennungs- und Einspeiseelements (a) angeordnet sind.

28. Hochofenanlage gemäß Anspruch 24, **dadurch gekennzeichnet, dass** das Gasverbrennungs- und Einspeiseelement (a) ein Element zum Zuführen eines Verdünnungsgas in die Verbrennungskammer (1) umfasst, wobei das Verdünnungsgas das Verbrennungsgas verdünnt und die Gastemperatur und/oder Gaszusammensetzung justiert.

29. Hochofenanlage gemäß Anspruch 24, **dadurch gekennzeichnet, dass** das Ende der Verbrennungskammer (1) des Gasverbrennungs- und Einspeiseelements (a) mit dem Inneren des Hochofens (20) über eine Gasleitung verbunden ist.

30. Hochofenanlage gemäß Anspruch 29, **dadurch gekennzeichnet, dass** die Gasleitung ein Sammelrohr (18) ist und das Sammelrohr (18) über Verbindungsrohre mit einer Vielzahl von Gaseinspeiseanschlüssen (16), die im Ofengehäuse angeordnet sind, verbunden ist, und zusätzlich mit dem Ende der Verbrennungskammer (1) des Gasverbrennungs- und Einspeiseelements (a) verbunden ist.

**Revendications**

1. Procédé de fonctionnement d'un haut fourneau, comprenant le soufflage d'air ou d'air enrichi d'oxygène dans un haut fourneau (20) à partir d'une tuyère (21) ;
la formation d'une partie d'injection de gaz (A) dans une partie de gueulard, la partie d'injection de gaz (A) ayant un dispositif de combustion et d'injection de gaz (a), le dispositif de combustion et d'injection de gaz (a) ayant une chambre de combustion tubulaire (1), une extrémité frontale ouverte de la chambre de combustion (1) étant en communication avec l'intérieur du haut fourneau (20) ;
l'injection d'un gaz de combustion, qui sert de gaz de préchauffage, à partir du dispositif de combustion et d'injection de gaz (a) dans le haut fourneau (20), de manière à injecter le gaz de préchauffage dans le haut fourneau depuis la partie d'injection de gaz (A) ; **caractérisé par**

la formation d'une ouverture (2) dans une surface de paroi interne de la chambre de combustion (1) pour injecter un gaz combustible et un gaz d'appoint de combustion ou pour injecter un gaz pré-mélangé formé du gaz combustible et du gaz d'appoint de combustion de sorte qu'un écoulement de gaz tourbillonnant se forme dans la chambre de combustion (1), dans lequel chacun du gaz combustible et du gaz d'appoint de combustion ou le gaz pré-mélangé formé du gaz combustible et du gaz d'appoint de combustion est injecté presque dans la direction tangentielle de la surface de paroi interne.

2.  Procédé de fonctionnement d'un haut fourneau selon la revendication 1, **caractérisé en ce que** le gaz combustible fourni au dispositif de combustion et d'injection de gaz (a) est un gaz de haut fourneau.

3.  Procédé de fonctionnement d'un haut fourneau selon la revendication 1, **caractérisé en ce qu'**une buse à gaz (3) pour fournir chacun d'un gaz combustible et d'un gaz d'appoint de combustion ou une buse à gaz pour fournir un gaz prémélangé formé du gaz combustible et du gaz d'appoint de combustion dans la chambre de combustion à travers l'ouverture (2) ménagée dans la surface de paroi interne de la chambre de combustion (1) comprend une pluralité de tuyaux de buse (300) aménagés en parallèle dans la direction axiale du dispositif de combustion et d'injection de gaz (a).

4.  Procédé de fonctionnement d'un haut fourneau selon la revendication 1, **caractérisé en ce qu'**un écoulement de gaz dans la chambre de combustion (1) du dispositif de combustion et d'injection de gaz (a) a un nombre de tourbillons Sw de 3 à 10.

5.  Procédé de fonctionnement d'un haut fourneau selon la revendication 1, **caractérisé en ce qu'**un gaz diluant pour diluer le gaz de combustion et ajuster la température du gaz et/ou la composition du gaz est fourni dans la chambre de combustion (1) du dispositif de combustion et d'injection de gaz (a).

6.  Procédé de fonctionnement d'un haut fourneau selon la revendication 1, **caractérisé en ce que** l'extrémité frontale de la chambre de combustion (1) du dispositif de combustion et d'injection de gaz (a) est en communication avec l'intérieur du haut fourneau (20) via une conduite de gaz.

7.  Procédé de fonctionnement d'un haut fourneau selon la revendication 6, **caractérisé en ce que**
la conduite de gaz est un tuyau collecteur (18),
le tuyau collecteur (18) est raccordé à une pluralité d'orifices d'injection de gaz (16) ménagés dans le corps du haut fourneau via des tuyaux de raccordement, et le tuyau collecteur (18) est raccordé à l'extrémité frontale de la chambre de combustion (1) du dispositif de combustion et d'injection de gaz (a).

8.  Procédé de fonctionnement d'un haut fourneau selon la revendication 1, **caractérisé en ce que** l'injection du gaz de combustion dans le haut fourneau (20) comprend :

    l'utilisation d'un gaz ayant une valeur calorifique de 1000 kcal/Nm$^3$ ou moins comme gaz combustible ;
    l'addition d'hydrogène au gaz combustible avant injection dans la chambre de combustion (1) et/ou au gaz combustible après injection dans la chambre de combustion (1), et combustion du gaz combustible additionné d'hydrogène ; et l'injection du gaz de combustion comme gaz de préchauffage dans le haut fourneau (20).

9.  Procédé de fonctionnement d'un haut fourneau selon la revendication 8, **caractérisé en ce que** le gaz combustible est un gaz contenant du CO, et l'hydrogène est ajouté de sorte que la température adiabatique des flammes du gaz combustible atteigne 750°C ou plus.

10. Procédé de fonctionnement d'un haut fourneau selon la revendication 8, **caractérisé en ce que** le gaz combustible et le gaz d'appoint de combustion ou le gaz pré-mélangé formé du gaz combustible et du gaz d'appoint de combustion est injecté par une pluralité de tuyaux de buse (300) aménagés en parallèle dans la direction axiale du dispositif de combustion et d'injection de gaz (a).

11. Procédé de fonctionnement d'un haut fourneau selon la revendication 8, **caractérisé en ce que** le gaz combustible est un gaz de haut fourneau.

12. Procédé de fonctionnement d'un haut fourneau selon la revendication 8, **caractérisé en ce qu'**il comprend :

l'utilisation du dispositif de combustion et d'injection de gaz (a) pourvu d'une autre ouverture (2) dans la surface de paroi interne de la chambre de combustion (1), l'autre ouverture (2) étant utilisée pour injecter un gaz de manière à générer un écoulement de gaz tourbillonnant dans la chambre de combustion (1) ;
l'injection d'hydrogène dans la chambre de combustion (1) par l'autre ouverture (2).

13. Procédé de fonctionnement d'un haut fourneau selon la revendication 8, **caractérisé en ce qu'**il comprend :

l'utilisation du dispositif de combustion et d'injection de gaz (a) pourvu en outre d'une autre ouverture (2) dans la surface de paroi interne de la chambre de combustion (1), l'autre ouverture (2) étant utilisée pour injecter un gaz approximativement dans la direction tangentielle de la surface de paroi interne pour générer un écoulement de gaz tourbillonnant dans la chambre de combustion (1) ; et
l'injection d'hydrogène dans la chambre de combustion (1) par l'ouverture (2).

14. Procédé de fonctionnement d'un haut fourneau selon la revendication 12 ou la revendication 13, **caractérisé en ce qu'**une buse à gaz (3) pour fournir de l'hydrogène dans la chambre de combustion par l'autre ouverture (2) ménagée dans la surface de paroi interne de la chambre de combustion (1) comprend une pluralité de tuyaux de buse (300) aménagés en parallèle dans la direction axiale du dispositif de combustion et d'injection de gaz (a).

15. Procédé de fonctionnement d'un haut fourneau selon la revendication 8, **caractérisé en ce que** le nombre de tourbillons Sw d'un écoulement de gaz dans la chambre de combustion (1) du dispositif de combustion et d'injection de gaz (a) est spécifié pour être de 3 à 10.

16. Procédé de fonctionnement d'un haut fourneau selon la revendication 8, **caractérisé en ce qu'**il comprend :

la fourniture d'un gaz diluant pour diluer le gaz de combustion et ajuster la température du gaz et/ou la composition du gaz dans la chambre de combustion (1) du dispositif de combustion et d'injection de gaz (a).

17. Procédé de fonctionnement d'un haut fourneau selon la revendication 1, **caractérisé en ce que** l'injection du gaz de combustion dans le haut fourneau (20) comprend :

l'utilisation d'un gaz de haut fourneau comme gaz combustible ;
l'addition d'hydrogène au gaz combustible avant injection dans la chambre de combustion (1) et/ou au gaz combustible après injection dans la chambre de combustion (1), et combustion du gaz combustible additionné d'hydrogène ; et
l'injection du gaz de combustion comme gaz de préchauffage dans le haut fourneau (20).

18. Procédé de fonctionnement d'un haut fourneau selon la revendication 17, **caractérisé en ce que** l'hydrogène est ajouté de manière que la température adiabatique des flammes du gaz combustible atteigne 750 °C ou plus.

19. Procédé de fonctionnement d'un haut fourneau selon la revendication 17, **caractérisé en ce que** la buse à gaz (3) pour fournir un gaz combustible et un gaz d'appoint de combustion ou la buse à gaz (3) pour fournir un gaz pré-mélangé formé du gaz combustible et du gaz d'appoint de combustion dans la chambre de combustion (1) à travers l'ouverture (2) disposée dans la surface de paroi interne de la chambre de combustion (1) comprend une pluralité de tuyaux de buse (300) aménagés en parallèle dans la direction axiale du dispositif de combustion et d'injection de gaz (a).

20. Procédé de fonctionnement d'un haut fourneau selon la revendication 17, **caractérisé en ce qu'**il comprend :

l'utilisation du dispositif de combustion et d'injection de gaz (a) pourvu en outre d'une autre ouverture (2) dans la surface de paroi interne de la chambre de combustion, l'autre ouverture (2) étant utilisée pour injecter un gaz approximativement dans la direction tangentielle de la surface de paroi interne de manière à générer un écoulement de gaz tourbillonnant dans la chambre de combustion (1) ; et
l'injection d'hydrogène dans la chambre de combustion (1) par l'ouverture (2).

21. Procédé de fonctionnement d'un haut fourneau selon la revendication 17, **caractérisé en ce qu'**une buse à gaz (3) pour fournir de l'hydrogène dans la chambre de combustion (1) à travers l'autre ouverture (2) ménagée dans la surface de paroi interne de la chambre de combustion (1) comprend une pluralité de tuyaux de buse (300) aménagés en parallèle dans la direction axiale du dispositif de combustion et d'injection de gaz (a).

**22.** Procédé de fonctionnement d'un haut fourneau selon la revendication 17, **caractérisé en ce que** le nombre de tourbillons Sw d'un écoulement de gaz dans la chambre de combustion (1) du dispositif de combustion et d'injection de gaz (a) est spécifié comme étant de 3 à 10.

**23.** Procédé de fonctionnement d'un haut fourneau selon la revendication 17, **caractérisé en ce qu'**il comprend :

la fourniture d'un gaz diluant pour diluer le gaz de combustion et ajuster la température du gaz et/ou la composition du gaz dans la chambre de combustion (1) du dispositif de combustion et d'injection de gaz (a).

**24.** Installation de haut fourneau comprenant un haut fourneau (20) dans lequel de l'air ou de l'air enrichi d'oxygène est soufflé par une tuyère (21), dans laquelle une partie d'injection de gaz (A) est disposée dans une partie de gueulard, dans laquelle

la partie d'injection de gaz (A) comprend un dispositif de combustion et d'injection de gaz (a) ayant une chambre de combustion tubulaire (1), une extrémité frontale ouverte de la chambre de combustion (1) étant en communication avec l'intérieur du haut fourneau (20), dans laquelle le dispositif de combustion et d'injection de gaz (a) injecte un gaz de combustion dans le haut fourneau (20) ; **caractérisée en ce que**

une ouverture (2) est formée dans une surface de paroi interne de la chambre de combustion (1) pour injecter un gaz combustible et un gaz d'appoint de combustion ou injecter un gaz pré-mélangé formé du gaz combustible et du gaz d'appoint de combustion de manière qu'un écoulement de gaz tourbillonnant soit généré dans la chambre de combustion (1), dans laquelle chacun du gaz combustible et du gaz d'appoint de combustion ou le gaz pré-mélangé formé du gaz combustible et du gaz d'appoint de combustion est injecté presque dans la direction tangentielle de la surface de paroi interne.

**25.** Installation de haut fourneau selon la revendication 24, **caractérisée en ce qu'**elle comprend un trajet d'écoulement (28) pour prélever une partie d'un gaz de haut fourneau d'un trajet d'écoulement (27) du gaz de haut fourneau déchargé par la partie supérieure du haut fourneau (20) et alimenter le dispositif de combustion et d'injection de gaz (a).

**26.** installation de haut fourneau selon la revendication 24, **caractérisée en ce qu'**elle comprend un dispositif de renfort (25) pour placer sous pression chacun du gaz combustible et du gaz d'appoint de combustion fourni au dispositif de combustion et d'injection de gaz (a) ou placer sous pression le gaz pré-mélangé formé du gaz combustible et du gaz d'appoint de combustion.

**27.** installation de haut fourneau selon la revendication 24, **caractérisée en ce que** le dispositif de combustion et d'injection de gaz (a) comprend une buse à gaz (3) pour fournir chacun du gaz combustible et du gaz d'appoint de combustion ou une buse à gaz (3) pour fournir le gaz pré-mélangé formé du gaz combustible et du gaz d'appoint de combustion dans la chambre de combustion (1) à travers l'ouverture (2) ménagée dans la surface de paroi interne de la chambre de combustion (1), dans laquelle la buse à gaz (3) comprend une pluralité de tuyaux de buse (300a) aménagés en parallèle dans la direction axiale du dispositif de combustion et d'injection de gaz (a).

**28.** Installation de haut fourneau selon la revendication 24, **caractérisée en ce que** le dispositif de combustion et d'injection de gaz (a) comprend un dispositif pour fournir un gaz diluant dans la chambre de combustion (1), le gaz diluant dilue le gaz de combustion et ajuste la température du gaz et/ou la composition du gaz.

**29.** Installation de haut fourneau selon la revendication 24, **caractérisée en ce que** l'extrémité de la chambre de combustion (1) du dispositif de combustion et d'injection de gaz (a) est en communication avec l'intérieur du haut fourneau (20) à travers une conduite de gaz.

**30.** Installation de haut fourneau selon la revendication 29, caractérisée ce que la conduite de gaz est un tuyau collecteur (18), et le tuyau collecteur (18) est raccordé à une pluralité d'orifices d'injection de gaz (16) ménagés dans le corps du haut fourneau à travers des tuyaux de raccordement, et est en outre raccordé à l'extrémité de la chambre de combustion (1) du dispositif de combustion et d'injection de gaz (a).

[FIG. 1]

BLAST FURNACE GAS

TO OUTSIDE
OF SYSTEM

SHAFT

20

A

a

a

27

22

23

24

25a  25b

26a    28

26b

A

COMBUSTION-SUPPORTING GAS

BLOW AND AUXILIARY
REDUCTION AGENT

BLOW AND AUXILIARY
REDUCTION AGENT

21

21

EP 2 426 223 B1

[FIG. 2]

COMBUSTION-
SUPPORTING GAS III

A

3b

a

16

INSIDE OF FURNACE

1    100

3a

20

FUEL GAS

III

[FIG. 3]

a

3b

2b

1

2a

3a

100

[FIG. 4]

INSIDE OF FURNACE

DILUENT GAS

FUEL GAS

COMBUSTION-SUPPORTING GAS

[FIG. 5]

FUEL GAS

300a

3a

1

200b

3b

200a

300b

COMBUSTION-SUPPORTING GAS

[FIG. 6]

[FIG. 7]

[FIG. 8]

EP 2 426 223 B1

RADIATION PIPE

EXHAUST PRESSURE VALVE

AIR

300mm

200mm

1000mm

500mm

WATER SUPPLY (25A)

3b

(25A)

COMBUSTION CHAMBER (50A)

WATER COOLING CHAMBER (200A)

P

T

T

3a  1

(100A)

SIGHT GLASS φ25mm

150mm

DRAIN (25A)

1300mm

LOW-CALORIFIC VALUE GAS

[FIG. 9]

[FIG. 10]

[FIG. 11]

[FIG. 12a]

[FIG. 12b]

[FIG. 12c]

EP 2 426 223 B1

[FIG. 13]

66

[FIG. 14]

[FIG. 15]

[FIG. 16]

[FIG. 17]

FUEL GAS

HYDROGEN

8  5  9  11

4

300a

3a

1

200a

200a

3b

300b

7

COMBUSTION-SUPPORTING GAS

[FIG. 18]

[FIG. 19]

[FIG. 20]

BLAST FURNACE GAS

27  22  23  24

TO OUTSIDE
OF SYSTEM

SHAFT

20

A

a

25a  25b  26A  28

26B

COMBUSTION-SUPPORTING GAS

BLOW AND AUXILIARY
REDUCTION AGENT

BLOW AND AUXILIARY
REDUCTION AGENT

21  21

EP 2 426 223 B1

[FIG. 21]

[FIG. 22]

[FIG. 23]

[FIG. 24]

[FIG. 25]

[FIG. 26]

[FIG. 27]

BLAST FURNACE GAS

HYDROGEN

COMBUSTION-SUPPORTING GAS

[FIG. 28]

[FIG. 29]

[FIG. 30]

BLAST FURNACE GAS

TO OUTSIDE OF SYSTEM

COMBUSTION-SUPPORTING GAS

SHAFT

BLOW AND AUXILIARY REDUCTION AGENT

BLOW AND AUXILIARY REDUCTION AGENT

EP 2 426 223 B1

78

[FIG. 31]

[FIG. 32]

## REFERENCES CITED IN THE DESCRIPTION

### Patent documents cited in the description

- JP 2008214735 A
- JP 62027509 A
- JP 2007271188 A
- US 3764299 A
- US 5234490 A
- GB 1216779 A
- JP 62120413 B
- JP 11281015 A

### Non-patent literature cited in the description

- **OHNO et al.** Tetsu-to-Hagane. The Iron and Steel Institute of Japan, 1989, vol. 75, 1278